(19) 

**Europäisches Patentamt**

**European Patent Office**

**Office européen des brevets**

(11) **EP 4 692 686 A1**

(12) **EUROPEAN PATENT APPLICATION**
published in accordance with Art. 153(4) EPC

(43) Date of publication:
**11.02.2026 Bulletin 2026/07**

(21) Application number: **24780552.6**

(22) Date of filing: **27.03.2024**

(51) International Patent Classification (IPC):
**F25B 45/00** *(2006.01)* **C09K 5/04** *(2006.01)*
**F25B 1/00** *(2006.01)*

(52) Cooperative Patent Classification (CPC):
**C09K 5/04; F25B 1/00; F25B 13/00; F25B 45/00**

(86) International application number:
**PCT/JP2024/012479**

(87) International publication number:
**WO 2024/204451 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023 JP 2023051242**

(71) Applicant: **DAIKIN INDUSTRIES, LTD.**
**Osaka-Shi, Osaka 530-0001 (JP)**

(72) Inventors:
• **INOUE, Tomohito**
**Osaka-Shi, Osaka 530-0001 (JP)**
• **GOTO, Tomoyuki**
**Osaka-Shi, Osaka 530-0001 (JP)**
• **YAMADA, Yasufu**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **METHOD FOR FILLING REFRIGERANT MIXTURE CONTAINING HFO-1132(E) AND HFO-1234YF**

(57) An object of the present invention is to provide a filling method for a refrigerant mixture comprising HFO-1132(E) and HFO-1234yf, the method enabling control of composition changes of a non-azeotropic refrigerant mixture comprising HFO-1132(E) and HFO-1234yf during refrigerant transfer to keep the composition changes within an acceptable range for refrigerant performance.

**EP 4 692 686 A1**

**Description**

Technical Field

The present disclosure relates to a filling method for a refrigerant mixture comprising HFO-1132(E) and HFO-1234yf.

Background Art

Patent Literature (PTL) 1 discloses a heat transfer composition comprising (a) a first component containing HFC-32 and (b) a second component selected from $C_2$-$C_5$ multi-fluorinated olefins and (c) optionally further comprising at least one third component selected from $C_2$-$C_3$ fluorinated alkanes, $CF_3I$, and combinations thereof. PTL 2 discloses a composition comprising HFO-1234yf, HFC-134a, and HFC-32.

The present applicant has developed a refrigerant composition comprising HFC-32, HFC-125, and HFO-1234yf (PTL 3). The applicant has developed a filling method for a non-azeotropic refrigerant mixture comprising HFC-32, HFC-125, and HFC-134a (PTL 4 and PTL 5). The applicant has developed a filling method for a refrigerant mixture comprising HFC-32 and HFO-1234ze(E) (PTL 6). The applicant has developed a filling method for a refrigerant mixture comprising HFC-32 and HFO-1234yf (PTL 7).

Citation List

Patent Literature

PTL 1: JP2010-047754A

PTL 2: JP2011-522947A

PTL 3: JP2011-525204A

PTL 4: JPH10-197108A

PTL 5: Japanese translation of WO1996/33377

PTL 6: JP2015-168696A

PTL 7: Japanese translation of WO2014/038604

Summary of Invention

Technical Problem

An object of the present disclosure is to provide a refrigerant mixture filling method, the method enabling control of composition changes of a non-azeotropic refrigerant mixture comprising trans-1,2-difluoroethylene (HFO-1132(E)) and 2,3,3,3-tetrafluoropropene (HFO-1234yf) during refrigerant transfer to keep the composition changes within an acceptable range for refrigerant performance.

Solution to Problem

The present inventors conducted extensive research on liquefied gas filling methods in order to solve the problem of composition changes that occur when a non-azeotropic mixture comprising two liquefied gases with different boiling points, which have been stored in a hermetically sealed container, is transferred from the liquid side to another container.

Specifically, the present invention provides the following filling method for a non-azeotropic refrigerant mixture comprising trans-1,2-difluoroethylene (HFO-1132(E)) and 2,3,3,3-tetrafluoropropene (HFO-1234yf).

The refrigerant mixture filling method according to the present disclosure has a feature in that, when a refrigerant mixture comprising HFO-1132(E) and HFO-1234yf, i.e., non-azeotropic refrigerants, wherein HFO-1132(E) is present in the liquid phase of the refrigerant mixture in an amount of 10 wt.% to 92 wt.%, is transferred from a source container to a target container or equipment, the proportion, i.e., the mixture ratio of the HFO-1132(E) in the liquid phase of the refrigerant mixture in the source container before the transfer, is adjusted to a specific range.

Described is the mixture ratio of a refrigerant mixture in a source container before transfer of the refrigerant mixture from the source container to a target container or equipment when the source container is filled with the refrigerant mixture in a maximum filling amount (100 wt.% of the filling amount) of the refrigerant mixture.

The term "100 wt.% of the filling amount" as used herein refers to a maximum filling amount with which a container can be filled, as defined in international law regarding transportation or in the High Pressure Gas Safety Act of Japan.

According to the High Pressure Gas Safety Act of Japan, the maximum filling amount is calculated as below:

- $G = V/C$

- G: Mass (kg) of fluorocarbon
- V: Capacity (L) of the container
- C: Constant according to the type of fluorocarbon

Fill constant C for gas in Japan is defined as a value calculated by dividing 1.05 by the specific gravity of the gas at 48°C.

Fill constant C in gas export is stipulated by international law. Fill constant C in gas export in which gas passes through tropical regions is defined as a value calculated by dividing 1.05 by the specific gravity of the gas at 65°C.

According to international law, fill constant C in gas export in which gas is transported only within regions other than the tropics is defined as a value calculated by dividing 1.05 by the specific gravity of the gas at 45°C.

When a refrigerant mixture comprising HFO-1132(E) and HFO-1234yf is transferred from a source container to a target container or equipment, initially filling the source container with a smaller amount of the refrigerant mixture results in a smaller change in proportion of HFO-1132(E) in the liquid phase of the refrigerant mixture in the source container during the transfer.

The maximum filling amount of gas with which a container is allowed to be filled based on fill constant C for gas is in the following order:

the filling amount calculated by using a value obtained by dividing 1.05 by the specific gravity of the gas at 45°C > the filling amount calculated by using a value obtained by dividing 1.05 by the specific gravity of the gas at 48°C > the filling amount calculated by using a value obtained by dividing 1.05 by the specific gravity of the gas at 65°C.

The present disclosure is [1] a refrigerant mixture filling method in which a value obtained by dividing 1.05 by the specific gravity of the gas (a refrigerant mixture comprising HFO-1132(E) and HFO-1234yf) at 65°C is used as the fill constant, and the calculated value is defined as 100 wt.% of the filling amount.

The present disclosure is [2] a refrigerant mixture filling method in which a value obtained by dividing 1.05 by the specific gravity of the gas (a refrigerant mixture comprising HFO-1132(E) and HFO-1234yf) at 45°C is used as the fill constant, and the calculated value is defined as 100 wt.% of the filling amount.

The present disclosure provides the following embodiments.

Filling method with different set tolerances

[1] Refrigerant mixture filling method in which a value calculated by using a value obtained by dividing 1.05 by the specific gravity of the gas (refrigerant mixture comprising HFO-1132(E) and HFO-1234yf) at 65°C as a gas fill constant is defined as 100 wt.% of the filling amount

Refrigerant mixture filling method at 65°C (range from the upper limit (wt.%) to (the upper limit - 4.0) (wt.%))

Item 1.

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 92 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_1)$ wt.% (minimum value) or higher and $(x)$ wt.% (target upper-limit composition) or lower

in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 4.0 wt.% (target lower-limit composition) during the transfer, wherein

x represents the target upper-limit composition of the HFO-1132(E) (wt.%, $12 \leq x \leq 92$, excluding the range where $y_1 > 0$);

$y_1$ represents a lower limit of a gap between the initial composition of the HFO-1132(E) and the target upper-limit composition of the HFO-1132(E), $y_1$ being a value (wt.%) represented by the following Equation (1):

$$1000y_1 = L_1x^3 + M_1x^2 + N_1x + P_1 \quad (1)$$

wherein

$L_1$ = 0.00000021a$^2$ + 0.00005357a + 0.00301429
$M_1$ = 0.00001630a$^2$ - 0.02301211a - 0.78617143
$N_1$ = -0.00266429a$^2$ + 1.70890000a + 55.79285714
$P_1$ = -0.02635714a$^2$ - 2.82442857a - 4328.57142857 wherein
a represents an initial filling amount (wt.%) in the source container.

Refrigerant mixture filling method at 65°C (range from the upper limit (wt.%) to (the upper limit - 3.0) (wt.%))

Item 2.

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 91.5 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_2)$ wt.% (minimum value) or higher and $(x)$ wt.% (target upper-limit composition) or lower
in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 3.0 wt.% (target lower-limit composition) during the transfer,

wherein

x represents the target upper-limit composition of the HFO-1132(E) (wt.%, $11.5 \leq x \leq 34.4$ or $54.1 \leq x \leq 91.5$, excluding the range where $y_2 > 0$);

$y_2$ represents a lower limit of a gap between the initial composition of the HFO-1132(E) and the target upper-limit composition of the HFO-1132(E), $y_2$ being a value (wt.%) represented by the following Equation (2):

$$1000y_2 = L_2x^3 + M_2x^2 + N_2x + P_2 \quad (2)$$

wherein

$L_2$ = 0.00000018a$^2$ + 0.00004664a + 0.00442857
$M_2$ = 0.00003791a$^2$ - 0.02400804a - 0.90728571
$N_2$ = -0.00544464a$^2$ + 1.98335357a + 50.41428571
$P_2$ = 0.04232143a$^2$ - 10.78821429a - 3008.18571429 wherein
a represents an initial filling amount (wt.%) in the source container.

Refrigerant mixture filling method at 65°C (range from the upper limit (wt.%) to (the upper limit - 2.0) (wt.%))

Item 3.

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 91 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_3)$ wt.% (minimum value) or higher and $(x)$ wt.% (target upper-limit composition) or lower
in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 2.0 wt.% (target lower-limit composition) during the transfer,

wherein

$x$ represents the target upper-limit composition of the HFO-1132(E) (wt.%, $11 \leq x \leq 17.6$ or $74.2 \leq x \leq 91$, excluding the range where $y_3 > 0$);
$y_3$ represents a lower limit of a gap between the initial composition of the HFO-1132(E) and the target upper-limit composition of the HFO-1132(E), $y_3$ being a value (wt.%) represented by the following Equation (3):

$$1000y_3 = L_3x^3 + M_3x^2 + N_3x + P_3 \quad (3)$$

wherein

$L_3 = -0.00000746a^2 + 0.00109679a - 0.03042857$
$M_3 = 0.00107004a^2 - 0.16541279a + 3.77611429$
$N_3 = -0.04430179a^2 + 7.22883929a - 123.14571429$
$P_3 = 0.40416071a^2 - 56.68153571a - 507.98571429$ wherein
a represents an initial filling amount (wt.%) in the source container.

Filling method with different set tolerances

[2] Refrigerant mixture filling method in which a value calculated by using a value obtained by dividing 1.05 by the specific gravity of the gas (refrigerant mixture comprising HFO-1132(E) and HFO-1234yf) at 45°C as a fill constant is defined as 100 wt.% of the filling amount

Refrigerant mixture filling method at 45°C (within a range from the upper limit (wt.%) to (the upper limit - 4.0) (wt.%))

Item 4.

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 92 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_4)$ wt.% (minimum value) or higher and $(x)$ wt.% (target upper-limit composition) or lower

in order to keep the proportion of the HFO-1132(E) in the liquid phase of the refrigerant mixture in the source container within a range from the target upper-limit composition (x) wt.% of the HFO-1132(E) to the target upper-limit composition (x) wt.% - 4.0 wt.% (target lower-limit composition) during the transfer,

wherein

x represents the target upper-limit composition of the HFO-1132(E) (wt.%, $12 \leq x \leq 92$, excluding the range where $y_4 > 0$);

$y_4$ represents a lower limit of a gap between the initial composition of the HFO-1132(E) and the target upper-limit composition of the HFO-1132(E), $y_4$ being a value (wt.%) represented by the following Equation (4):

$$1000y_4 = L_4x^3 + M_4x^2 + N_4x + P_4 \quad (4)$$

wherein

$L_4 = 0.00000191a^2 - 0.00019975a + 0.01294286$
$M_4 = -0.00022132a^2 + 0.01221707a - 2.25342857$
$N_4 = 0.00507143a^2 + 0.56545714a + 111.01142857$
$P_4 = -0.06323214a^2 + 3.21625000a - 4672.82857143$ wherein
a represents an initial filling amount (wt.%) in the source container.

Refrigerant mixture filling method at 45°C (range from the upper limit (wt.%) to (the upper limit - 3.0) (wt.%))

Item 5.

A refrigerant mixture filling method,

the refrigerant mixture comprising trans-1,2-difluoroethylene (HFO-1132(E)) and 2,3,3,3-tetrafluoropropene (HFO-1234yf)
wherein the HFO-1132(E) is present in a liquid phase of the refrigerant mixture in an amount of 10 to 91.5 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_5)$ wt.% (minimum value) or higher and (x) wt.% (target upper-limit composition) or lower
in order to keep the proportion of the HFO-1132(E) in the liquid phase of the refrigerant mixture in the source container within a range from the target upper-limit composition (x) wt.% of the HFO-1132(E) to the target upper-limit composition (x) wt.% - 3.0 wt.% (target lower-limit composition) during the transfer,

wherein

x represents the target upper-limit composition of the HFO-1132(E) (wt.%, $11.5 \leq x \leq 29.9$ or $60.2 \leq x \leq 91.5$, excluding the range where $y_5 > 0$);
$y_5$ represents a lower limit of a gap between the initial composition of the HFO-1132(E) and the target upper-limit composition of the HFO-1132(E), $y_5$ being a value (wt.%) represented by the following Equation (5):

$$1000y_5 = L_5x^3 + M_5x^2 + N_5x + P_5 \quad (5)$$

wherein

$L_5 = 0.00000023a^2 + 0.00002804a + 0.00555714$
$M_5 = 0.00005254a^2 - 0.02547864a - 0.98317143$
$N_5 = -0.00620893a^2 + 2.10902500a + 54.78428571$
$P_5 = 0.03244643a^2 - 9.08525000a - 3109.01428571$ wherein

a represents an initial filling amount (wt.%) in the source container.

Refrigerant mixture filling method at 45°C (range from the upper limit (wt.%) to (the upper limit - 2.0) (wt.%))

Item 6.

A refrigerant mixture filling method,

the refrigerant mixture comprising trans-1,2-difluoroethylene (HFO-1132(E)) and 2,3,3,3-tetrafluoropropene (HFO-1234yf)
wherein the HFO-1132(E) is present in a liquid phase of the refrigerant mixture in an amount of 10 to 91 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_6)$ wt.% (minimum value) or higher and $(x)$ wt.% (target upper-limit composition) or lower
in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 2.0 wt.% (target lower-limit composition) during the transfer,

wherein

x represents the target upper-limit composition of the HFO-1132(E) (wt.%, $11 \leq x \leq 16.1$ or $76.6 \leq x \leq 91$, excluding the range where $y_6 > 0$);
$y_6$ represents a lower limit of a gap between the initial composition of the HFO-1132(E) and the target upper-limit composition of the HFO-1132(E), $y_6$ being a value (wt.%) represented by the following Equation (6):

$$1000y_6 = L_6x^3 + M_6x^2 + N_6x + P_6 \quad (6)$$

wherein

$L_6$ = -0.00000229a$^2$ + 0.00040314a - 0.00802857
$M_6$ = 0.00040107a$^2$ - 0.07670157a + 0.88952857
$N_6$ = -0.02104464a$^2$ + 4.23275357a - 25.47571429
$P_6$ = 0.21416071a$^2$ - 33.68810714a - 1107.64285714 wherein
a represents an initial filling amount (wt.%) in the source container.

Advantageous Effects of Invention

When a non-azeotropic refrigerant mixture comprising HFO-1132(E) and HFO-1234yf is transferred between containers according to the filling method of the present disclosure, composition changes due to the transfer of the refrigerant mixture can fall within an acceptable range.
Embodiments included in the present disclosure are described in detail below.

<u>Definition of Terms</u>

In the present specification, the term "refrigerant" includes at least compounds assigned refrigerant numbers (ASHRAE numbers) beginning with R, which represent types of refrigerants defined by ISO 817 (International Organization for Standardization), and further includes those with equivalent characteristics as refrigerants even if they have not yet been assigned refrigerant numbers.
Refrigerants can be roughly classified into fluorocarbon compounds and non-fluorocarbon compounds in terms of compound structure. Examples of fluorocarbon compounds include hydrochlorofluorocarbons (HCFCs) and hydrofluorocarbons (HFCs). Non-fluorocarbon compounds include, for example, propane (R290), propylene (R1270), butane (R600), and isobutane (R600a).
In the present specification, the term "composition comprising a refrigerant" at least includes

(1) a refrigerant itself (including a mixture of refrigerants, i.e., refrigerant mixture),

(2) a composition that further comprises one or more other components and that can be mixed with at least a refrigeration oil to obtain a working fluid for a refrigerating machine, and

(3) a working fluid for a refrigerating machine (refrigeration working fluid) containing a refrigeration oil.

In the present specification, the composition (2) is referred to as a "refrigerant composition" so as to distinguish it from (1) a refrigerant itself (including a mixture of refrigerants).

In the present specification, the working fluid for a refrigerating machine (3) is referred to as a "refrigeration oilcontaining working fluid" (working fluid containing refrigeration oil) so as to distinguish it from the "refrigerant composition (2)."

In the present specification, the terms "comprise" and "contain" encompass the concepts of containing, including, consisting essentially of, and consisting of.

In the present specification, when a numerical range is stated stepwise, the upper-limit value or the lower-limit value of one numerical range can be freely combined with the upper-limit value or the lower-limit value of another numerical range.

In the present specification, the upper-limit values or the lower-limit values of the numerical ranges stated in the present specification may be replaced with a value shown in the Examples or a value that can be unambiguously derived from the Examples.

In the present specification, terms are abbreviated as follows.

Trans-1,2-difluoroethylene: HFO-1132(E) ((E)-1,2-difluoroethylene)

2,3,3,3-Tetrafluoropropene: HFO-1234yf

In recent years, from the viewpoint of preventing global warming, review of refrigerants has been progressing in the fields of refrigeration and air conditioning. In the field of car air conditioners, refrigerants with a global warming potential (GWP) of 150 or more are regulated by the EU F-Gas Regulation.

Currently used refrigerants, such as R-410A (GWP 2088), R-404A (GWP 3922), R-407C (GWP 1770), and 1,1,1,2-tetrafluoroethane (HFC-134a) (GWP 1430), have high GWPs. In developed countries, stationary refrigeration and air conditioning equipment is regulated not only from the perspective of $CO_2$ reduction, but also from the perspective of HFC (hydrofluorocarbon, fluorinated hydrocarbon) reduction, and alternative refrigerants are being developed.

A refrigerant is selected from various refrigerants, considering the application, operating conditions, and other factors and from a multifaceted perspective, including environmental impact, safety, performance, and economic efficiency. Currently, various types of refrigerants are being proposed, together with fluorocarbons and natural refrigerants.

Currently, there is no refrigerant that satisfies all requirements such as flammability, efficiency, and GWP value. A refrigerant is selected according to the application, operating conditions, and other factors, to choose the most suitable option for each specific case.

Among refrigerants, 2,3,3,3-tetrafluoropropene (HFO-1234yf) has a GWP of less than 1 (GWP AR5), and its applications are being researched in the fields of automotive air conditioning and large-scale refrigeration and air conditioning. Trans-1,2-difluoroethylene (HFO-1132(E)) has a GWP of less than 1 (GWP AR5), and its applications are being researched in the field of large-scale refrigeration and air conditioning.

In recent years, non-azeotropic refrigerant mixtures comprising various refrigerants have been proposed to improve refrigerant capacity and to make refrigerants non-flammable. Many of the mixtures of HFC and HFO (hydrofluoroolefins), such as HFO-1234yf are non-azeotropic mixtures and therefore undergo composition changes during phase changes as in evaporation and condensation. This is because low-boiling-point components tend to evaporate easily, whereas high-boiling-point components tend to condense easily. This tendency is prominent in the case of evaporation, i.e., a phase change from liquid to vapor, and is particularly remarkable when components of the mixture have a large difference in boiling point. Accordingly, when such a non-azeotropic mixture is transferred from a source container to a target container, the mixture is usually extracted from the liquid phase so as not to induce phase changes.

A mixture of components that have a large difference in boiling points undergoes a composition change of a few percent (wt.%) even when the mixture is extracted from the liquid phase. This is because the reduced pressure and the increased gas phase space due to the extraction of the mixture lead to evaporation of low-boiling-point components in the liquid phase. This composition change of a few percent not only causes a significant change in refrigerant performance to thereby reduce capability and efficiency, but also has a major impact on the safety of the refrigerant, such as on flammability.

A next-generation refrigerant, a refrigerant mixture of HFO-1132(E) and HFO-1234yf, is a non-azeotropic refrigerant mixture; therefore, there is a concern about composition change caused due to transfer and filling.

HFO-1132(E) (boiling point: -52.5°C), which is used as a non-azeotropic refrigerant mixture with HFO-1234yf (boiling point: -29.4°C), has very high refrigeration capacity, but the difference in boiling point between HFO-1132(E) and HFO-1234yf is as large as about 20°C. Therefore, the composition change that occurs when the refrigerant mixture is transferred from a source container, such as a cylinder or a tank truck, to a target container, such as a refrigeration and air conditioning system or a cylinder, can reach a level that cannot be ignored in terms of performance.

In addition to the performance aspects of the refrigerant, it is important to keep composition changes within the set tolerance of the refrigerant mixture in terms of quality assurance of the refrigerant mixture.

If a refrigerant mixture containing HFO-1132(E) and HFO-1234yf is transferred at 40°C without taking any measures, a composition gap of up to 3 to 4 wt.% from the target composition occurs in the composition of HFO-1132(E) when the entire liquid in the source container has been extracted. In this case, the composition change rate is about ±4 wt.% from the target composition, and refrigeration capacity and refrigerant capacity such as energy consumption efficiency (COP: Coefficient Of Performance) expected from the target composition cannot be ensured. Therefore, it is important to control the composition change rate within a range as narrow as possible.

Conventionally, the composition change of a refrigerant mixture varies greatly depending on, for example, the types of non-azeotropic refrigerants used and the composition ratio. It is difficult to predict the range of composition changes of a refrigerant mixture in advance without any actual measurement.

The present disclosure allows for the prediction in advance of the range of composition changes of a refrigerant mixture.

Filling method with different set tolerances

[1] Refrigerant mixture filling method in which a value calculated by using a value obtained by dividing 1.05 by the specific gravity of the gas (refrigerant mixture comprising HFO-1132(E) and HFO-1234yf) at 65°C as a fill constant is defined as 100 wt.% of the filling amount

The following is one example of a transfer method in which the handling temperature during transfer is 40°C. Under the High Pressure Gas Safety Act of Japan, handling containers at temperatures exceeding 40°C is prohibited; therefore, the handling temperature during transfer in Japan is 0°C to 40°C.

The higher the temperature during transfer (handling), the greater the composition change due to transfer during the transfer when transferring a refrigerant mixture in a liquid state from a source container to a target container and/or equipment. Therefore, the transfer method is also applicable at a handling temperature of 0°C to 40°C by using the conditions for transfer at a handling temperature of 40°C.

(1) Filling method in which the difference between the target upper-limit composition and the target lower-limit composition is 4.0 wt.%

Refrigerant mixture filling method at 65°C (range from the upper limit (wt.%) to (the upper limit - 4.0) (wt.%))

The following describes the mixture ratio of the refrigerant mixture in a source container before transfer of the refrigerant mixture from the source container to a target container and/or equipment, the mixture ratio being adjusted in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

The "target upper-limit composition," i.e., "(x) wt.%," is a maximum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

x (wt.%) is a numerical value within the range of $12 \leq x \leq 92$.

The "target lower-limit composition," i.e., "(x) - 4.0 wt.%," is a minimum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

(1-1) Filling method in which the difference between the target upper-limit composition and the target lower-limit composition is 4.0 wt.%

The refrigerant mixture filling method according to the present disclosure in which the filling amount of the refrigerant mixture in a target container and/or equipment is appropriately adjusted has a feature in that

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container to the target container and/or equipment, the method comprises adjusting the proportion of HFO-1132(E) in the liquid phase of the refrigerant mixture in the source container before the transfer (initial composition) to $(x + y_1)$ wt.% (minimum value) or higher and (x) wt.% (target upper-limit composition) or lower

in order to keep the proportion of HFO-1132(E) in the liquid phase of the refrigerant mixture in the source container within a range from (x) wt.% of HFO-1132(E) (target upper-limit composition) to (x) wt.% - 4.0 wt.% (target lower-limit composition) during the transfer.

a: an initial filling amount (wt.%) in the source container;

x: a target upper-limit composition of HFO-1132(E) (wt.%, $12 \leq x \leq 92$, excluding the range where $y_1 > 0$);

$y_1$: a lower limit of a gap between the initial composition of HFO-1132(E)) and the target upper-limit composition of HFO-1132(E), $y_1$ being a value (wt.%) represented by the following Equation (1):

$$1000y_1 = L_1x^3 + M_1x^2 + N_1x + P_1 \quad (1)$$

$L_1 = 0.00000021a^2 + 0.00005357a + 0.00301429$
$M_1 = 0.00001630a^2 - 0.02301211a - 0.78617143$
$N_1 = -0.00266429a^2 + 1.70890000a + 55.79285714$
$P_1 = -0.02635714a^2 - 2.82442857a - 4328.57142857$

According to the refrigerant mixture filling method of the present disclosure, even when the source container is filled with the refrigerant mixture in an amount equal to 100 wt.% of the maximum filling amount, composition changes in a target container and/or equipment can be kept within a range from the target upper-limit composition (x) wt.% - 4.0 wt.% (target lower-limit composition) to the target upper-limit composition (x) wt.% until completion of transfer, by adjusting the proportion of HFO-1132(E) in the liquid phase of the mixture in a source container before transfer to a specific range.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

The value a (wt.%) is usually set to $60 \leq a \leq 100$.

When the refrigerant mixture in a liquid state is transferred from the source container to a target container and/or equipment, a smaller initial filling amount in a source container results in a smaller composition change due to transfer during the transfer. Therefore, an equation that satisfies a filling method in which the initial filling amount is a wt.% is also satisfied in a filling method in which the initial filling amount is a wt.% or less.

An equation that satisfies a filling method in which the initial filling amount is 100 wt.% is also satisfied in a filling method in which the initial filling amount is 100 to 0 wt.%. An equation that satisfies a filling method in which the initial filling amount is 90 wt.% is also satisfied in a filling method in which the initial filling amount is 90 to 0 wt.%. An equation that satisfies a filling method in which the initial filling amount is 80 wt.% is also satisfied in a filling method in which the initial filling amount is 80 to 0 wt.%. An equation that satisfies a filling method in which the initial filling amount is 70 wt.% is also satisfied in a filling method in which the initial filling amount is 70 to 0 wt.%. An equation that satisfies a filling method in which the initial filling amount is 60 wt.% is also satisfied in a filling method in which the initial filling amount is 60 to 0 wt.%. An equation that satisfies a filling method in which the initial filling amount is 50 wt.% is also satisfied in a filling method in which the initial filling amount is 50 to 0 wt.%.

Proportion of HFO-1132(E) in the liquid phase of the refrigerant mixture in a source container

The present disclosure has a feature in that the proportion of HFO-1132(E) in the liquid phase of the refrigerant mixture in a source container before transfer (initial composition) is adjusted to $(x + y_1)$ wt.% (minimum value) or higher and x wt.% (target upper-limit composition) or lower

in order to keep the proportion of HFO-1132(E) within a range from the target upper-limit composition (x) wt.% of HFO-1132(E) - 4.0 wt.% (target lower-limit composition) to the target upper-limit composition (x) wt.%.

x is a target upper-limit composition (wt.%) of HFO-1132(E) and is in the range of $12 \leq x \leq 92$, with the proviso that the range where $y_1 > 0$ is excluded.

$y_1$ is a lower limit of a gap between the initial composition (wt.%) of HFO-1132(E) and the target upper-limit composition (wt.%) of HFO-1132(E).

$(x + y_1)$ wt.% is a minimum value of the proportion (initial composition) of HFO-1132(E) in the liquid phase of the refrigerant mixture in a source container.

The difference between the target upper-limit composition and the target lower-limit composition is referred to as a "tolerance" ("composition tolerance"). The tolerance is determined when the composition of a refrigerant mixture is registered in the ASHRAE Standard 2013 (Designation and Safety Classification of Refrigerants) and the like.

The following describes a case in which the mixture ratio (wt.%) of HFO-1132(E) and HFO-1234yf in a refrigerant mixture comprising HFO-1132(E) and HFO-1234yf is, for example, 50:50.

In a refrigerant mixture comprising HFO-1132(E) and HFO-1234yf, for example, when the tolerance for each of HFO-1132(E) and HFO-1234yf is set at ±2.0, the target upper-limit composition of HFO-1132(E) is 52.0 wt.%, and the target lower-limit composition of HFO-1132(E) is 48.0 wt.%. Thus, in the refrigerant mixture, the difference between the target upper-limit composition and the target lower-limit composition is 4.0 wt.%,

Filling method with different initial filling amounts of the refrigerant mixture in a source container

(1-2) Case in which the initial filling amount in a source container is 100 wt.% of the maximum filling amount (65°C/4.0 wt.%/100 wt.%)

The following describes a case in which the initial filling amount of the refrigerant mixture in a source container is 100 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment, the proportion of HFO-1132(E) in the liquid phase of the refrigerant mixture in the source container before the transfer (initial composition) is preferably adjusted to $(x + y_{1-1})$ wt.% (minimum value) or higher and $(x)$ wt.% (target upper-limit composition) or lower in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $10 \leq x \leq 90$).

$y_{1-1}$ is a lower limit of a gap between the initial composition of the HFO-1132(E) and the target upper-limit composition of HFO-1132(E) and is represented by the following Equation (1-1).

$$1000y_{1-1} = 0.0104x^3 - 2.9042x^2 + 198.94x - 4854.8 \quad (1-1)$$

In the present disclosure,

when a refrigerant mixture comprising HFO-1132(E) and HFO-1234yf is transferred from a source container to a target container and/or equipment, the composition change in the target container and/or equipment can be kept within a range from the target upper-limit composition (x) - 4.0 wt.% (target lower-limit composition) to the target upper-limit composition (x) until completion of transfer, by adjusting the proportion of HFO-1132(E) in the liquid phase of the mixture in the source container before transfer to about x - 3.1 wt.% to x wt.% according to Equation (1-1) above.

In the refrigerant mixture filling method in which the composition change of the refrigerant mixture comprising HFO-1132(E) and HFO-1234yf in a target container and/or equipment is kept within a range from the target upper-limit composition (x) wt.% - 4.0 wt.% (target lower-limit composition) to the target upper-limit composition (x) wt.% until completion of transfer, the upper limit of the proportion of HFO-1132(E) in the liquid phase of the refrigerant mixture comprising HFO-1132(E) and HFO-1234yf is the target upper-limit composition of HFO-1132(E).

When HFO-1132(E) is contained in an amount of 90 wt.%, the composition change is small; therefore, even when the initial composition of HFO-1132(E) is about -3.1 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-3) Case in which the initial filling amount in a source container is 90 wt.% of the maximum filling amount (65°C/4.0 wt.%/90 wt.%)

The following describes a case in which the initial filling amount of the refrigerant mixture in a source container is 90 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment, the proportion of HFO-1132(E) in the liquid phase of the refrigerant mixture in the source container before the transfer (initial composition) is preferably adjusted to $(x + y_{1-2})$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) of HFO-1132(E) to the target upper-limit composition (x) - 4.0 wt.% (target lower-limit composition) during the transfer.

x is a target upper-limit composition of HFO-1132(E) (with the proviso that $12 \leq x \leq 92$).

$y_{1-2}$ is a lower limit of a gap between the initial composition of HFO-1132(E) and the target upper-limit composition of HFO-1132(E) and is represented by the following Equation (1-2).

$$1000y_{1-2} = 0.0097x^3 - 2.748x^2 + 189.39x - 4829.8 \quad (1-2)$$

In the present disclosure,

when a refrigerant mixture comprising HFO-1132(E) and HFO-1234yf is transferred from a source container to a target container and/or equipment, the composition change in the target container and/or equipment can be kept within a range from the target upper-limit composition (x) - 4.0 wt.% (target lower-limit composition) to the target upper-limit composition (x) until completion of transfer, by adjusting the proportion of HFO-1132(E) in the liquid phase of the mixture in the source container before transfer to about x - 3.1 wt.% to x wt.% according to Equation (1-2) above.

When HFO-1132(E) is contained in an amount of 90 wt.%, the composition change is small; therefore, even when the initial composition of HFO-1132(E) is about -3.1 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-4) Case in which the initial filling amount in a source container is 80 wt.% of the maximum filling amount (65°C/4.0 wt.%/80 wt.%)

The following describes a case in which the initial filling amount of the refrigerant mixture in a source container is 80 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container before the transfer (initial composition) is preferably adjusted to $(x + y_{1-3})$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{1-3}$ is a lower limit of a gap between the initial composition of HFO-1132(E) and the target upper-limit composition of HFO-1132(E) and is represented by the following Equation (1-3) .

$$1000y_{1-3} = 0.0088x^3 - 2.5389x^2 + 175.79x - 4713.9 \quad (1-3)$$

In the present disclosure, according to Equation (1-3) above, when transferring a refrigerant mixture comprising HFO-1132(E) and HFO-1234yf from a source container to a target container and/or equipment,

the composition change in the target container and/or equipment can be kept within a range from the target upper-limit composition (x) - 4.0 wt.% (target lower-limit composition) to the target upper-limit composition (x) until completion of transfer,
by adjusting the proportion of HFO-1132(E) in the liquid phase of the mixture in the source container before transfer to about x - 3.2 wt.% to x wt.%.

When HFO-1132(E) is contained in an amount of 90 wt.%, the composition change is small; therefore, even when the initial composition of HFO-1132(E) is about -3.2 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-5) Case in which the initial filling amount in a source container is 70 wt.% of the maximum filling amount (65°C/4.0 wt.%/70 wt.%)

The following describes a case in which the initial filling amount of the refrigerant mixture in a source container is 70 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container before the transfer (initial composition) is preferably adjusted to $(x + y_{1-4})$ wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{1-4}$ is a lower limit of a gap between the initial composition of the HFO-1132(E) and the target upper-limit composition of HFO-1132(E) and is represented by the following Equation (1-4).

$$1000y_{1-4} = 0.0078x^3 - 2.3335x^2 + 164.09x - 4680 \quad (1-4)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 4.0 wt.% (target lower-limit composition) to the target upper-limit composition (x) until completion of transfer,

by adjusting the proportion of HFO-1132(E) in the liquid phase of the mixture in the source container before transfer to about (x) - 3.3 wt.% to (x) wt.% according to Equation (1-4) above.

When HFO-1132(E) is contained in an amount of 90 wt.%, the composition change is small; therefore, even when the initial composition of HFO-1132(E) is about -3.3 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-6) Case in which the initial filling amount in a source container is 60 wt.% of the maximum filling amount (65°C/4.0 wt.%/60 wt.%)

The following describes a case in which the initial filling amount of the refrigerant mixture in a source container is 60 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container before the transfer (initial composition) is preferably adjusted to $(x + y_{1-5})$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{1-5}$ is a lower limit of a gap between the initial composition of the HFO-1132(E) and the target upper-limit composition of HFO-1132(E) and is represented by the following Equation (1-5).

$$1000y_{1-5} = 0.0067x^3 - 2.0367x^2 + 144.26x - 4536.5 \quad (1-5)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 4.0 wt.% (target lower-limit composition) to the target upper-limit composition (x) until completion of transfer,

by adjusting the proportion of HFO-1132(E) in the liquid phase of the mixture in the source container before transfer to about x - 3.3 wt.% to x wt.% according to Equation (1-5) above.

When HFO-1132(E) is contained in an amount of 90 wt.%, the composition change is small; therefore, even when the initial composition of HFO-1132(E) is about -3.3 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-7) Case in which the initial filling amount in a source container is 50 wt.% of the maximum filling amount (65°C/4.0 wt.%/50 wt.%)

The following describes a case in which the initial filling amount of the refrigerant mixture in a source container in 50 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the method for loading a refrigerant mixture according to the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,
the proportion of HFO-1132(E) in the liquid phase of the refrigerant mixture in the source container before the transfer (initial composition) is preferably adjusted to $(x + y_{1-6})$ wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{1-6}$ is a lower limit of a gap between the initial composition of HFO-1132(E) and the target upper-limit composition of HFO-1132(E) and is represented by the following Equation (1-6) .

$$1000y_{1-6} = 0.0064x^3 - 1.9324x^2 + 136.71x - 4563.1 \quad (1-6)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 4.0 wt.% (target lower-limit composition) to the target upper-limit composition (x) until completion of transfer,
by adjusting the proportion of HFO-1132(E) in the liquid phase of the mixture in the source container before transfer to about x - 3.3 wt.% to x wt.% according to Equation (1-6) above.

When HFO-1132(E) is contained in an amount of 90 wt.%, the composition change is small; therefore, even when the initial composition of HFO-1132(E) is about -3.3 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

<u>(1-8) Filling method for a non-azeotropic refrigerant mixture comprising HFO-1132(E) and HFO-1234yf</u>

The following describes a non-azeotropic refrigerant mixture filling method for keeping the proportion of HFO-1132(E) within a range from the target upper-limit composition (x) wt.% of HFO-1132(E) - 4.0 wt.% (target lower-limit composition) to the target upper-limit composition (x) wt.%, the refrigerant mixture comprising HFO-1132(E) and HFO-1234yf.

Equation (1) can be derived from Equations (1-1) to (1-6). Based on the value of each coefficient in Equations (1-1) to (1-6), $L_1$, $M_1$, $N_1$, and $P_1$ of Equation (1) can be calculated from the target upper-limit composition (x) with respect to the initial filling amount (a wt.%).

The refrigerant mixture filling method of the present disclosure has a feature in that,

when a refrigerant mixture comprising HFO-1132(E) and HFO-1234yf in which HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container to a target container and/or equipment,
the proportion of HFO-1132(E) in the liquid phase of the refrigerant mixture in the source container before the transfer (initial composition) is adjusted to $(x + y_1)$ wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.
a: an initial filling amount (wt.%) in the source container;
x: a target upper-limit composition of HFO-1132(E) (wt.%, $12 \leq x \leq 92$, excluding the range where $y_1 > 0$);
$y_1$: a lower limit of a gap between the initial composition of HFO-1132(E) and the target upper-limit composition of

HFO-1132(E), $y_1$ being represented by the following Equation (1):

$$1000y_1 = L_1x^3 + M_1x^2 + N_1x + P_1 \quad (1)$$

$$L_1 = 0.00000021a^2 + 0.00005357a + 0.00301429$$

$$M_1 = 0.00001630a^2 - 0.02301211a - 0.78617143$$

$$N_1 = -0.00266429a^2 + 1.70890000a + 55.79285714$$

$$P_1 = -0.02635714a^2 - 2.82442857a - 4328.57142857$$

(2) Filling method in which the difference between the target upper-limit composition and the target lower-limit composition is 3.0 wt.%

Refrigerant mixture filling method at 65°C (range from the upper limit (wt.%) to (the upper limit - 3.0) (wt.%))

The following describes the mixture ratio of the refrigerant mixture in a source container before transfer of the refrigerant mixture from the source container to a target container and/or equipment to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

The "target upper-limit composition," i.e., "(x) wt.%," is a maximum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

x (wt.%) is a numerical value within the range of $11.5 \leq x \leq 91.5$.

The "target lower-limit composition," i.e., "(x) - 3.0 wt.%," is a minimum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

(2-1) Filling method in which the difference between the target upper-limit composition and the target lower-limit composition is 3.0 wt.%

The refrigerant mixture filling method of the present disclosure in which the filling amount of the refrigerant mixture in a target container and/or equipment is appropriately controlled has a feature in which

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container to a target container and/or equipment, adjusting the proportion of HFO-1132(E) in the liquid phase of the refrigerant mixture in the source container before the transfer (initial composition) to $(x + y_2)$ wt.% (minimum value) or higher and (x) wt.% (target upper-limit composition) or lower

in order to keep the proportion of HFO-1132(E) in the liquid phase of the refrigerant mixture in the source container within a range from (x) wt.% of HFO-1132(E) (target upper-lower composition) to (x) wt.% - 3.0 wt.% (target upper-limit composition) during the transfer.

a: an initial filling amount (wt.%) in the source container;
x: a target upper-limit composition of HFO-1132(E) (wt.%, $11.5 \leq x \leq 34.4$ or $54.1 \leq x \leq 91.5$, excluding the range where $y_2 > 0$);
$y_2$: a lower limit of a gap between the initial composition of HFO-1132(E)) and the target upper-limit composition of HFO-1132(E), which is a value (wt.%) represented by the following Equation (2):

$$1000y_2 = L_2x^3 + M_2x^2 + N_2x + P_2 \quad (2)$$

$L_2 = 0.00000018a^2 + 0.00004664a + 0.00442857$
$M_2 = 0.00003791a^2 - 0.02400804a - 0.90728571$
$N_2 = -0.00544464a^2 + 1.98335357a + 50.41428571$
$P_2 = 0.04232143a^2 - 10.78821429a - 3008.18571429$

When the refrigerant mixture is transferred between containers according to the filling method of the present disclosure, even when the source container is filled with the refrigerant mixture in an amount of 100 wt.% of the maximum filling amount, the proportion of HFO-1132(E) in the liquid phase of the mixture in a source container before transfer can be adjusted to a specific range and composition changes in a target container and/or equipment can be kept within a range from the target upper-limit composition (x) wt.% - 3.0 wt.% (target lower-limit composition) to the target upper-limit composition (x) wt.% until completion of transfer.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, causing a reduction in HFO-1132(E) concentration in the liquid phase. Therefore, a source container is preferably filled with HFO-1132(E) before transfer in an amount greater than the target composition.

The value a (wt.%) is usually set to $60 \le a \le 100$.

When the refrigerant mixture in a liquid state is transferred from the source container to a target container and/or equipment, a smaller initial filling amount in a source container results in a smaller composition change due to transfer during the transfer. Therefore, an equation that satisfies a filling method in which the initial filling amount is a wt.% is also satisfied in a filling method in which the initial filling amount is a wt.% or less.

An equation that satisfies a filling method in which the initial filling amount is 100 wt.% is also satisfied in a filling method in which the initial filling amount is 100 to 0 wt.%. An equation that satisfies a filling method in which the initial filling amount is 90 wt.% is also satisfied in a filling method in which the initial filling amount is 90 to 0 wt.%. An equation that satisfies a filling method in which the initial filling amount is 80 wt.% is also satisfied in a filling method in which the initial filling amount is 80 to 0 wt.%. An equation that satisfies a filling method in which the initial filling amount is 70 wt.% is also satisfied in a filling method in which the initial filling amount is 70 to 0 wt.%. An equation that satisfies a filling method in which the initial filling amount is 60 wt.% is also satisfied in a filling method in which the initial filling amount is 60 to 0 wt.%. An equation that satisfies a filling method in which the initial filling amount is 50 wt.% is also satisfied in a filling method in which the initial filling amount is 50 to 0 wt.%.

Proportion of HFO-1132(E) in the liquid phase of the refrigerant mixture in a source container

The present disclosure has a feature in that the proportion of HFO-1132(E) in the liquid phase of the refrigerant mixture in a source container before transfer (initial composition) is adjusted to $(x + y_2)$ wt.% (minimum value) or higher and x wt.% (target upper-limit composition) or lower
in order to keep the proportion of HFO-1132(E) within a range from the target upper-limit composition (x) wt.% of HFO-1132(E) - 3.0 wt.% (target lower-limit composition) to the target upper-limit composition (x) wt.%.

x is a target upper-limit composition (wt.%) of HFO-1132(E) and is in the range of $11.5 \le x \le 34.4$ or $54.1 \le x \le 91.5$, with the proviso that the range of x where $y_2 > 0$ is excluded.

$y_2$ is a lower limit of a gap between the initial composition (wt.%) of HFO-1132(E) and the target upper-limit composition (wt.%) of HFO-1132(E).

$(x + y_2)$ wt.% is a minimum value of the proportion (initial composition) of HFO-1132(E) in the liquid phase of the refrigerant mixture in a source container.

The difference between the target upper-limit composition and the target lower-limit composition is referred to as a "tolerance" ("composition tolerance"). The tolerance is determined when the composition of a refrigerant mixture is registered in the ASHRAE Standard 2013 (Designation and Safety Classification of Refrigerants) and the like.

The case in which the mixture ratio (wt.%) of HFO-1132(E) and HFO-1234yf in a refrigerant mixture comprising HFO-1132(E) and HFO-1234yf is, for example, 50:50 is described below.

In a refrigerant mixture comprising HFO-1132(E) and HFO-1234yf, for example, when the tolerance for each of HFO-1132(E) and HFO-1234yf is set at $\pm 1.5$, the target upper-limit composition of HFO-1132(E) is 51.5 wt.%, and the target lower-limit composition of HFO-1132(E) is 48.5 wt.%. Thus, in the refrigerant mixture, the difference between the target upper-limit composition and the target lower-limit composition is 3.0 wt.%.

Filling method with different initial filling amounts of the refrigerant mixture in a source container

(2-2) Case in which the initial filling amount in a source container is 100 wt.% of the maximum filling amount (65°C/3.0 wt.%/100 wt.%)

The following describes a case in which the initial filling amount of the refrigerant mixture in a source container is 100 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 34.4 wt.% or 54.1 to 91.5 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,

the proportion of HFO-1132(E) in the liquid phase of the refrigerant mixture in the source container before the transfer (initial composition) is preferably adjusted to $(x + y_{2-1})$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leq x \leq 34.4$ or $54.1 \leq x \leq 91.5$).
$y_{2-1}$ is a lower limit of a gap between the initial composition of HFO-1132(E) and the target upper-limit composition of HFO-1132(E) and is represented by the following Equation (2-1) .

$$1000y_{2-1} = 0.0109x^3 - 2.9327x^2 + 194.49x - 3663.9 \quad (2-1)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 3.0 wt.% (target lower-limit composition) to the target upper-limit composition (x) until completion of transfer,
by adjusting the proportion of HFO-1132(E) in the liquid phase of the mixture in the source container before transfer to about x - 2.1 wt.% to x wt.% according to Equation (2-1) above.

In the refrigerant mixture filling method in which the composition change of the refrigerant mixture comprising HFO-1132(E) and HFO-1234yf in a target container and/or equipment is kept within a range from the target upper-limit composition (x) wt.% - 3.0 wt.% (target lower-limit composition) to the target upper-limit composition (x) wt.% until completion of transfer, the upper limit of the proportion of HFO-1132(E) in the liquid phase of the refrigerant mixture comprising HFO-1132(E) and HFO-1234yf is the target upper-limit composition of HFO-1132(E).
When HFO-1132(E) is contained in an amount of 90 wt.%, the composition change is small; therefore, even when the initial composition of HFO-1132(E) is about -2.1 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-3) Case in which the initial filling amount in a source container is 90 wt.% of the maximum filling amount (65°C/3.0 wt.%/90 wt.%)

The following describes a case in which the initial filling amount of the refrigerant mixture in a source container is 90 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.
In the refrigerant mixture filling method of the present disclosure in which the filling amount in a target container and/or equipment is appropriately adjusted,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,

the proportion of HFO-1132(E) in the liquid phase of the refrigerant mixture in the source container before the transfer (initial composition) is preferably adjusted to $(x + y_{2-2})$ wt.% (minimum value) or higher and x wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% -3.0 wt.% (target lower-limit composition) during the transfer.

x is a target upper-limit composition of HFO-1132(E) (with the proviso that $11.5 \leqq x \leqq 91.5$).

$y_{2-2}$ is a lower limit of a gap between the initial composition of HFO-1132(E) and the target upper-limit composition of HFO-1132(E) and is represented by the following Equation (2-2).

$$1000y_{2-2} = 0.0101x^3 - 2.7654x^2 + 185.14x - 3656.3 \ (2-2)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 3.0 wt.% (target lower-limit composition) to the target upper-limit composition (x) until completion of transfer,

by adjusting the proportion of HFO-1132(E) in the liquid phase of the mixture in the source container before transfer to about x - 2.1 wt.% to x wt.% according to Equation (2-2) above.

When HFO-1132(E) is contained in an amount of 90 wt.%, the composition change is small; therefore, even when the initial composition of HFO-1132(E) is about -2.1 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

<u>(2-4) Case in which the initial filling amount in a source container is 80 wt.% of the maximum filling amount (65°C/3.0 wt.%/80 wt.%)</u>

The following describes a case in which the initial filling amount of the refrigerant mixture in a source container is 80 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container before the transfer (initial composition) is preferably adjusted to $(x + y_{2-3})$ wt.% (minimum value) or higher and x wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leqq x \leqq 91.5$).

$y_{2-3}$ is a lower limit of a gap between the initial composition of HFO-1132(E) and the target upper-limit composition of HFO-1132(E) and is represented by the following Equation (2-3).

$$1000y_{2-3} = 0.0088x^3 - 2.506x^2 + 170.56x - 3537.6 \ (2-3)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 3.0 wt.% (target lower-limit composition) to the target upper-limit composition (x) until completion of transfer,
by adjusting the proportion of HFO-1132(E) in the liquid phase of the mixture in the source container before transfer to about x - 2.2 wt.% to x wt.% according to Equation (2-3) above.

When HFO-1132(E) is contained in an amount of 90 wt.%, the composition change is small; therefore, even when the initial composition of HFO-1132(E) is about -2.2 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-5) Case in which the initial filling amount in a source container is 70 wt.% of the maximum filling amount (65°C/3.0 wt.%/70 wt.%)

The following describes a case in which the initial filling amount of the refrigerant mixture in a source container is 70 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.
In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container before the transfer (initial composition) is preferably adjusted to $(x + y_{2-4})$ wt.% (minimum value) or higher and x wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leqq x \leqq 91.5$).
$y_{2-4}$ is a lower limit of a gap between the initial composition of HFO-1132(E) and the target upper-limit composition of HFO-1132(E) and is represented by the following Equation (2-4).

$$1000y_{2-4} = 0.0097x^3 - 2.576x^2 + 169.78x - 3623.4 \quad (2-4)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 3.0 wt.% (target lower-limit composition) to the target upper-limit composition (x) until completion of transfer,
by adjusting the proportion of HFO-1132(E) in the liquid phase of the mixture in the source container before transfer to about x - 2.3 wt.% to x wt.% according to Equation (2-4) above.

When HFO-1132(E) is contained in an amount of 90 wt.%, the composition change is small; therefore, even when the initial composition of HFO-1132(E) is about -2.3 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-6) Case in which the initial filling amount in a source container is 60 wt.% of the maximum filling amount (65°C/3.0 wt.%/60 wt.%)

The following describes a case in which the initial filling amount of the refrigerant mixture in a source container is 60 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

In the refrigerant mixture filling method according to the present invention,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment, the proportion of HFO-1132(E) in the liquid phase of the refrigerant mixture in the source container before the transfer (initial composition) is preferably adjusted to $(x + y_{2-5})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leqq x \leqq 91.5$).

$y_{2-5}$ is a lower limit of a gap between the initial composition of HFO-1132(E) and the target upper-limit composition of HFO-1132(E) and is represented by the following Equation (2-5).

$$1000y_{2-5} = 0.0069x^3 - 2.0649x^2 + 144.19x - 3476.2 \quad (2-5)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 3.0 wt.% (target lower-limit composition) to the target upper-limit composition (x) until completion of transfer,

by adjusting the proportion of HFO-1132(E) in the liquid phase of the mixture in the source container before transfer to about x - 2.3 wt.% to x wt.% according to Equation (2-5) above.

When HFO-1132(E) is contained in an amount of 90 wt.%, the composition change is small; therefore, even when the initial composition of HFO-1132(E) is about -2.3 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-7) Case in which the initial filling amount in a source container is 50 wt.% of the maximum filling amount (65°C/3.0 wt.%/50 wt.%)

The following describes a case in which the initial filling amount of the refrigerant mixture in a source container is 50 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount of 50 wt.% or less of the maximum filling amount to a target container and/or equipment, the proportion of HFO-1132(E) in the liquid phase of the refrigerant mixture in the source container before the transfer (initial composition) is preferably adjusted to $(x + y_{2-6})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leqq x \leqq 91.5$).

$y_{2-6}$ is a lower limit of a gap between the initial composition of HFO-1132(E) and the target upper-limit composition of HFO-1132(E) and is represented by the following Equation (2-6).

$$1000y_{2-6} = 0.0075x^3 - 2.0565x^2 + 137.55x - 3444 \quad (2-6)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 3.0 wt.% (target lower-limit composition) to the target upper-limit composition (x) until completion of transfer,
by adjusting the proportion of HFO-1132(E) in the liquid phase of the mixture in the source container before transfer to about x - 2.4 wt.% to x wt.% according to Equation (2-6) above.

When HFO-1132(E) is contained in an amount of 90 wt.%, the composition change is small; therefore, even when the initial composition of HFO-1132(E) is about -2.4 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-8) Filling method for a non-azeotropic refrigerant mixture comprising HFO-1132(E) and HFO-1234yf

The following describes a non-azeotropic refrigerant mixture filling method for keeping the proportion of HFO-1132(E) within a range from the target upper-limit composition (x) wt.% of HFO-1132(E) - 3.0 wt.% (target lower-limit composition) to the target upper-limit composition (x) wt.%, the non-azeotropic refrigerant mixture comprising HFO-1132(E) and HFO-1234yf.

Equation (2) can be derived from Equations (2-1) to (2-6). Based on the value of each coefficient in Equations (2-1) to (2-6), $L_2$, $M_2$, $N_2$, and $P_2$ of Equation (2) can be calculated from the target upper-limit composition (x) wt.% with respect to the initial filling amount (a wt.%).

The refrigerant mixture filling method of the present disclosure has a feature in that

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container to a target container and/or equipment,
the proportion of HFO-1132(E) in the liquid phase of the refrigerant mixture in the source container before the transfer (initial composition) is adjusted to $(x + y_2)$ wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

According to the concept of the present disclosure, when the difference between the target upper-limit composition (x) wt.% and the target lower-limit composition is -3.0 wt.% and when a container is filled with the refrigerant mixture in an amount equal to or less than 100 wt.% of the maximum filling amount, $y_2 > 0$ in the range of $34.4 < x < 54.1$. Therefore, x is in the range of 11.5 wt.% to 34.4 wt.% or 54.1 wt.% to 91.5 wt.%.

a: an initial filling amount (wt.%) in the source container;
x: a target upper-limit composition of HFO-1132(E) (wt.%, $11.5 \leq x \leq 34.4$ or $54.1 \leq x \leq 91.5$, excluding the range where $y_2 > 0$);
$y_2$: a lower limit of a gap between the initial composition of HFO-1132(E) and the target upper-limit composition (wt.%) of HFO-1132(E), $y_2$ being represented by the following Equation (2):

$$1000y_2 = L_2x^3 + M_2x^2 + N_2x + P_2 \qquad (2)$$

$L_2 = 0.00000018a^2 + 0.00004664a + 0.00442857$
$M_2 = 0.00003791a^2 - 0.02400804a - 0.90728571$
$N_2 = -0.00544464a^2 + 1.98335357a + 50.41428571$
$P_2 = 0.04232143a^2 - 10.78821429a - 3008.18571429$

(3) Filling method in which the difference between the target upper-limit composition and the target lower-limit composition is 2.0 wt.%

Refrigerant mixture filling method at 65°C (range from the upper limit (wt.%) to (the upper limit - 2.0) (wt.%))

The following describes a mixture ratio of the refrigerant mixture in a source container before transfer of the refrigerant mixture from the source container to a target container and/or equipment
to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

The "target upper-limit composition," i.e., "(x) wt.%," is a maximum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

x (wt.%) is a numerical value within the range of $11 \leq x \leq 91$.

The "target lower-limit composition," i.e., "(x) - 2.0 wt.%," is a minimum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

(3-1) Filling method in which the difference between the target upper-limit composition and the target lower-limit composition is 2.0 wt.%

The refrigerant mixture filling method according to the present disclosure in which the filling amount of the refrigerant mixture in a target container and/or equipment is appropriately adjusted has a feature in that

when a refrigerant mixture comprising HFO-1132(E) and HFO-1234yf wherein HFO-1132(E) is present in the liquid phase of the refrigerant in an amount of 10 to 91 wt.% based on the total of HFO-1132(E) and HFO-1234yf taken as 100 wt.% is transferred in a liquid state from a source container to a target container and/or equipment,
the proportion of HFO-1132(E) in the liquid phase of the refrigerant mixture in the source container before the transfer (initial composition) is adjusted to $(x + y_3)$ wt.% (minimum value) or higher and (x) wt.% (target upper-limit composition) or lower
in order to keep the proportion of HFO-1132(E) in the liquid phase of the refrigerant mixture in the source container within a range from (x) wt.% of HFO-1132(E) (target upper-limit composition) to (x) wt.% - 2.0 wt.% (target lower-limit composition) during the transfer,

a: an initial filling amount (wt.%) in the source container;
x: a target upper-limit composition of HFO-1132(E) (wt.%, $11 \leq x \leq 17.6$ or $74.2 \leq x \leq 91$, excluding the range where $y_3 > 0$);
$y_3$: a lower limit of a gap between the initial composition of HFO-1132(E)) and the target upper-limit composition of HFO-1132(E), $y_3$ being a value (wt.%) represented by the following Equation (3):

$$1000y_3 = L_3x^3 + M_3x^2 + N_3x + P_3 \qquad (3)$$

$L_3 = -0.00000746a^2 + 0.00109679a - 0.03042857$
$M_3 = 0.00107004a^2 - 0.16541279a + 3.77611429$
$N_3 = -0.04430179a^2 + 7.22883929a - 123.14571429$
$P_3 = 0.40416071a^2 - 56.68153571a - 507.98571429$

When the refrigerant mixture is transferred between containers according to the filling method of the present disclosure, the proportion of HFO-1132(E) in the liquid phase of the mixture in a source container before transfer is adjusted to a specific range; therefore, even when the source container is filled with the refrigerant mixture in an amount of 100 wt.% of the maximum filling amount, composition changes in a target container and/or equipment can be kept within a range from the target upper-limit composition (x) wt.% - 2.0 wt.% (target lower-limit composition) to the target upper-limit composition (x) wt.% until completion of transfer.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in the HFO-1132(E) concentration in the liquid phase. Therefore, a source container is preferably filled with HFO-1132(E) before transfer in an amount greater than the target composition.

The value a (wt.%) is usually set to $60 \leq a \leq 100$.

When the refrigerant mixture is transferred in a liquid state from a source container to a target container and/or equipment, a smaller initial filling amount in a source container results in a smaller composition change due to transfer during the transfer. Therefore, an equation that satisfies a filling method in which the initial filling amount is a wt.% is also satisfied in a filling method in which the initial filling amount is a wt.% or less.

An equation that satisfies a filling method in which the initial filling amount is 100 wt.% is also satisfied in a filling method in which the initial filling amount is 100 to 0 wt.%. An equation that satisfies a filling method in which the initial filling amount is 90 wt.% is also satisfied in a filling method in which the initial filling amount is 90 to 0 wt.%. An equation that satisfies a filling method in which the initial filling amount is 80 wt.% is also satisfied in a filling method in which the initial filling amount is 80 to 0 wt.%. An equation that satisfies a filling method in which the initial filling amount is 70 wt.% is also satisfied in a filling method in which the initial filling amount is 70 to 0 wt.%. An equation that satisfies a filling method in which the initial filling amount is 60 wt.% is also satisfied in a filling method in which the initial filling amount is 60 to 0 wt.%. An equation that satisfies a filling method in which the initial filling amount is 50 wt.% is also satisfied in a filling method in which the initial filling amount is 50 to 0 wt.%.

Proportion of HFO-1132(E) in the liquid phase of the refrigerant mixture in a source container

The present disclosure has a feature in that the proportion of HFO-1132(E) in the liquid phase of the refrigerant mixture in a source container before transfer (initial composition) is adjusted to $(x + y_3)$ wt.% (minimum value) or higher and x wt.% (target upper-limit composition) or lower

in order to keep the proportion of HFO-1132(E) within a range from the target upper-limit composition (x) wt.% of HFO-1132(E) - 2.0 wt.% (target lower-limit composition) to the target upper-limit composition (x) wt.%.

x is a target upper-limit composition (wt.%) of HFO-1132(E) and is in the range of $11 \leq x \leq 17.6$ or $74.2 \leq x \leq 91$, with the proviso that the range of x where $y_3 > 0$ is excluded.

$y_3$ is a lower limit of a gap between the initial composition (wt.%) of HFO-1132(E) and the target upper-limit composition (wt.%) of HFO-1132(E).

$(x + y_3)$ wt.% is a minimum value of the proportion (initial composition) of HFO-1132(E) in the liquid phase of the refrigerant mixture in a source container.

The difference between the target upper-limit composition and the target lower-limit composition is referred to as a "tolerance" ("composition tolerance"). The tolerance is determined when the composition of a refrigerant mixture is registered in the ASHRAE Standard 2013 (Designation and Safety Classification of Refrigerants) and the like.

The following describes a case in which the mixture ratio (wt.%) of HFO-1132(E) and HFO-1234yf in a refrigerant mixture comprising HFO-1132(E) and HFO-1234yf is, for example, 50:50.

In a refrigerant mixture comprising HFO-1132(E) and HFO-1234yf, for example, when the tolerance for each of HFO-1132(E) and HFO-1234yf is set at $\pm 1.0$, the target upper-limit composition of HFO-1132(E) is 51.0 wt.%, and the target lower-limit composition of HFO-1132(E) is 49.0 wt.%. Thus, in the refrigerant mixture, the difference between the target upper-limit composition and the target lower-limit composition is 2.0 wt.%.

Filling method with different initial filling amounts of the refrigerant mixture in a source container

(3-2) Case in which the initial filling amount in a source container is 100 wt.% of the maximum filling amount (65°C/2.0 wt.%/100 wt.%)

The following describes a case in which the initial filling amount of the refrigerant mixture in a source container is 100 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 17.6 wt.% or 74.2 to 91 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,

the proportion of HFO-1132(E) in the liquid phase of the refrigerant mixture in the source container before the transfer (initial composition) is preferably adjusted to ($x + y_{3-1}$) wt.% (minimum value) or higher and ($x$) wt.% (target upper-limit composition) or lower

in order to keep the proportion of HFO-1132(E) in the liquid phase of the refrigerant mixture in the source container within a range from the target upper-limit composition ($x$) wt.% of HFO-1132(E) to the target upper-limit composition ($x$) wt.% - 2.0 wt.% (target lower-limit composition) during the transfer.

$x$ is a target upper-limit composition of HFO-1132(E) (with the proviso that $11 \leq x \leq 17.6$ or $74.2 \leq x \leq 91$).

$y_{3-1}$ is a lower limit of a gap between the initial composition of HFO-1132(E) and the target upper-limit composition of HFO-1132(E) and is represented by the following Equation (3-1).

$$1000y_{3-1} = 0.0039x^3 - 1.9763x^2 + 153.64x - 2109 \quad (3-1)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition ($x$) - 2.0 wt.% (target lower-limit composition) to the target upper-limit composition ($x$) until completion of transfer,

by adjusting the proportion of HFO-1132(E) in the liquid phase of the mixture in the source container before transfer to about $x$ - 1.6 wt.% to $x$ wt.% according to Equation (3-1) above.

In the refrigerant mixture filling method for keeping the composition change of the refrigerant mixture comprising HFO-1132(E) and HFO-1234yf in a target container and/or equipment within a range from the target upper-limit composition ($x$) wt.% - 2.0 wt.% (target lower-limit composition) to the target upper-limit composition ($x$) wt.% until completion of transfer, the upper limit of the proportion of HFO-1132(E) in the liquid phase of the refrigerant mixture comprising HFO-1132(E) and HFO-1234yf is the target upper-limit composition of HFO-1132(E).

When HFO-1132(E) is contained in an amount of 90 wt.%, the composition change is small; therefore, even when the initial composition of HFO-1132(E) is about -1.6 wt.% relative to the target upper-limit composition, the proportion of HFO-1132(E) in the liquid phase of the mixture can be kept within a range from the target upper-limit composition ($x$) - 2.0 wt.% (target lower-limit composition) to the target upper-limit composition ($x$) until completion of transfer.

Filling method with different initial filling amounts of the refrigerant mixture in a source container

(3-3) Case in which the initial filling amount in a source container is 90 wt.% of the maximum filling amount (65°C/2.0 wt.%/90 wt.%)

The following describes a case in which the initial filling amount of the refrigerant mixture in a source container is 90 wt.% of the maximum filling amount and in which the proportion of HFO-1132(E) in the liquid phase of the refrigerant mixture in the source container is kept within a range from the target upper-limit composition ($x$) wt.% - 2.0 wt.% (target lower-limit composition) to the target upper-limit composition ($x$) wt.%.

In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 18.3 wt.% or 73.0 to 91 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,

the proportion of HFO-1132(E) in the liquid phase of the refrigerant mixture in the source container before the transfer (initial composition) is preferably adjusted to ($x + y_{3-2}$) wt.% (minimum value) or higher and ($x$) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 18.3$ or $73.0 \leq x \leq 91$).

$y_{3-2}$ is a lower limit of a gap between the initial composition of HFO-1132(E) and the target upper-limit composition of HFO-1132(E) and is represented by the following Equation (3-2).

$$1000y_{3-2} = 0.0094x^3 - 2.6505x^2 + 176.28x - 2399.7 \quad (3-2)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer,
by adjusting the proportion of HFO-1132(E) in the liquid phase of the mixture in the source container before transfer to about x - 1.2 wt.% to x wt.% according to Equation (3-2) above.

When HFO-1132(E) is contained in an amount of 90 wt.%, the composition change is small; therefore, even when the initial composition of HFO-1132(E) is about -1.2 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-4) Case in which the initial filling amount in a source container is 80 wt.% of the maximum filling amount (65°C/2.0 wt.%/80 wt.%)

The following describes a case in which the initial filling amount of the refrigerant mixture in a source container is 80 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of present invention,

when a refrigerant mixture comprising HFO-1132(E) and HFO-1234yf wherein HFO-1132(E) is present in the liquid phase of the refrigerant mixture in an amount of 10 to 20.1 wt.% or 70.8 to 91 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,
the proportion of HFO-1132(E) in the liquid phase of the refrigerant mixture in the source container before the transfer (initial composition) is preferably adjusted to $(x + y_{3-3})$ wt.% (minimum value) or higher and x wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 20.1$ or $70.8 \leq x \leq 91$).

$y_{3-3}$ is a lower limit of a gap between the initial composition of HFO-1132(E) and the target upper-limit composition of HFO-1132(E) and is represented by the following Equation (3-3) .

$$1000y_{3-3} = 0.0087x^3 - 2.4833x^2 + 166.14x - 2404.9 \quad (3-3)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer,
by adjusting the proportion of HFO-1132(E) in the liquid phase of the mixture in the source container before transfer to about x - 1.3 wt.% to x wt.% according to Equation (3-3) above.

When HFO-1132(E) is contained in an amount of 90 wt.%, the composition change is small; therefore, even when the initial composition of HFO-1132(E) is about -1.3 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-5) Case in which the initial filling amount in a source container is 70 wt.% of the maximum filling amount (65°C/2.0 wt.%/70 wt.%)

The following describes a case in which the initial filling amount of the refrigerant mixture in a source container is 70 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 21.8 wt.% or 68.4 to 91 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container before the transfer (initial composition) is preferably adjusted to $(x + y_{3-4})$ wt.% (minimum value) or higher and x wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 21.8$ or $68.4 \leq x \leq 91$).

$y_{3-4}$ is a lower limit of a gap between the initial composition of HFO-1132(E) and the target upper-limit composition of HFO-1132(E) and is represented by the following Equation (3-4) .

$$1000y_{3-4} = 0.0099x^3 - 2.5803x^2 + 167.02x - 2519.1 \quad (3-4)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer,
by adjusting the proportion of HFO-1132(E) in the liquid phase of the mixture in the source container before transfer to about x - 1.2 wt.% to x wt.% according to Equation (3-4) above.

When HFO-1132(E) is contained in an amount of 90 wt.%, the composition change is small; therefore, even when the initial composition of HFO-1132(E) is about -1.2 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-6) Case in which the initial filling amount in a source container is 60 wt.% of the maximum filling amount (65°C/2.0 wt.%/60 wt.%)

The following describes a case in which the initial filling amount of the refrigerant mixture in a source container is 60 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 24.3 wt.% or 65.3 to 91 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container before the transfer (initial composition) is preferably adjusted to $(x + y_{3-5})$ wt.% (minimum value) or higher and x wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 24.3$ or $65.3 \leq x \leq 91$).

$y_{3-5}$ is a lower limit of a gap between the initial composition of HFO-1132(E) and the target upper-limit composition of HFO-1132(E) and is represented by the following Equation (3-5).

$$1000y_{3-5} = 0.008x^3 - 2.2468x^2 + 149.82x - 2430.6 \quad (3-5)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 2.0 wt.% (target lower-limit composition) to the target upper-limit composition (x) until completion of transfer,

by adjusting the proportion of HFO-1132(E) in the liquid phase of the mixture in the source container before transfer to about x - 1.3 wt.% to x wt.% according to Equation (3-5) above.

When HFO-1132(E) is contained in an amount of 90 wt.%, the composition change is small; therefore, even when the initial composition of HFO-1132(E) is about -1.3 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-7) Case in which the initial filling amount in a source container is 50 wt.% of the maximum filling amount (65°C/2.0 wt.%/50 wt.%)

The following describes a case in which the initial filling amount of the refrigerant mixture in a source container is 50 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the method for filling a refrigerant mixture according to the present disclosure,

when a refrigerant mixture comprising HFO-1132(E) and HFO-1234yf wherein HFO-1132(E) is present in the liquid phase of the refrigerant mixture in an amount of 10 to 29.8 wt.% or 60.1 to 91 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,

the proportion of HFO-1132(E) in the liquid phase of the refrigerant mixture in the source container before the transfer (initial composition) is preferably adjusted to $(x + y_{3-6})$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 29.8$ or $60.1 \leq x \leq 91$).

$y_{3-6}$ is a lower limit of a gap between the initial composition of HFO-1132(E) and the target upper-limit composition of HFO-1132(E) and is represented by the following Equation (3-6).

$$1000y_{3-6} = 0.0061x^3 - 1.8556x^2 + 128.49x - 2343.6 \quad (3-6)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer,
by adjusting the proportion of HFO-1132(E) in the liquid phase of the mixture in the source container before transfer to about x - 1.4 wt.% to x wt.% according to Equation (3-6) above.

When HFO-1132(E) is contained in an amount of 90 wt.%, the composition change is small; therefore, even when the initial composition of HFO-1132(E) is about -1.4 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-8) Filling method for a non-azeotropic refrigerant mixture comprising HFO-1132(E) and HFO-1234yf

The following describes a filling method for keeping the proportion of HFO-1132(E) in a non-azeotropic refrigerant mixture comprising HFO-1132(E) and HFO-1234yf within a range from the target upper-limit composition (x) wt.% of HFO-1132(E) - 2.0 wt.% (target lower-limit composition) to the target upper-limit composition (x) wt.%.

Equation (3) can be derived from Equations (3-1) to (3-6). Based on the value of each coefficient in Equations (3-1) to (3-6), $L_3$, $M_3$, $N_3$, and $P_3$ of Equation (3) can be calculated from the target upper-limit composition (x) wt.% with respect to the initial filling amount (a wt.%).

The refrigerant mixture filling method of the present disclosure has a feature in that

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container to a target container and/or equipment, the proportion of HFO-1132(E) in the liquid phase of the refrigerant mixture in the source container before the transfer (initial composition) is adjusted to $(x + y_3)$ wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

According to the concept of the present disclosure, when the difference between the target upper-limit composition (x) wt.% and the target lower-limit composition is -2.0 wt.% and when a source container is initially filled with the refrigerant mixture in an amount equal to or less than 100 wt.% of the maximum filling amount, $y_{3-1} > 0$ within the range of $17.6 < x < 74.2$. Therefore, x is in the range of 11 wt.% to 17.6 wt.% or 74.2 wt.% to 91.0 wt.%.

When a source container is initially filled with the refrigerant mixture in an amount equal to or less than 90 wt.% of the maximum filling amount, $y_{3-2} > 0$ within the range of $18.3 < x < 73.0$. Therefore, x is in the range of 11 wt.% to 18.3 wt.% or 73.0 wt.% to 91 wt.%.

When a source container is initially filled with the refrigerant mixture in an amount equal to or less than 80 wt.% of the maximum filling amount, $y_{3-3} > 0$ within the range of $20.1 < x < 70.8$. Therefore, x is in the range of 11 wt.% to 20.1 wt.% or 70.8 wt.% to 91 wt.%.

When a source container is initially filled with the refrigerant mixture in an amount equal to or less than 70 wt.% of the maximum filling amount, $y_{3-4} > 0$ within the range of $21.8 < x < 68.4$. Therefore, x is in the range of 11 wt.% to 21.8 wt.% or 68.4 wt.% to 91 wt.%.

When a source container is initially filled with the refrigerant mixture in an amount equal to or less than 60 wt.% of the maximum filling amount, $y_{3-5} > 0$ within the range of $24.3 < x < 65.3$. Therefore, x is in the range of 11 wt.% to 24.3 wt.% or 65.3 wt.% to 91 wt.%.

When a source container is initially filled with the refrigerant mixture in an amount equal to or less than 50 wt.% of the maximum filling amount, $y_{3-5} > 0$ within the range of $29.8 < x < 60.1$. Therefore, x is in the range of 11 wt.% to 29.8 wt.% or 60.1 wt.% to 91 wt.%.

a: an initial filling amount (wt.%) in the source container;

x: a target upper-limit composition of HFO-1132(E) (wt.%, $11 \leq x \leq 17.6$ or $74.2 \leq x \leq 91$, excluding the range where $y_3 > 0$);

$y_3$: a lower limit of a gap between the initial composition of HFO-1132(E) and the target upper-limit composition (wt.%) of HFO-1132(E), $y_3$ being represented by the following Equation (3):

$$1000y_3 = L_3x^3 + M_3x^2 + N_3x + P_3 \quad (3)$$

$L_3 = -0.00000746a^2 + 0.00109679a - 0.03042857$
$M_3 = 0.00107004a^2 - 0.16541279a + 3.77611429$
$N_3 = -0.04430179a^2 + 7.22883929a - 123.14571429$
$P_3 = 0.40416071a^2 - 56.68153571a - 507.98571429$.

Filling method with different set tolerances

[2] Refrigerant mixture filling method in which a value calculated by using a value obtained by dividing 1.05 by the specific gravity of the gas (refrigerant mixture comprising HFO-1132(E) and HFO-1234yf) at 45°C as a fill constant is defined as 100 wt.% of the filling amount

The following is one example of a transfer method in which the handling temperature during transfer is 40°C. Under the High Pressure Gas Safety Act of Japan, handling containers at temperatures exceeding 40°C is prohibited; therefore, the handling temperature during transfer in Japan is 0°C to 40°C.

The higher the temperature during transfer (handling), the greater the composition change due to transfer during the transfer when transferring a refrigerant mixture in a liquid state from a source container to a target container and/or equipment. Therefore, the transfer method is also applicable at a handling temperature of 0°C to 40°C by using the conditions for transfer at a handling temperature of 40°C.

(1) Filling method in which the difference between the target upper-limit composition and the target lower-limit composition is 4.0 wt.%

Refrigerant mixture filling method at 45°C (range from the upper limit (wt.%) to (the upper limit - 4.0) (wt.%))

The following describes the mixture ratio of the refrigerant mixture in a source container before transfer of the refrigerant mixture from the source container to a target container and/or equipment, the mixture ratio being adjusted in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

The "target upper-limit composition," i.e., "(x) wt.%," is a maximum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

x (wt.%) is a numerical value within the range of $12 \leq x \leq 92$.

The "target lower-limit composition," i.e., "(x) wt.% - 4.0 wt.%," is a minimum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

(1-1) Filling method in which the difference between the target upper-limit composition and the target lower-limit composition is 4.0 wt.%

The refrigerant mixture filling method according to the present disclosure in which the filling amount of the refrigerant mixture in a target container and/or equipment is appropriately adjusted has a feature in that

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container to the target container and/or equipment, the proportion of HFO-1132(E) in the liquid phase of the refrigerant mixture in the source container before the transfer (initial composition) is adjusted to $(x + y_4)$ wt.% (minimum value) or higher and (x) wt.% (target upper-limit composition) or lower

in order to keep the proportion of HFO-1132(E) in the liquid phase of the refrigerant mixture in the source container within a range from (x) wt.% of HFO-1132(E) (target upper-limit composition) to (x) wt.% - 4.0 wt.% (target lower-limit composition) during the transfer.

a: an initial filling amount (wt.%) in the source container;

x: a target upper-limit composition of HFO-1132(E) (wt.%, $12 \leq x \leq 92$, excluding the range where $y_4 > 0$);

$y_4$: a lower limit of a gap between the initial composition of HFO-1132(E) and the target upper-limit composition of HFO-1132(E), $y_4$ being a value (wt.%) represented by the following Equation (4):

$$1000y_4 = L_4x^3 + M_4x^2 + N_4x + P_4 \quad (4)$$

$L_4 = 0.00000191a^2 - 0.00019975a + 0.01294286$
$M_4 = -0.00022132a^2 + 0.01221707a - 2.25342857$
$N_4 = 0.00507143a^2 + 0.56545714a + 111.01142857$
$P_4 = -0.06323214a^2 + 3.21625000a - 4672.82857143$

According to the refrigerant mixture filling method of the present disclosure, even when a source container is filled with the refrigerant mixture in an amount equal to 100 wt.% of the maximum filling amount, the composition change in a target container and/or equipment can be kept within a range from the target upper-limit composition (x) wt.% - 4.0 wt.% (target lower-limit composition) to the target upper-limit composition (x) wt.% until completion of transfer,

by adjusting the proportion of HFO-1132(E) in the liquid phase of the mixture in the source container before transfer to a specific range.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

The value a (wt.%) is usually set to $60 \leq a \leq 100$.

When the refrigerant mixture in a liquid state is transferred from a source container to a target container and/or equipment, a smaller initial filling amount in the source container results in a smaller composition change due to transfer during the transfer. Therefore, an equation that satisfies a filling method in which the initial filling amount is a wt.% is also satisfied in a filling method in which the initial filling amount is a wt.% or less.

An equation that satisfies a filling method in which the initial filling amount is 100 wt.% is also satisfied in a filling method in which the initial filling amount is 100 to 0 wt.%. An equation that satisfies a filling method in which the initial filling amount is 90 wt.% is also satisfied in a filling method in which the initial filling amount is 90 to 0 wt.%. An equation that satisfies a filling method in which the initial filling amount is 80 wt.% is also satisfied in a filling method in which the initial filling amount is 80 to 0 wt.%. An equation that satisfies a filling method in which the initial filling amount is 70 wt.% is also satisfied in a filling method in which the initial filling amount is 70 to 0 wt.%. An equation that satisfies a filling method in which the initial filling amount is 60 wt.% is also satisfied in a filling method in which the initial filling amount is 60 to 0 wt.%. An equation that satisfies a filling method in which the initial filling amount is 50 wt.% is also satisfied in a filling method in which the initial filling amount is 50 to 0 wt.%.

Proportion of HFO-1132(E) in the liquid phase of the refrigerant mixture in a source container

The present disclosure has a feature in that the proportion of HFO-1132(E) in the liquid phase of the refrigerant mixture in a source container before transfer (initial composition) is adjusted to $(x + y_4)$ wt.% (minimum value) or higher and x wt.% (target upper-limit composition) or lower

in order to keep the proportion of HFO-1132(E) within a range from the target upper-limit composition (x) wt.% of HFO-1132(E) - 4.0 wt.% (target lower-limit composition) to the target upper-limit composition (x) wt.%.

x is a target upper-limit composition (wt.%) of HFO-1132(E) and is in the range of $10 \leq x \leq 90$, with the proviso that the range where $y_4 > 0$ is excluded.

$y_4$ is a lower limit of a gap between the initial composition (wt.%) of HFO-1132(E) and the target upper-limit composition (wt.%) of HFO-1132(E).

$(x + y_4)$ wt.% is a minimum value of the proportion (initial composition) of HFO-1132(E) in the liquid phase of the refrigerant mixture in a source container.

The difference between the target upper-limit composition and the target lower-limit composition is referred to as a "tolerance" ("composition tolerance"). The tolerance is determined when the composition of a refrigerant mixture is registered in the ASHRAE Standard 2013 (Designation and Safety Classification of Refrigerants) and the like.

The following describes a case in which the mixture ratio (wt.%) of HFO-1132(E) and HFO-1234yf in a refrigerant mixture comprising HFO-1132(E) and HFO-1234yf is, for example, 50:50.

In a refrigerant mixture comprising HFO-1132(E) and HFO-1234yf, for example, when the tolerance for each of HFO-1132(E) and HFO-1234yf is set at $\pm 2.0$, the target upper-limit composition of HFO-1132(E) is 52.0 wt.%, and the target lower-limit composition of HFO-1132(E) is 48.0 wt.%. Thus, in the refrigerant mixture, the difference between the target upper-limit composition and the target lower-limit composition is 4.0 wt.%.

Filling method with different initial filling amounts of the refrigerant mixture in a source container

(1-2) Case in which the initial filling amount in a source container is 100 wt.% of the maximum filling amount (45°C/4.0 wt.%/100 wt.%)

The following describes a case in which the initial filling amount of the refrigerant mixture in a source container is 100 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment, the proportion of HFO-1132(E) in the liquid phase of the refrigerant mixture in the source container before the transfer (initial composition) is preferably adjusted to $(x + y_{4-1})$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{4-1}$ is a lower limit of a gap between the initial composition of HFO-1132(E) and the target upper-limit composition of HFO-1132(E) and is represented by the following Equation (4-1).

$$1000y_{4-1} = 0.0119x^3 - 3.221x^2 + 217.37x - 4972.7 \quad (4-1)$$

In the present disclosure,

when a refrigerant mixture comprising HFO-1132(E) and HFO-1234yf is transferred from a source container to a target container and/or equipment, the composition change in the target container and/or equipment can be kept within a range from the target upper-limit composition (x) - 4.0 wt.% (target lower-limit composition) to the target upper-limit composition (x) until completion of transfer, by adjusting the proportion of HFO-1132(E) in the liquid phase of the mixture in the source container before transfer to about x - 3.0 wt.% to x wt.% according to Equation (4-1) above.

In the refrigerant mixture filling method in which the composition change of the refrigerant mixture comprising HFO-1132(E) and HFO-1234yf in a target container and/or equipment is kept within a range from the target upper-limit composition (x) wt.% - 4.0 wt.% (target lower-limit composition) to the target upper-limit composition (x) wt.% until completion of transfer, the upper limit of the proportion of HFO-1132(E) in the liquid phase of the refrigerant mixture comprising HFO-1132(E) and HFO-1234yf is the target upper-limit composition of HFO-1132(E).

When HFO-1132(E) is contained in an amount of 90 wt.%, the composition change is small; therefore, even when the initial composition of HFO-1132(E) is about -3.0 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-3) Case in which the initial filling amount in a source container is 90 wt.% of the maximum filling amount (45°C/4.0 wt.%/90 wt.%)

The following describes a case in which the initial filling amount of the refrigerant mixture in a source container is 90 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container before the transfer (initial composition) is preferably adjusted to $(x + y_{4-2})$ wt.% (minimum value) or higher and $(x)$ wt.% (target upper-limit composition) or lower
in order to keep the proportion of HFO-1132(E) in the liquid phase of the refrigerant mixture in the source container within a range from the target upper-limit composition (x) of HFO-1132(E) to the target upper-limit composition (x) - 4.0 wt.% (target lower-limit composition) during the transfer.

x is a target upper-limit composition of HFO-1132(E) (with the proviso that $12 \leq x \leq 92$).
$y_{4-2}$ is a lower limit of a gap between the initial composition of HFO-1132(E) and the target upper-limit composition of HFO-1132(E) and is represented by the following Equation (4-2).

$$1000y_{4-2} = 0.0107x^3 - 2.9788x^2 + 204x - 4902.8 \quad (4-2)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 4.0 wt.% (target lower-limit composition) to the target upper-limit composition (x) until completion of transfer,
by adjusting the proportion of HFO-1132(E) in the liquid phase of the mixture in the source container before transfer to about x - 3.0 wt.% to x wt.% according to Equation (4-2) above.

When HFO-1132(E) is contained in an amount of 90 wt.%, the composition change is small; therefore, even when the initial composition of HFO-1132(E) is about -3.0 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-4) Case in which the initial filling amount in a source container is 80 wt.% of the maximum filling amount (45°C/4.0 wt.%/80 wt.%)

The following describes a case in which the initial filling amount of the refrigerant mixture in a source container is 80 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,
the proportion of HFO-1132(E) in the liquid phase of the refrigerant mixture in the source container before the transfer (initial composition) is preferably adjusted to $(x + y_{4-3})$ wt.% (minimum value) or higher and $(x)$ wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{4-3}$ is a lower limit of a gap between the initial composition of HFO-1132(E) and the target upper-limit composition of HFO-1132(E) and is represented by the following Equation (4-3) .

$$1000y_{4-3} = 0.0092x^3 - 2.7082x^2 + 190.2x - 4857.3 \quad (4-3)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 4.0 wt.% (target lower-limit composition) to the target upper-limit composition (x) until completion of transfer,
by adjusting the proportion of HFO-1132(E) in the liquid phase of the mixture in the source container before transfer to about x - 3.1 wt.% to x wt.% according to Equation (4-3) above.

When HFO-1132(E) is contained in an amount of 90 wt.%, the composition change is small; therefore, even when the initial composition of HFO-1132(E) is about -3.1 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-5) Case in which the initial filling amount in a source container is 70 wt.% of the maximum filling amount (45°C/4.0 wt.%/70 wt.%)

The following describes a case in which the initial filling amount of the refrigerant mixture in a source container is 70 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container before the transfer (initial composition) is preferably adjusted to (x + $y_{4-4}$) wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).

$y_{4-4}$ is a lower limit of a gap between the initial composition of HFO-1132(E) and the target upper-limit composition of HFO-1132(E) and is represented by the following Equation (4-4).

$$1000y_{4-4} = 0.0085x^3 - 2.4818x^2 + 173.86x - 4711 \quad (4-4)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 4.0 wt.% (target lower-limit composition) to the target upper-limit composition (x) until completion of transfer,

by adjusting the proportion of HFO-1132(E) in the liquid phase of the mixture in the source container before transfer to about (x) - 3.1 wt.% to (x) wt.% according to Equation (4-4) above.

When HFO-1132(E) is contained in an amount of 90 wt.%, the composition change is small; therefore, even when the initial composition of HFO-1132(E) is about -3.1 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-6) Case in which the initial filling amount in a source container is 60 wt.% of the maximum filling amount (45°C/4.0 wt.%/60 wt.%)

The following describes a case in which the initial filling amount of the refrigerant mixture in a source container is 60 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,
the proportion of HFO-1132(E) in the liquid phase of the refrigerant mixture in the source container before the transfer (initial composition) is preferably adjusted to $(x + y_{4-5})$ wt.% (minimum value) or higher and (x) wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 4.0 wt.% (target lower-limit composition) during the transfer.

x is a target upper-limit composition of HFO-1132(E) (with the proviso that $12 \leq x \leq 92$).
$y_{4-5}$ is a lower limit of a gap between the initial composition of HFO-1132(E) and the target upper-limit composition of HFO-1132(E) and is represented by the following Equation (4-5).

$$1000y_{4-5} = 0.0073x^3 - 2.2628x^2 + 162.31x - 4714.4 \ (4-5)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 4.0 wt.% (target lower-limit composition) to the target upper-limit composition (x) until completion of transfer,
by adjusting the proportion of HFO-1132(E) in the liquid phase of the mixture in the source container before transfer to about x - 3.3 wt.% to x wt.% according to Equation (4-5) above.

When HFO-1132(E) is contained in an amount of 90 wt.%, the composition change is small; therefore, even when the initial composition of HFO-1132(E) is about -3.3 wt.% relative to the target upper-limit composition, the proportion of HFO-1132(E) in the liquid phase of the mixture can be kept within a range from the target upper-limit composition (x) - 4.0 wt.% (target lower-limit composition) to the target upper-limit composition (x) until completion of transfer.

(1-7) Case in which the initial filling amount in a source container is 50 wt.% of the maximum filling amount (45°C/4.0 wt.%/50 wt.%)

The following describes a case in which the initial filling amount of the refrigerant mixture in a source container in 50 wt.% of the maximum filling amount and in which the proportion of HFO-1132(E) in the liquid phase of the refrigerant mixture in the source container is kept within a range from the target upper-limit composition (x) wt.% - 4.0 wt.% (target lower-limit composition) to the target upper-limit composition (x) wt.%.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,

the proportion of HFO-1132(E) in the liquid phase of the refrigerant mixture in the source container before the transfer (initial composition) is preferably adjusted to $(x + y_{4-6})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 4.0 wt.% (target lower-limit composition) during the transfer.

x is a target upper-limit composition of HFO-1132(E) (with the proviso that $12 \leq x \leq 92$).

$y_{4-6}$ is a lower limit of a gap between the initial composition of HFO-1132(E) and the target upper-limit composition of HFO-1132(E) and is represented by the following Equation (4-6).

$$1000y_{4-6} = 0.008x^3 - 2.2272x^2 + 152.82x - 4676.2 \quad (4-6)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition $(x)$ - 4.0 wt.% (target lower-limit composition) to the target upper-limit composition $(x)$ until completion of transfer,

by adjusting the proportion of HFO-1132(E) in the liquid phase of the mixture in the source container before transfer to about x - 3.3 wt.% to x wt.% according to Equation (4-6) above.

When HFO-1132(E) is contained in an amount of 90 wt.%, the composition change is small; therefore, even when the initial composition of HFO-1132(E) is about -3.3 wt.% relative to the target upper-limit composition, the proportion of HFO-1132(E) in the liquid phase of the mixture can be kept within a range from the target upper-limit composition $(x)$ - 4.0 wt.% (target lower-limit composition) to the target upper-limit composition $(x)$ until completion of transfer.

(1-8) Filling method for a non-azeotropic refrigerant mixture comprising HFO-1132(E) and HFO-1234yf

The following describes a non-azeotropic refrigerant mixture filling method for keeping the proportion of HFO-1132(E) within a range from the target upper-limit composition $(x)$ wt.% of HFO-1132(E) - 4.0 wt.% (target lower-limit composition) to the target upper-limit composition $(x)$ wt.%, the refrigerant mixture comprising HFO-1132(E) and HFO-1234yf.

Equation (4) can be derived from Equations (4-1) to (4-6). Based on the value of each coefficient in Equations (4-1) to (4-6), $L_4$, $M_4$, $N_4$, and $P_4$ of Equation (4) can be calculated from the target upper-limit composition $(x)$ with respect to the initial filling amount (a wt.%).

The refrigerant mixture filling method of the present disclosure has a feature in that

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container to a target container and/or equipment,

the proportion of HFO-1132(E) in the liquid phase of the refrigerant mixture in the source container before the transfer (initial composition) is adjusted to $(x + y_4)$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 4.0 wt.% (target lower-limit composition) during the transfer.

a: an initial filling amount (wt.%) in the source container;

x: a target upper-limit composition of HFO-1132(E) (wt.%, $12 \leq x \leq 92$, excluding the range where $y_4 > 0$);

$y_4$: a lower limit of a gap between the initial composition of HFO-1132(E) and the target upper-limit composition of HFO-1132(E), $y_4$ being a value (wt.%) represented by the following Equation (4):

$$1000y_4 = L_4x^3 + M_4x^2 + N_4x + P_4 \quad (4)$$

$L_4 = 0.00000191a^2 - 0.00019975a + 0.01294286$
$M_4 = -0.00022132a^2 + 0.01221707a - 2.25342857$
$N_4 = 0.00507143a^2 + 0.56545714a + 111.01142857$
$P_4 = -0.06323214a^2 + 3.21625000a - 4672.82857143$

(2) Filling method in which the difference between the target upper-limit composition and the target lower-limit composition is 3.0 wt.%

Refrigerant mixture filling method at 45°C (range from the upper limit (wt.%) to (the upper limit - 3.0) (wt.%))

The following describes the mixture ratio of the refrigerant mixture in a source container before transfer of the refrigerant mixture from the source container to a target container and/or equipment

to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

The "target upper-limit composition," i.e., "(x) wt.%," is a maximum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

x (wt.%) is a numerical value within the range of $11.5 \leq x \leq 91.5$.

The "target lower-limit composition," i.e., "(x) wt.% - 3.0 wt.%," is a minimum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

(2-1) Filling method in which the difference between the target upper-limit composition and the target lower-limit composition is 3.0 wt.%

The refrigerant mixture filling method of the present disclosure in which the filling amount of the refrigerant mixture in a target container and/or equipment is appropriately adjusted has a feature in that

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container to a target container and/or equipment, the proportion of HFO-1132(E) in the liquid phase of the refrigerant mixture in the source container before the transfer (initial composition) is adjusted to $(x + y_5)$ wt.% (minimum value) or higher and (x) wt.% (target upper-limit composition) or lower

in order to keep the proportion of HFO-1132(E) in the liquid phase of the refrigerant mixture in the source container within a range from (x) wt.% of HFO-1132(E) (target upper-limit composition) to (x) wt.% - 3.0 wt.% (target lower-limit composition) during the transfer.

a: an initial filling amount (wt.%) in the source container;

x: a target upper-limit composition of HFO-1132(E) (wt.%, $11.5 \leq x \leq 29.9$ or $60.2 \leq x \leq 91.5$, excluding the range where $y_5 > 0$);

$y_5$: a lower limit of a gap between the initial composition of HFO-1132(E) and the target upper-limit composition of HFO-1132(E), $y_5$ being a value (wt.%) represented by the following Equation (5):

$$1000y_5 = L_5x^3 + M_5x^2 + N_5x + P_5 \quad (5)$$

$L_5 = 0.00000023a^2 + 0.00002804a + 0.00555714$
$M_5 = 0.00005254a^2 - 0.02547864a - 0.98317143$
$N_5 = -0.00620893a^2 + 2.10902500a + 54.78428571$
$P_5 = 0.03244643a^2 - 9.08525000a - 3109.01428571$

According to the refrigerant mixture filling method of the present disclosure, even when a source container is filled with the refrigerant mixture in an amount equal to 100 wt.% of the maximum filling amount, the composition change in a target container and/or equipment can be kept within a range from the target upper-limit composition (x) wt.% - 3.0 wt.% (target lower-limit composition) to the target upper-limit composition (x) wt.% until completion of transfer,

by adjusting the proportion of HFO-1132(E) in the liquid phase of the mixture in the source container before transfer to a specific range.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

The value a (wt.%) is usually set to $60 \leq a \leq 100$.

When the refrigerant mixture in a liquid state is transferred from a source container to a target container and/or equipment, a smaller initial filling amount in the source container results in a smaller composition change due to transfer during the transfer. Therefore, an equation that satisfies a filling method in which the initial filling amount is a wt.% is also satisfied in a filling method in which the initial filling amount is a wt.% or less.

An equation that satisfies a filling method in which the initial filling amount is 100 wt.% is also satisfied in a filling method in which the initial filling amount is 100 to 0 wt.%. An equation that satisfies a filling method in which the initial filling amount is 90 wt.% is also satisfied in a filling method in which the initial filling amount is 90 to 0 wt.%. An equation that satisfies a filling method in which the initial filling amount is 80 wt.% is also satisfied in a filling method in which the initial filling amount is 80 to 0 wt.%. An equation that satisfies a filling method in which the initial filling amount is 70 wt.% is also satisfied in a filling method in which the initial filling amount is 70 to 0 wt.%. An equation that satisfies a filling method in which the initial filling amount is 60 wt.% is also satisfied in a filling method in which the initial filling amount is 60 to 0 wt.%. An equation that satisfies a filling method in which the initial filling amount is 50 wt.% is also satisfied in a filling method in which the initial filling amount is 50 to 0 wt.%.

Proportion of HFO-1132(E) in the liquid phase of the refrigerant mixture in a source container

The present disclosure has a feature in that the proportion of HFO-1132(E) in the liquid phase of the refrigerant mixture in a source container before transfer (initial composition) is adjusted to $(x + y_5)$ wt.% (minimum value) or higher and x wt.% (target upper-limit composition) or lower

in order to keep the proportion of HFO-1132(E) within a range from the target upper-limit composition (x) wt.% of HFO-1132(E) - 3.0 wt.% (target lower-limit composition) to the target upper-limit composition (x) wt.%.

x is a target upper-limit composition (wt.%) of HFO-1132(E) and is in the range of $11.5 \leq x \leq 29.9$ or $60.2 \leq x \leq 91.5$, with the proviso that the range of x where $y_5 > 0$ is excluded.

$y_5$ is a lower limit of a gap between the initial composition (wt.%) of HFO-1132(E) and the target upper-limit composition (wt.%) of HFO-1132(E).

$(x + y_5)$ wt.% is a minimum value of the proportion (initial composition) of HFO-1132(E) in the liquid phase of the refrigerant mixture in a source container.

The difference between the target upper-limit composition and the target lower-limit composition is referred to as a "tolerance" ("composition tolerance"). The tolerance is determined when the composition of a refrigerant mixture is registered in the ASHRAE Standard 2013 (Designation and Safety Classification of Refrigerants) and the like.

The following describes a case in which the mixture ratio (wt.%) of HFO-1132(E) and HFO-1234yf in a refrigerant mixture comprising HFO-1132(E) and HFO-1234yf is, for example, 50:50.

In a refrigerant mixture comprising HFO-1132(E) and HFO-1234yf, for example, when the tolerance for each of HFO-1132(E) and HFO-1234yf is set at $\pm 1.5$, the target upper-limit composition of HFO-1132(E) is 51.5 wt.%, and the target lower-limit composition of HFO-1132(E) is 48.5 wt.%. Thus, in the refrigerant mixture, the difference between the target upper-limit composition and the target lower-limit composition is 3.0 wt.%.

Filling method with different initial filling amounts of the refrigerant mixture in a source container

(2-2) Case in which the initial filling amount in a source container is 100 wt.% of the maximum filling amount (45°C/3.0 wt.%/100 wt.%)

The following describes a case in which the initial filling amount of the refrigerant mixture in a source container is 100 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 29.9 wt.% or 60.2 to 91.5 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,

the proportion of HFO-1132(E) in the liquid phase of the refrigerant mixture in the source container before the transfer (initial composition) is preferably adjusted to $(x + y_{5-1})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 3.0 wt.% (target lower-limit composition) during the transfer.

x is a target upper-limit composition of HFO-1132(E) (with the proviso that $11.5 \leq x \leq 29.9$ or $60.2 \leq x \leq 91.5$).

$y_{5-1}$ is a lower limit of a gap between the initial composition of HFO-1132(E) and the target upper-limit composition of HFO-1132(E) and is represented by the following Equation (5-1).

$$1000y_{5-1} = 0.0107x^3 - 3.0135x^2 + 203.89x - 3688.7 \quad (5\text{-}1)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition $(x)$ - 3.0 wt.% (target lower-limit composition) to the target upper-limit composition $(x)$ until completion of transfer,

by adjusting the proportion of HFO-1132(E) in the liquid phase of the mixture in the source container before transfer to about x - 2.1 wt.% to x wt.% according to Equation (5-1) above.

In the refrigerant mixture filling method in which the composition change of the refrigerant mixture comprising HFO-1132(E) and HFO-1234yf in a target container and/or equipment is kept within a range from the target upper-limit composition $(x)$ wt.% - 3.0 wt.% (target lower-limit composition) to the target upper-limit composition $(x)$ wt.% until completion of transfer, the upper limit of the proportion of HFO-1132(E) in the liquid phase of the refrigerant mixture comprising HFO-1132(E) and HFO-1234yf is the target upper-limit composition of HFO-1132(E).

When HFO-1132(E) is contained in an amount of 90 wt.%, the composition change is small; therefore, even when the initial composition of HFO-1132(E) is about -2.1 wt.% relative to the target upper-limit composition, the proportion of HFO-1132(E) in the liquid phase of the mixture can be kept within a range from the target upper-limit composition $(x)$ - 3.0 wt.% (target lower-limit composition) to the target upper-limit composition $(x)$ until completion of transfer.

<u>(2-3) Case in which the initial filling amount in a source container is 90 wt.% of the maximum filling amount (45°C/3.0 wt.%/90 wt.%)</u>

The following describes a case in which the initial filling amount of the refrigerant mixture in a source container is 90 wt.% of the maximum filling amount and in which the proportion of HFO-1132(E) in the liquid phase of the refrigerant mixture in the source container is kept within a range from the target upper-limit composition $(x)$ wt.% - 3.0 wt.% (target lower-limit composition) to the target upper-limit composition $(x)$ wt.%.

In the refrigerant mixture filling method of the present disclosure in which the filling amount of the refrigerant mixture in a target container and/or equipment is appropriately adjusted,

when a refrigerant mixture comprising HFO-1132(E) and HFO-1234yf wherein HFO-1132(E) is present in the liquid phase of the refrigerant mixture in an amount of 10 to 33.1 wt.% or 56.9 to 91.5 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,

the proportion of HFO-1132(E) in the liquid phase of the refrigerant mixture in the source container before the transfer (initial composition) is preferably adjusted to $(x + y_{2-2})$ wt.% (minimum value) or higher and x wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% -3.0 wt.% (target lower-limit composition) during the transfer.

x is a target upper-limit composition of HFO-1132(E) (with the proviso that $11.5 \leq x \leq 33.1$ or $56.9 \leq x \leq 91.5$).

$y_{5-2}$ is a lower limit of a gap between the initial composition of HFO-1132(E) and the target upper-limit composition of HFO-1132(E) and is represented by the following Equation (5-2).

$$1000y_{5-2} = 0.0101x^3 - 2.8585x^2 + 194.42x - 3668.8 \quad (5-2)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 3.0 wt.% (target lower-limit composition) to the target upper-limit composition (x) until completion of transfer,

by adjusting the proportion of HFO-1132(E) in the liquid phase of the mixture in the source container before transfer to about x - 2.1 wt.% to x wt.% according to Equation (5-2) above.

When HFO-1132(E) is contained in an amount of 90 wt.%, the composition change is small; therefore, even when the initial composition of HFO-1132(E) is about -2.1 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

<u>(2-4) Case in which the initial filling amount in a source container is 80 wt.% of the maximum filling amount (45°C/3.0 wt.%/80 wt.%)</u>

The following describes a case in which the initial filling amount of the refrigerant mixture in a source container is 80 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

In the refrigerant mixture filling method of the present disclosure,

when a refrigerant mixture comprising HFO-1132(E) and HFO-1234yf,

wherein the HFO-1132(E) is present in the liquid phase of the refrigerant mixture in an amount of 10 to 39.3 wt.% or 50.1 to 91.5 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container before the transfer (initial composition) is preferably adjusted to $(x + y_{5-3})$ wt.% (minimum value) or higher and x wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leq x \leq 39.3$ or $50.1 \leq x \leq 91.5$).

$y_{5-3}$ is a lower limit of a gap between the initial composition of HFO-1132(E) and the target upper-limit composition of HFO-1132(E) and is represented by the following Equation (5-3).

$$1000y_{5-3} = 0.0091x^3 - 2.6673x^2 + 183.65x - 3649.7 \quad (5-3)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 3.0 wt.% (target lower-limit composition) to the target upper-limit composition (x) until completion of transfer,

by adjusting the proportion of HFO-1132(E) in the liquid phase of the mixture in the source container before transfer to about x - 2.2 wt.% to x wt.% according to Equation (5-3) above.

When HFO-1132(E) is contained in an amount of 90 wt.%, the composition change is small; therefore, even when the initial composition of HFO-1132(E) is about -2.2 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-5) Case in which the initial filling amount in a source container is 70 wt.% of the maximum filling amount (45°C/3.0 wt.%/70 wt.%)

The following describes a case in which the initial filling amount of the refrigerant mixture in a source container is 70 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

In the refrigerant mixture filling method of the present disclosure in which the filling amount of the refrigerant mixture in a target container and/or equipment is appropriately adjusted,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container before the transfer (initial composition) is preferably adjusted to $(x + y_{5-4})$ wt.% (minimum value) or higher and x wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

x is a target upper-limit composition of HFO-1132(E) (with the proviso that $11.5 \leq x \leq 91.5$).

$y_{5-4}$ is a lower limit of a gap between the initial composition of HFO-1132(E) and the target upper-limit composition of HFO-1132(E) and is represented by the following Equation (5-4).

$$1000y_{5-4} = 0.0082x^3 - 2.4381x^2 + 168.73x - 3535.6 \quad (5-4)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 3.0 wt.% (target lower-limit composition) to the target upper-limit composition (x) until completion of transfer,
by adjusting the proportion of HFO-1132(E) in the liquid phase of the mixture in the source container before transfer to about x - 2.2 wt.% to x wt.% according to Equation (5-4) above.

When HFO-1132(E) is contained in an amount of 90 wt.%, the composition change is small; therefore, even when the initial composition of HFO-1132(E) is about -2.2 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-6) Case in which the initial filling amount in a source container is 60 wt.% of the maximum filling amount (45°C/3.0 wt.%/60 wt.%)

The following describes a case in which the initial filling amount of the refrigerant mixture in a source container is 60 wt.% of the maximum filling amount and in which the proportion of HFO-1132(E) in the liquid phase of the refrigerant mixture in the source container is kept within a range from the target upper-limit composition (x) wt.% - 3.0 wt.% (target lower-limit composition) to the target upper-limit composition (x) wt.%.

The refrigerant mixture filling method of the present disclosure has a feature in that

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container before the transfer (initial composition) is adjusted to $(x + y_{5-5})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 3.0 wt.% (target lower-limit composition) during the transfer.

x is a target upper-limit composition of HFO-1132(E) (with the proviso that $11.5 \leq x \leq 91.5$).

$y_{5-5}$ is a lower limit of a gap between the initial composition of HFO-1132(E) and the target upper-limit composition of HFO-1132(E) and is represented by the following Equation (2-5).

$$1000y_{5-5} = 0.0089x^3 - 2.4486x^2 + 163.93x - 3575.7 \quad (5-5)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition $(x)$ - 3.0 wt.% (target lower-limit composition) to the target upper-limit composition $(x)$ until completion of transfer,

by adjusting the proportion of HFO-1132(E) in the liquid phase of the mixture in the source container before transfer to about x - 2.2 wt.% to x wt.% according to Equation (5-5) above.

When HFO-1132(E) is contained in an amount of 90 wt.%, the composition change is small; therefore, even when the initial composition of HFO-1132(E) is about -2.2 wt.% relative to the target upper-limit composition, the proportion of HFO-1132(E) in the liquid phase of the mixture can be kept within a range from the target upper-limit composition $(x)$ - 3.0 wt.% (target lower-limit composition) to the target upper-limit composition $(x)$ until completion of transfer.

(2-7) Case in which the initial filling amount in a source container is 50 wt.% of the maximum filling amount (45°C/3.0 wt.%/50 wt.%)

The following describes a case in which the initial filling amount of the refrigerant mixture in a source container is 50 wt.% of the maximum filling amount and in which the proportion of HFO-1132(E) in the liquid phase of the refrigerant mixture in the source container is kept within a range from the target upper-limit composition $(x)$ wt.% - 3.0 wt.% (target lower-limit composition) to the target upper-limit composition $(x)$ wt.%.

The refrigerant mixture filling method according to the present disclosure has a feature in that

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,

the proportion of HFO-1132(E) in the liquid phase of the refrigerant mixture in the source container before the transfer (initial composition) is adjusted to $(x + Y_{5-6})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 3.0 wt.% (target lower-limit composition) during the transfer.

x is a target upper-limit composition of HFO-1132(E) (with the proviso that $11.5 \leq x \leq 91.5$).

$Y_{5-6}$ is a lower limit of a gap between the initial composition of HFO-1132(E) and the target upper-limit composition of HFO-1132(E) and is represented by the following Equation (2-6).

$$1000y_{5-6} = 0.0072x^3 - 2.0734x^2 + 142.73x - 3472.1 \quad (5-6)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 3.0 wt.% (target lower-limit composition) to the target upper-limit composition (x) until completion of transfer,

by adjusting the proportion of HFO-1132(E) in the liquid phase of the mixture in the source container before transfer to about x - 2.3 wt.% to x wt.% according to Equation (5-6) above.

When HFO-1132(E) is contained in an amount of 90 wt.%, the composition change is small; therefore, even when the initial composition of HFO-1132(E) is about -2.3 wt.% relative to the target upper-limit composition, the proportion of HFO-1132(E) in the liquid phase of the mixture can be kept within a range from the target upper-limit composition (x) - 3.0 wt.% (target lower-limit composition) to the target upper-limit composition (x) until completion of transfer.

(2-8) Filling method for a non-azeotropic refrigerant mixture comprising HFO-1132(E) and HFO-1234yf

The following describes a non-azeotropic refrigerant mixture filling method for keeping the proportion of HFO-1132(E) within a range from the target upper-limit composition (x) wt.% of HFO-1132(E) - 3.0 wt.% (target lower-limit composition) to the target upper-limit composition (x) wt.%, the non-azeotropic refrigerant mixture comprising HFO-1132(E) and HFO-1234yf.

Equation (5) can be derived from Equations (5-1) to (5-6). Based on the value of each coefficient in Equations (5-1) to (5-6), $L_5$, $M_5$, $N_5$, and $P_5$ of Equation (5) can be calculated from the target upper-limit composition (x) wt.% with respect to the initial filling amount (a wt.%).

The refrigerant mixture filling method of the present disclosure has a feature in that

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container to a target container and/or equipment,

the proportion of HFO-1132(E) in the liquid phase of the refrigerant mixture in the source container before the transfer (initial composition) is adjusted to $(x + y_2)$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 3.0 wt.% (target lower-limit composition) during the transfer.

According to the concept of the present disclosure, when the difference between the target upper-limit composition (x) wt.% and the target lower-limit composition is -3.0 wt.% and when a source container is filled with the refrigerant mixture in an amount equal to or less than 100 wt.% of the maximum filling amount, $y_{5-1} > 0$ in the range of 29.9 < x < 60.2. Therefore, x is in the range of 11.5 wt.% to 29.9 wt.% or 60.2 wt.% to 91.5 wt.%.

When a source container is filled with the refrigerant mixture in an amount equal to or less than 90 wt.% of the maximum filling amount, $y_{5-2} > 0$ in the range of 33.1 < x < 56.9. Therefore, x is in the range of 11.5 wt.% to 33.1 wt.% or 56.9 wt.% to 91.5 wt.%.

When a source container is filled with the refrigerant mixture in an amount equal to or less than 80 wt.% of the maximum filling amount, $y_{5-3} > 0$ in the range of 39.3 < x < 50.1. Therefore, x is in the range of 11.5 wt.% to 39.3 wt.% or 50.1 wt.% to 91.5 wt.%.

a: an initial filling amount (wt.%) in the source container;

x: a target upper-limit composition of HFO-1132(E) (wt.%, $11.5 \leq x \leq 29.9$ or $60.2 \leq x \leq 91.5$, excluding the range where $y_5 > 0$);

$y_5$: a lower limit of a gap between the initial composition of HFO-1132(E) and the target upper-limit composition of HFO-1132(E), $y_5$ being a value (wt.%) represented by the following Equation (5):

$$1000y_5 = L_5x^3 + M_5x^2 + N_5x + P_5 \quad (5)$$

$L_5 = 0.00000023a^2 + 0.00002804a + 0.00555714$
$M_5 = 0.00005254a^2 - 0.02547864a - 0.98317143$
$N_5 = -0.00620893a^2 + 2.10902500a + 54.78428571$

$P_5 = 0.03244643a^2 - 9.08525000a - 3109.01428571$

(3) Filling method in which the difference between the target upper-limit composition and the target lower-limit composition is 2.0 wt.%

Refrigerant mixture filling method at 45°C (range from the upper limit (wt.%) to (the upper limit - 2.0) (wt.%))

The following describes a mixture ratio of the refrigerant mixture in a source container before transfer of the refrigerant mixture from the source container to a target container and/or equipment

to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

The "target upper-limit composition," i.e., "(x) wt.%," is a maximum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

x (wt.%) is a numerical value within the range of $11 \leq x \leq 91$.

The "target lower-limit composition," i.e., "(x) wt% - 2.0 wt.%," is a minimum acceptable value in the range of the proportion of HFO-1132(E) in the overall composition (liquid phase and gas phase) of the refrigerant mixture comprising HFO-1132(E) and HFO-1234yf, the proportion being required in a target container and/or equipment.

(3-1) Filling method in which the difference between the target upper-limit composition and the target lower-limit composition is 2.0 wt.%

The refrigerant mixture filling method according to the present disclosure in which the filling amount of the refrigerant mixture in a target container and/or equipment is appropriately adjusted has a feature in that

when a refrigerant mixture comprising HFO-1132(E) and HFO-1234yf wherein HFO-1132(E) is present in the liquid phase of the refrigerant in an amount of 10 to 91 wt.% based on the total of HFO-1132(E) and HFO-1234yf taken as 100 wt.% is transferred in a liquid state from a source container to a target container and/or equipment,

the proportion of HFO-1132(E) in the liquid phase of the refrigerant mixture in the source container before the transfer (initial composition) is adjusted to $(x + y_6)$ wt.% (minimum value) or higher and (x) wt.% (target upper-limit composition) or lower

in order to keep the proportion of HFO-1132(E) in the liquid phase of the refrigerant mixture in the source container within a range from (x) wt.% of HFO-1132(E) (target upper-limit composition) to (x) wt.% - 2.0 wt.% (target upper-limit composition) during the transfer.

a: an initial filling amount (wt.%) in the source container;

x: a target upper-limit composition of HFO-1132(E) (wt.%, $11 \leq x \leq 16.1$ or $76.6 \leq x \leq 91$, excluding the range where $Y_6 > 0$);

$y_6$: a lower limit of a gap between the initial composition of HFO-1132(E) and the target upper-limit composition of HFO-1132(E), $y_6$ being a value (wt.%) represented by the following Equation (6):

$$1000y_6 = L_6x^3 + M_6x^2 + N_6x + P_6 \quad (6)$$

$L_6 = -0.00000229a^2 + 0.00040314a - 0.00802857$
$M_6 = 0.00040107a^2 - 0.07670157a + 0.88952857$
$N_6 = -0.02104464a^2 + 4.23275357a - 25.47571429$
$P_6 = 0.21416071a^2 - 33.68810714a - 1107.64285714$

According to the refrigerant mixture filling method of the present disclosure, even when a source container is filled with the refrigerant mixture in an amount equal to 100 wt.% of the maximum filling amount, the composition change in a target container and/or equipment can be kept within a range from the target upper-limit composition (x) wt.% - 2.0 wt.% (target lower-limit composition) to the target upper-limit composition (x) wt.% until completion of transfer,

by adjusting the proportion of HFO-1132(E) in the liquid phase of the mixture in the source container before transfer to a specific range.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

The value a (wt.%) is usually set to $60 \leq a \leq 100$.

When the refrigerant mixture is transferred in a liquid state from a source container to a target container and/or equipment, a smaller initial filling amount in a source container results in a smaller composition change due to transfer during the transfer. Therefore, an equation that satisfies a filling method in which the initial filling amount is a wt.% is also satisfied in a filling method in which the initial filling amount is a wt.% or less.

An equation that satisfies a filling method in which the initial filling amount is 100 wt.% is also satisfied in a filling method in which the initial filling amount is 100 to 0 wt.%. An equation that satisfies a filling method in which the initial filling amount is 90 wt.% is also satisfied in a filling method in which the initial filling amount is 90 to 0 wt.%. An equation that satisfies a filling method in which the initial filling amount is 80 wt.% is also satisfied in a filling method in which the initial filling amount is 80 to 0 wt.%. An equation that satisfies a filling method in which the initial filling amount is 70 wt.% is also satisfied in a filling method in which the initial filling amount is 70 to 0 wt.%. An equation that satisfies a filling method in which the initial filling amount is 60 wt.% is also satisfied in a filling method in which the initial filling amount is 60 to 0 wt.%. An equation that satisfies a filling method in which the initial filling amount is 50 wt.% is also satisfied in a filling method in which the initial filling amount is 50 to 0 wt.%.

Proportion of HFO-1132(E) in the liquid phase of the refrigerant mixture in a source container

The present disclosure has a feature in that the proportion of HFO-1132(E) in the liquid phase of the refrigerant mixture in a source container before transfer (initial composition) is adjusted to $(x + y_6)$ wt.% (minimum value) or higher and x wt.% (target upper-limit composition) or lower

in order to keep the proportion of HFO-1132(E) within a range from the target upper-limit composition (x) wt.% of HFO-1132(E) - 2.0 wt.% (target lower-limit composition) to the target upper-limit composition (x) wt.%.

x is a target upper-limit composition (wt.%) of HFO-1132(E) and is in the range of $11 \leq x \leq 16.1$ or $76.6 \leq x \leq 91$, with the proviso that the range of x where $y_6 > 0$ is excluded.

$y_6$ is a lower limit of a gap between the initial composition (wt.%) of HFO-1132(E) and the target upper-limit composition (wt.%) of HFO-1132(E).

$(x + y_6)$ wt.% is a minimum value of the proportion (initial composition) of HFO-1132(E) in the liquid phase of the refrigerant mixture in a source container.

The difference between the target upper-limit composition and the target lower-limit composition is referred to as a "tolerance" ("composition tolerance"). The tolerance is determined when the composition of a refrigerant mixture is registered in the ASHRAE Standard 2013 (Designation and Safety Classification of Refrigerants) and the like.

The following describes a case in which the mixture ratio (wt.%) of HFO-1132(E) and HFO-1234yf in a refrigerant mixture comprising HFO-1132(E) and HFO-1234yf is, for example, 50:50.

In a refrigerant mixture comprising HFO-1132(E) and HFO-1234yf, for example, when the tolerance for each of HFO-1132(E) and HFO-1234yf is set at $\pm 1.0$, the target upper-limit composition of HFO-1132(E) is 51.0 wt.%, and the target lower-limit composition of HFO-1132(E) is 49.0 wt.%. Thus, in the refrigerant mixture, the difference between the target upper-limit composition and the target lower-limit composition is 2.0 wt.%.

Filling method with different initial filling amounts of the refrigerant mixture in a source container

(3-2) Case in which the initial filling amount in a source container is 100 wt.% of the maximum filling amount (45°C/2.0 wt.%/100 wt.%)

The following describes a case in which the initial filling amount of the refrigerant mixture in a source container is 100 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 16.1 wt.% or 76.6 to 91 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,

the proportion of HFO-1132(E) in the liquid phase of the refrigerant mixture in the source container before the transfer (initial composition) is preferably adjusted to $(x + y_{6-1})$ wt.% (minimum value) or higher and $(x)$ wt.% (target upper-limit composition) or lower

in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 2.0 wt.% (target lower-limit composition) during the transfer.

x is a target upper-limit composition of HFO-1132(E) (with the proviso that $11 \le x \le 16.1$ or $76.6 \le x \le 91$).

$y_{6-1}$ is a lower limit of a gap between the initial composition of HFO-1132(E) and the target upper-limit composition of HFO-1132(E) and is represented by the following Equation (6-1) .

$$1000y_{6-1} = 0.0097x^3 - 2.8139x^2 + 189.47x - 2363.2 \quad (6\text{-}1)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition $(x)$ - 2.0 wt.% (target lower-limit composition) to the target upper-limit composition $(x)$ until completion of transfer,
by adjusting the proportion of HFO-1132(E) in the liquid phase of the mixture in the source container before transfer to about x - 1.1 wt.% to x wt.% according to Equation (6-1) above.

In the refrigerant mixture filling method for keeping the composition change of the refrigerant mixture comprising HFO-1132(E) and HFO-1234yf in a target container and/or equipment within a range from the target upper-limit composition $(x)$ wt.% - 2.0 wt.% (target lower-limit composition) to the target upper-limit composition $(x)$ wt.% until completion of transfer, the upper limit of the proportion of HFO-1132(E) in the liquid phase of the refrigerant mixture comprising HFO-1132(E) and HFO-1234yf is the target upper-limit composition of HFO-1132(E).

When HFO-1132(E) is contained in an amount of 90 wt.%, the composition change is small; therefore, even when the initial composition of HFO-1132(E) is about -1.1 wt.% relative to the target upper-limit composition, the proportion of HFO-1132(E) in the liquid phase of the mixture can be kept within a range from the target upper-limit composition $(x)$ - 2.0 wt.% (target lower-limit composition) to the target upper-limit composition $(x)$ until completion of transfer.

(3-3) Case in which the initial filling amount in a source container is 90 wt.% of the maximum filling amount (45°C/2.0 wt.%/90 wt.%)

The following describes a case in which the initial filling amount of the refrigerant mixture in a source container is 90 wt.% of the maximum filling amount and in which the proportion of HFO-1132(E) in the liquid phase of the refrigerant mixture in the source container is kept within a range from the target upper-limit composition $(x)$ wt.% - 2.0 wt.% (target lower-limit composition) to the target upper-limit composition $(x)$ wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 17.1 wt.% or 75.5 to 91 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container before the transfer (initial composition) is preferably adjusted to $(x + y_{6-2})$ wt.% (minimum value) or higher and $(x)$ wt.% (target upper-limit composition) or lower
in order to keep the proportion of HFO-1132(E) in the liquid phase of the refrigerant mixture in the source container within a range from the target upper-limit composition $(x)$ wt.% of HFO-1132(E) to the target upper-limit composition $(x)$ wt.% - 2.0 wt.% (target lower-limit composition) during the transfer.

x is a target upper-limit composition of HFO-1132(E) (with the proviso that $11 \le x \le 17.1$ or $75.5 \le x \le 91$).

$y_{6-2}$ is a lower limit of a gap between the initial composition of HFO-1132(E) and the target upper-limit composition of HFO-1132(E) and is represented by the following Equation (6-2) .

$$1000y_{6-2} = 0.0092x^3 - 2.6794x^2 + 181.13x - 2358.5 \quad (6-2)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer,
by adjusting the proportion of HFO-1132(E) in the liquid phase of the mixture in the source container before transfer to about x - 1.2 wt.% to x wt.% according to Equation (6-2) above.

When HFO-1132(E) is contained in an amount of 90 wt.%, the composition change is small; therefore, even when the initial composition of HFO-1132(E) is about -1.2 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-4) Case in which the initial filling amount in a source container is 80 wt.% of the maximum filling amount (45°C/2.0 wt.%/80 wt.%)

The following describes a case in which the initial filling amount of the refrigerant mixture in a source container is 80 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 18.2 wt.% or 73.8 to 91 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,
the proportion of HFO-1132(E) in the liquid phase of the refrigerant mixture in the source container before the transfer (initial composition) is preferably adjusted to $(x + y_{6-3})$ wt.% (minimum value) or higher and x wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 18.2$ or $73.8 \leq x \leq 91$).
$y_{6-3}$ is a lower limit of a gap between the initial composition of HFO-1132(E) and the target upper-limit composition of HFO-1132(E) and is represented by the following Equation (6-3) .

$$1000y_{6-3} = 0.0096x^3 - 2.6718x^2 + 177.45x - 2404.6 \quad (6-3)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer,
by adjusting the proportion of HFO-1132(E) in the liquid phase of the mixture in the source container before transfer to about x - 1.2 wt.% to x wt.% according to Equation (6-3) above.

When HFO-1132(E) is contained in an amount of 90 wt.%, the composition change is small; therefore, even when the initial composition of HFO-1132(E) is about -1.2 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-5) Case in which the initial filling amount in a source container is 70 wt.% of the maximum filling amount (45°C/2.0 wt.%/70 wt.%)

The following describes a case in which the initial filling amount of the refrigerant mixture in a source container is 70 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 20.1 wt.% or 71.3 to 91 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container before the transfer (initial composition) is preferably adjusted to $(x + y_{6-4})$ wt.% (minimum value) or higher and x wt.% (target upper-limit composition) or lower
in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 20.1$ or $71.3 \leq x \leq 91$).

$y_{6-4}$ is a lower limit of a gap between the initial composition of HFO-1132(E) and the target upper-limit composition of HFO-1132(E) and is represented by the following Equation (6-4) .

$$1000y_{6-4} = 0.0095x^3 - 2.6115x^2 + 172.84x - 2493.5 \quad (6-4)$$

In the present disclosure,

when a refrigerant mixture comprising HFO-1132(E) and HFO-1234yf is transferred from a source container to a target container and/or equipment,
the composition change in the target container and/or equipment can be kept within a range from the target upper-limit composition (x) - 2.0 wt.% (target lower-limit composition) to the target upper-limit composition (x) until completion of transfer
by adjusting the proportion of HFO-1132(E) in the liquid phase of the mixture in the source container before transfer to about x - 1.2 wt.% to x wt.% according to Equation (6-4) above.

When HFO-1132(E) is contained in an amount of 90 wt.%, the composition change is small; therefore, even when the initial composition of HFO-1132(E) is about -1.2 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-6) Case in which the initial filling amount in a source container is 60 wt.% of the maximum filling amount (45°C/2.0 wt.%/60 wt.%)

The following describes a case in which the initial filling amount of the refrigerant mixture in a source container is 60 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 22.2 wt.% or 69.1 to 91 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container before the transfer (initial composition) is preferably adjusted to (x + $y_{6-5}$) wt.% (minimum value) or higher and x wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 22.2$ or $69.1 \leq x \leq 91$).

$y_{6-5}$ is a lower limit of a gap between the initial composition of HFO-1132(E) and the target upper-limit composition of HFO-1132(E) and is represented by the following Equation (6-5).

$$1000y_{6-5} = 0.0077x^3 - 2.2204x^2 + 150.41x - 2329.9 \quad (6-5)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 2.0 wt.% (target lower-limit composition) to the target upper-limit composition (x) until completion of transfer,

by adjusting the proportion of HFO-1132(E) in the liquid phase of the mixture in the source container before transfer to about x - 1.2 wt.% to x wt.% according to Equation (6-5) above.

When HFO-1132(E) is contained in an amount of 90 wt.%, the composition change is small; therefore, even when the initial composition of HFO-1132(E) is about -1.2 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-7) Case in which the initial filling amount in a source container is 50 wt.% of the maximum filling amount (45°C/2.0 wt.%/50 wt.%)

The following describes a case in which the initial filling amount of the refrigerant mixture in a source container is 50 wt.% of the maximum filling amount and in which the proportion of HFO-1132(E) in the liquid phase of the refrigerant mixture in the source container is kept within a range from the target upper-limit composition (x) wt.% - 2.0 wt.% (target lower-limit composition) to the target upper-limit composition (x) wt.%.

In the refrigerant mixture filling method according to the present disclosure,

when a refrigerant mixture comprising HFO-1132(E) and HFO-1234yf wherein HFO-1132(E) is present in the liquid phase of the refrigerant mixture in an amount of 10 to 25.6 wt.% or 64.2 to 91 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,

the proportion of HFO-1132(E) in the liquid phase of the refrigerant mixture in the source container before the transfer (initial composition) is preferably adjusted to (x + $y_{6-6}$) wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

x is a target upper-limit composition of HFO-1132(E) (with the proviso that $11 \leq x \leq 25.6$ or $64.2 \leq x \leq 91$).

$y_{6-6}$ is a lower limit of a gap between the initial composition of HFO-1132(E) and the target upper-limit composition of HFO-1132(E) and is represented by the following Equation (6-6).

$$1000y_{6-6} = 0.0064x^3 - 1.9435x^2 + 133.5x - 2253.1 \quad (6-6)$$

In the present disclosure,

when a refrigerant mixture comprising HFO-1132(E) and HFO-1234yf is transferred from a source container to a target container and/or equipment,

the composition change in the target container and/or equipment can be kept within a range from the target upper-limit composition (x) - 2.0 wt.% (target lower-limit composition) to the target upper-limit composition (x) until completion of transfer,

by adjusting the proportion of HFO-1132(E) in the liquid phase of the mixture in the source container before transfer to about x - 1.3 wt.% to x wt.% according to Equation (6-6) above.

When HFO-1132(E) is contained in an amount of 90 wt.%, the composition change is small; therefore, even when the initial composition of HFO-1132(E) is about -1.3 wt.% relative to the target upper-limit composition, the proportion of HFO-1132(E) in the liquid phase of the mixture can be kept within a range from the target upper-limit composition (x) - 2.0 wt.% (target lower-limit composition) to the target upper-limit composition (x) until completion of transfer.

(3-8) Filling method for a non-azeotropic refrigerant mixture comprising HFO-1132(E) and HFO-1234yf

The following describes a filling method for keeping the proportion of HFO-1132(E) in a non-azeotropic refrigerant mixture comprising HFO-1132(E) and HFO-1234yf within a range from the target upper-limit composition (x) wt.% of HFO-1132(E) - 2.0 wt.% (target lower-limit composition) to the target upper-limit composition (x) wt.%.

Equation (6) can be derived from Equations (6-1) to (6-6). Based on the value of each coefficient in Equations (6-1) to (6-6), $L_6$, $M_6$, $N_6$, and $P_6$ of Equation (3) can be calculated from the target upper-limit composition (x) with respect to the initial filling amount (a wt.%).

The refrigerant mixture filling method of the present disclosure has a feature in that

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container to a target container and/or equipment, the proportion of HFO-1132(E) in the liquid phase of the refrigerant mixture in the source container before the transfer (initial composition) is adjusted to $(x + y_3)$ wt.% (minimum value) or higher and (x) wt.% (target upper-limit composition) or lower

in order to keep the proportion of HFO-1132(E) in the liquid phase of the refrigerant mixture in the source container within a range from the target upper-limit composition (x) wt.% of HFO-1132(E) to the target upper-limit composition (x) wt.% - 2.0 wt.% (target lower-limit composition) during the transfer.

According to the concept of the present disclosure, when the difference between the target upper-limit composition (x) and the target lower-limit composition is -2.0 wt.% and when a source container is filled with the refrigerant mixture in an amount equal to or less than 100 wt.% of the maximum filling amount, $y_{6-1} > 0$ in the range of $16.1 < x < 76.6$. Therefore, x is in the range of 11 wt.% to 16.1 wt.% or 76.1 wt.% to 91.0 wt.%.

When a source container is filled with the refrigerant mixture in an amount equal to or less than 90 wt.% of the maximum filling amount, $y_{6-2} > 0$ in the range of $17.1 < x < 75.5$. Therefore, x is in the range of 11 wt.% to 17.1 wt.% or 75.5 wt.% to 91 wt.%.

When a source container is filled with the refrigerant mixture in an amount equal to or less than 80 wt.% of the maximum filling amount, $y_{6-3} > 0$ in the range of $18.2 < x < 73.8$. Therefore, x is in the range of 11 wt.% to 18.2 wt.% or 73.8 wt.% to 91 wt.%.

When a source container is filled with the refrigerant mixture in an amount equal to or less than 70 wt.% of the maximum filling amount, $y_{6-4} > 0$ in the range of $20.1 < x < 71.3$. Therefore, x is in the range of 11 wt.% to 20.1 wt.% or 71.3 wt.% to 91 wt.%.

When a source container is filled with the refrigerant mixture in an amount equal to or less than 60 wt.% of the maximum filling amount, $y_{6-5} > 0$ in the range of $22.2 < x < 69.1$. Therefore, x is in the range of 11 wt.% to 22.2 wt.% or 69.1 wt.% to 91 wt.%.

When a source container is filled with the refrigerant mixture in an amount equal to or less than 50 wt.% of the maximum filling amount, $y_{6-5} > 0$ in the range of $25.6 < x < 64.2$. Therefore, x is in the range of 11 wt.% to 25.6 wt.% or 64.2 wt.% to 91 wt.%.

a: an initial filling amount (wt.%) in the source container;

x: a target upper-limit composition of HFO-1132(E) (wt.%, $11 \leq x \leq 16.1$ or $76.6 \leq x \leq 91$, excluding the range where $y_6 > 0$);

$y_6$: a lower limit of a gap between the initial composition of HFO-1132(E) and the target upper-limit composition of HFO-1132(E), $y_6$ being a value (wt.%) represented by the following Equation (6):

$$1000y_6 = L_6x^3 + M_6x^2 + N_6x + P_6 \quad (6)$$

$L_6 = -0.00000229a^2 + 0.00040314a - 0.00802857$
$M_6 = 0.00040107a^2 - 0.07670157a + 0.88952857$
$N_6 = -0.02104464a^2 + 4.23275357a - 25.47571429$
$P_6 = 0.21416071a^2 - 33.68810714a - 1107.64285714$

Filling method for various filling amounts

[3] Refrigerant mixture filling method in which a value calculated by using a value obtained by dividing 1.05 by the specific gravity of the gas (refrigerant mixture comprising HFO-1132(E) and HFO-1234yf) at 65°C as a fill constant is defined as 100 wt.% of the filling amount

The following is one example of a transfer method in which the handling temperature during transfer is 40°C. Under the High Pressure Gas Safety Act of Japan, handling containers at temperatures exceeding 40°C is prohibited; therefore, the handling temperature during transfer in Japan is 0°C to 40°C.

The higher the temperature during transfer (handling), the greater the composition change due to transfer during the transfer when transferring a refrigerant mixture in a liquid state from a source container to a target container and/or equipment. Therefore, the transfer method is also applicable at a handling temperature of 0°C to 40°C by using the conditions for transfer at a handling temperature of 40°C.

(1) Refrigerant mixture filling method in which the amount of a refrigerant mixture in a source container is 100 wt.% of the maximum filling amount

Refrigerant mixture filling method at 65°C (filling amount: 100 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%.
the method comprising,
when transferring the refrigerant mixture in a liquid state from a source container that is filled with the refrigerant mixture in an amount equal to or less than 100 wt.% of the maximum filling amount to a target container and/or equipment,
adjusting the proportion of the HFO-1132(E) in the liquid phase of the refrigerant mixture in the source container immediately before the transfer (initial composition) to $(x + y_{11})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition ($x$) of the HFO-1132(E) during the transfer,

wherein

$\pm a$ represents a set tolerance ($a \geq 0$);
$x$ represents the target composition of HFO-1132(E) ($10 \leq x \leq 90$, excluding the range where $y_{11} > a$); and
$y_{11}$ represents a lower limit of a gap between the initial composition of HFO-1132(E) and the target composition of HFO-1132(E), $y_{11}$ being a value (wt.%) represented by the following Equation (11):

$$1000y_{11} = L_{11}x^3 - M_{11}x^2 + N_{11}x - P_{11} \quad (11)$$

wherein

$L_{11} = 0.00325a + (-0.00135)$
$M_{11} = -0.46395a + (-1.21255)$

$N_{11} = 22.65000a + (114.40667)$

$P_{11} = -1372.90000a + (576.13333)$.

"$\pm a$" (set tolerance) is a difference from the maximum and minimum values within an acceptable range, with the target composition (x) of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of $\pm a$ wt.% of the target composition until completion of transfer,

by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(1-1) Filling method in which HFO-1132(E) is kept within a range of $\pm 2$ wt.% of its target composition (x)

An embodiment in which the set tolerance ($\pm a$) is "$\pm 2$" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{11-1})$ wt.% (minimum value) or higher and $(x + 2)$ wt.% (maximum value) or lower

in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \leq x \leq 90$).

$y_{11-1}$ represents a lower limit of a gap between the initial composition and the target upper-limit composition $(x + 2)$ of HFO-1132(E), $y_{11-1}$ being a value represented by the following Equation (11-1).

$$1000y_{11-1} = 0.0117(x + 2)^3 - 3.0684(x + 2)^2 + 205.01(x + 2) - 4915.5 \tag{11-1}$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 2$ wt.% of the target upper-limit composition (x) until completion of transfer,

by adjusting the proportion of HFO-1132(E) in the liquid phase of the mixture in the source container before transfer to about x - 0.9 wt.% to x + 2 wt.% according to Equation (11-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -0.9 wt.% relative to the target composition (90 wt.%), the proportion of HFO-1132(E) in the liquid phase of the mixture can be kept within ±2 wt.% of the target composition until completion of transfer.

(1-2) Filling method in which HFO-1132(E) is kept within a range of ±1.5 wt.% of its target composition (x)

An embodiment in which the set tolerance (±a) is "±1.5" and in which a = 3 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,
the proportion of HFO-1132(E) in the liquid phase of the refrigerant mixture in the source container immediately before the transfer (initial composition) is preferably adjusted to $(x + Y_{11-2})$ wt.% (minimum value) or higher and $(x + 1.5)$ wt.% (maximum value) or lower
in order to keep the proportion of HFO-1132(E) in the liquid phase of the refrigerant mixture in the source container within a range of ±1.5 wt.% of the target composition (x) of HFO-1132(E) during the transfer.

When a = 1.5 and $34.5 < x < 55.2$, $y_{11-2} > a$; therefore, the range of x is 10 wt.% to 34.5 wt.% or 55.2 wt.% to 90 wt.%.
x represents the target composition of HFO-1132(E) (with the proviso that $10 \leq x \leq 90$).
$Y_{11-2}$ represents a lower limit of a gap between the initial composition and the target upper-limit composition $(x + 1.5)$ of HFO-1132(E), $y_{11-2}$ being a value represented by the following Equation (11-2).

$$1000y_{11-2} = 0.0084(x + 1.5)^3 - 2.604(x + 1.5)^2 + 182.36(x + 1.5) - 3542.6 \qquad (11\text{-}2)$$

In the present disclosure,

when a refrigerant mixture comprising HFO-1132(E) and HFO-1234yf is transferred from a source container to a target container and/or equipment,
the composition change in the target container and/or equipment can be kept within a range of ±1.5 wt.% of the target upper-limit composition (x) until completion of transfer,
by adjusting the proportion of HFO-1132(E) in the liquid phase of the mixture in the source container before transfer to about x - 0.7 wt.% to x + 1.5 wt.% according to Equation (11-2) above.

In the refrigerant mixture filling method in which the composition change of the refrigerant mixture comprising HFO-1132(E) and HFO-1234yf in a target container and/or equipment is kept within an acceptable range of ±1.5 wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).
When HFO-1132(E) is contained in an amount of 90 wt.%, the composition change is small; therefore, even when the initial composition of HFO-1132(E) is about -0.7 wt.% relative to the target composition (90 wt.%), the proportion of HFO-1132(E) in the liquid phase of the mixture can be kept within ±1.5 wt.% of the target composition until completion of transfer.

(1-3) Filling method in which HFO-1132(E) is kept within a range of ±1 wt.% of its target composition (x)

An embodiment in which the set tolerance (±a) is "±1" and in which a = 2 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{11-3}$) wt.% (minimum value) or higher and (x + 1) wt. % (maximum value) or lower
in order to keep the proportion of HFO-1132(E) in the liquid phase of the refrigerant mixture in the source container within a range of $\pm 1$ wt.% of the target composition (x) of HFO-1132(E) during the transfer.

When a = 1 and 17.5 < x < 74.1, $y_{11-3}$ > a; therefore, the range of x is 10 wt.% to 17.5 wt.% or 74.1 wt.% to 90 wt.%.

x represents the target composition of HFO-1132(E) (with the proviso that $10 \leq x \leq 90$).

$Y_{11-3}$ represents a lower limit of a gap between the initial composition and the target upper-limit composition (x + 1.0) of HFO-1132(E), $y_{11-3}$ being a value represented by the following Equation (11-3).

$$1000y_{11-3} = 0.0052(x + 1.0)^3 - 2.1405(x + 1.0)^2 + 159.71(x + 1.0) - 2169.7 \qquad (11\text{-}3)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1$ wt.% of the target upper-limit composition (x) until completion of transfer,
by adjusting the proportion of HFO-1132(E) in the liquid phase of the mixture in the source container before transfer to about x - 0.4 wt.% to x + 1 wt.% according to Equation (11-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.4 wt.% relative to the target composition (90 wt.%), the proportion of HFO-1132(E) in the liquid phase of the mixture can be kept within $\pm 1$ wt.% of the target composition until completion of transfer.

(1-4) Refrigerant mixture filling method in which the amount of a refrigerant mixture in a source container is 100 wt.% of the maximum filling amount

Equation (11) can be derived from Equations (11-1) to (11-3). Based on the value of each coefficient in Equations (11-1) to (11-3), $L_{11}$, $M_{11}$, $N_{11}$, and $P_{11}$ of Equation (11) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,
the proportion of HFO-1132(E) in the liquid phase of the refrigerant mixture in the source container immediately before the transfer (initial composition) is adjusted to (x + $y_{11}$) wt.% (minimum value) or higher and (x + a) wt.% (maximum value) or lower
in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{11} > a$); and
$y_{11}$ represents a lower limit of a gap between the initial composition and the target composition of HFO-1132(E), $y_{11}$ being a value (wt.%) represented by the following Equation (11):

$$1000y_{11} = L_{11}x^3 - M_{11}x^2 + N_{11}x - P_{11} \quad (11)$$

wherein

$L_{11}$ = 0.00325a + (-0.00135)
$M_{11}$ = -0.46395a + (-1.21255)
$N_{11}$ = 22.65000a + (114.40667)
$P_{11}$ = -1372.90000a + (576.13333).

When a = 1.5 and 34.5 < x < 55.2, $y_{11-2}$ > a; therefore, the range of x is 10 wt.% to 34.5 wt.% or 55.2 wt.% to 90 wt.%.

When a = 1 and 17.5 < x < 74.1, $y_{11-3}$ > a; therefore, the range of x is 10 wt.% to 17.5 wt.% or 74.1 wt.% to 90 wt.%.

<u>(2) Refrigerant mixture filling method in which the amount of a refrigerant mixture in a source container is 90 wt.% of the maximum filling amount</u>

Refrigerant mixture filling method at 65°C (filling amount: 90 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%.
the method comprising,
when transferring the refrigerant mixture in a liquid state from a source container that is filled with the refrigerant mixture in an amount equal to or less than 90 wt.% of the maximum filling amount to a target container and/or equipment,
adjusting the proportion of the HFO-1132(E) in the liquid phase of the refrigerant mixture in the source container immediately before the transfer (initial composition) to $(x + y_{12})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance (a $\geq$ 0);
x represents the target composition of HFO-1132(E) (10 $\leq$ x $\leq$ 90, excluding the range where $y_{12}$ > a); and
$y_{12}$ represents a lower limit of a gap between the initial composition of HFO-1132(E) and the target composition of HFO-1132(E), $y_{12}$ being a value (wt.%) represented by the following Equation (12):

$$1000y_{12} = L_{12}x^3 - M_{12}x^{2+} N_{12}x - P_{12} \quad (12)$$

wherein

$L_{12}$ = 0.00015a + (0.00928)
$M_{12}$ = -0.04875a + (-2.57505)
$N_{12}$ = 6.55500a + (163.93833)
$P_{12}$ = -1215.05000a + (16.55000).

"$\pm a$" (set tolerance) is a difference from the maximum and minimum values within an acceptable range, with the target composition (x) of HFO-1132(E) taken as the reference value, and is an acceptable "gap" from the target composition.

The value a is preferably set within the range of 2 $\leq$ a $\leq$ 4.

According to the refrigerant mixture filling method of the present disclosure, the composition change in a target container and/or equipment is kept within an acceptable range of $\pm a$ wt.% of the target composition until completion of transfer,
by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(2-1) Filling method in which HFO-1132(E) is kept within a range of $\pm 2$ wt.% of its target composition (x)

An embodiment in which the set tolerance ($\pm a$) is "$\pm 2$" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container immediately before the transfer (initial composition) is preferably adjusted to $(x + Y_{12\text{-}1})$ wt.% (minimum value) or higher and $(x + 2)$ wt.% (maximum value) or lower
in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \le x \le 90$).

$y_{12\text{-}1}$ represents a lower limit of a gap between the initial composition and the target upper-limit composition (x + 2.0) of HFO-1132 (E) , $y_{12\text{-}1}$ being a value represented by the following Equation (12-1).

$$1000y_{12\text{-}1} = 0.0099(x+2.0)^3 - 2.770(x+2.0)^2 + 190.16(x+2.0) - 4843.7 \qquad (12\text{-}1)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 2$ wt.% of the target upper-limit composition (x) until completion of transfer,
by adjusting the proportion of HFO-1132(E) in the liquid phase of the mixture in the source container before transfer to about x - 1.1 wt.% to x + 2 wt.% according to Equation (12-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.1 wt.% relative to the target composition (90 wt.%), the proportion of HFO-1132(E) in the liquid phase of the mixture can be kept within $\pm 2$ wt.% of the target composition until completion of transfer.

(2-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container immediately before the transfer (initial composition) is preferably adjusted to $(x + y_{12-2})$ wt.% (minimum value) or higher and $(x + 1.5)$ wt.% (maximum value) or lower
in order to keep the proportion of HFO-1132(E) in the liquid phase of the refrigerant mixture in the source container within a range of $\pm 1.5$ wt.% of the target composition (x) of HFO-1132(E) during the transfer.

When a = 1.5 and 41.5 < x < 46.9, $y_{12-2}$ > a; therefore, the range of x is 10 wt.% to 41.5 wt.% or 46.9 wt.% to 90 wt.%.

x represents the target composition of HFO-1132(E) (with the proviso that $10 \leq x \leq 90$).

$y_{12-2}$ represents a lower limit of a gap between the initial composition and the target upper-limit composition $(x + 1.5)$ of HFO-1132(E), $y_{12-2}$ being a value represented by the following Equation (12-2).

$$1000y_{12-2} = 0.0097(x+1.5)^3 - 2.721(x+1.5)^2 + 183.60(x+1.5) - 3628.6 \tag{12-2}$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.6 wt.% to x + 1.5 wt.% according to Equation (12-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.6 wt.% relative to the target composition (90 wt.%), the proportion of HFO-1132(E) in the liquid phase of the mixture can be kept within $\pm 1.5$ wt.% of the target composition until completion of transfer.

(2-3) Filling method in which HFO-1132(E) is kept within a range of $\pm 1$ wt.% of its target composition (x)

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container immediately before the transfer (initial composition) is preferably adjusted to $(x + y_{12-3})$ wt.% (minimum value) or higher and $(x + 1)$ wt.% (maximum value) or lower
in order to keep the proportion of HFO-1132(E) in the liquid phase of the refrigerant mixture in the source container within a range of $\pm 1$ wt.% of the target composition (x) of HFO-1132(E) during the transfer.

When a = 1 and 18.4 < x < 72.9, $y_{12-3}$ > a; therefore, the range of x is 10 wt.% to 18.4 wt.% or 72.9 wt.% to 90 wt.%.

x represents the target composition of HFO-1132(E) (with the proviso that $10 \leq x \leq 90$).

$y_{12-3}$ represents a lower limit of a gap between the initial composition and the target upper-limit composition $(x + 1.0)$ of HFO-1132(E), $y_{12-3}$ being a value represented by the following Equation (12-3).

$$1000y_{12-3} = 0.0096(x + 1.0)^3 - 2.6726(x + 1.0)^2 + 177.05(x + 1.0) - 2413.6 \tag{12-3}$$

In the present disclosure,

when a refrigerant mixture comprising HFO-1132(E) and HFO-1234yf is transferred from a source container to a target container and/or equipment,

the composition change in the target container and/or equipment can be kept within a range of ±1 wt.% of the target upper-limit composition (x) until completion of transfer,

by adjusting the proportion of HFO-1132(E) in the liquid phase of the mixture in the source container before transfer to about x - 0.2 wt.% to x + 1 wt.% according to Equation (12-3) above.

In the refrigerant mixture filling method in which the composition change of the refrigerant mixture comprising HFO-1132(E) and HFO-1234yf in a target container and/or equipment is kept within an acceptable range of ±1 wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.2 wt.% relative to the target composition (90 wt.%), the proportion of HFO-1132(E) in the liquid phase of the mixture can be kept within ±1 wt.% of the target composition until completion of transfer.

(2-4) Refrigerant mixture filling method in which the amount of a refrigerant mixture in a source container is 90 wt.% of the maximum filling amount

Equation (12) can be derived from Equations (12-1) to (12-3). Based on the value of each coefficient in Equations (12-1) to (12-3), $L_{12}$, $M_{12}$, $N_{12}$, and $P_{12}$ of Equation (12) can be calculated from the target composition (x) with respect to the set tolerance (a).

In the refrigerant mixture filling method of the present disclosure, when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,

the proportion of HFO-1132(E) in the liquid phase of the refrigerant mixture in the source container immediately before the transfer (initial composition) is adjusted to $(x + y_{12})$ wt.% (minimum value) or higher and $(x + a)$ wt.% (maximum value) or lower

in order to keep the proportion of HFO-1132(E) in the liquid phase of the refrigerant mixture in the source container within a range of ±a wt.% of the target composition (x) of HFO-1132(E) during the transfer,

wherein

±a represents a set tolerance (a ≥ 0);

x represents the target composition of HFO-1132(E) (10 ≤ x ≤ 90, excluding the range where $y_{12}$ > a); and

$y_{12}$ represents a lower limit of a gap between the initial composition of HFO-1132(E) and the target composition of HFO-1132(E), $y_{12}$ being a value (wt.%) represented by the following Equation (12):

$$1000y_{12} = L_{12}x^3 - M_{12}x^{2+} N_{12}x - P_{12} \quad (12)$$

wherein

$L_{12}$ = 0.00015a + (0.00928)
$M_{12}$ = -0.04875a + (-2.57505)
$N_{12}$ = 6.55500a + (163.93833)
$P_{12}$ = -1215.05000a + (16.55000).

When a = 1.5 and 41.5 < x < 46.9, $y_{12-2}$ > a; therefore, the range of x is 10 wt.% to 41.5 wt.% or 46.9 wt.% to 90 wt.%.

When a = 1 and 18.4 < x < 72.9, $y_{12-3}$ > a; therefore, the range of x is 10 wt.% to 18.4 wt.% or 72.9 wt.% to 90 wt.%.

(3) Refrigerant mixture filling method in which the amount of a refrigerant mixture in a source container is 80 wt.% of the maximum filling amount

Refrigerant mixture filling method at 65°C (filling amount: 80 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%.
the method comprising,
when transferring the refrigerant mixture in a liquid state from a source container that is filled with the refrigerant mixture in an amount equal to or less than 80 wt.% of the maximum filling amount to a target container and/or equipment,
adjusting the proportion of the HFO-1132(E) in the liquid phase of the refrigerant mixture in the source container immediately before the transfer (initial composition) to $(x + y_{13})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance ($a \geq 0$);
x represents the target composition of HFO-1132(E) ($10 \leq x \leq 90$, excluding the range where $y_{13} > a$); and
$y_{13}$ represents a lower limit of a gap between the initial composition of HFO-1132(E) and the target composition of HFO-1132(E), $y_{13}$ being a value (wt.%) represented by the following Equation (13):

$$1000y_{13} = L_{13}x^3 - M_{13}x^2 + N_{13}x - P_{13} \quad (13)$$

wherein

$L_{13}$ = 0.00005a + (0.00862)
$M_{13}$ = -0.02780a + (-2.42600)
$N_{13}$ = 4.82500a + (156.35500)
$P_{13}$ = -1154.50000a + (-88.63333).

"$\pm a$" (set tolerance) is a difference from the maximum and minimum values within an acceptable range, with the target composition (x) of HFO-1132(E) taken as the reference value, and is an acceptable "gap" from the target composition.
The value a is preferably set within the range of $2 \leq a \leq 4$.
According to the refrigerant mixture filling method of the present disclosure, the composition change in a target container and/or equipment is kept within an acceptable range of $\pm a$ wt.% of the target composition until completion of transfer,
by adjusting the proportion of HFO-1132(E) in the liquid phase in a source container within a specific range before the transfer even when the filling amount of the refrigerant mixture in the source container is 100 wt.% of the maximum filling amount.
The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.
The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(3-1) Filling method in which HFO-1132(E) is kept within a range of $\pm 2$ wt.% of its target composition (x)

An embodiment in which the set tolerance ($\pm a$) is "$\pm 2$" and in which a = 4 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{13-1})$ wt.% (minimum value) or higher and $(x + 2)$ wt.% (maximum value) or lower

in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \le x \le 90$).

$y_{13-1}$ represents a lower limit of a gap between the initial composition and the target upper-limit composition $(x + 2.0)$ of HFO-1132 (E), $y_{13-1}$ being a value represented by the following Equation (13-1).

$$1000y_{13-1} = 0.0088(x + 2.0)^3 - 2.5372(x + 2.0)^2 + 175.66(x + 2.0) - 4706.6 \qquad (13\text{-}1)$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 2$ wt.% of the target upper-limit composition (x) until completion of transfer,

by adjusting the proportion of HFO-1132(E) in the liquid phase of the mixture in the source container before transfer to about x - 1.1 wt.% to x + 2 wt.% according to Equation (13-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.1 wt.% relative to the target composition (90 wt.%), the proportion of HFO-1132(E) in the liquid phase of the mixture can be kept within $\pm 2$ wt.% of the target composition until completion of transfer.

(3-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{13-2})$ wt.% (minimum value) or higher and $(x + 1.5)$ wt.% (maximum value) or lower

in order to keep the proportion of HFO-1132(E) in the liquid phase of the refrigerant mixture in the source container within a range of $\pm 1.5$ wt.% of the target composition (x) of HFO-1132(E) during the transfer.

x represents the target composition of HFO-1132(E) (with the proviso that $10 \le x \le 90$).

$y_{13-2}$ represents a lower limit of a gap between the initial composition and the target upper-limit composition $(x + 1.5)$ of HFO-1132 (E), $y_{13-2}$ being a value represented by the following Equation (13-2).

$$1000y_{13-2} = 0.0088(x + 1.5)^3 - 2.509(x + 1.5)^2 + 170.83(x + 1.5) - 3552.1 \qquad (13\text{-}2)$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 1.5$ wt.% of the target upper-limit composition (x) until completion of transfer,

by adjusting the proportion of HFO-1132(E) in the liquid phase of the mixture in the source container before transfer to about x - 0.7 wt.% to x + 1.5 wt.% according to Equation (13-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.7 wt.% relative to the target composition (90 wt.%), the proportion of HFO-1132(E) in the liquid phase of the mixture can be kept within $\pm 1.5$ wt.% of the target composition until completion of transfer.

(3-3) Filling method in which HFO-1132(E) is kept within a range of $\pm 1$ wt.% of its target composition (x)

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is preferably adjusted to ($x + y_{13-3}$) wt.% (minimum value) or higher and (x + 1) wt.% (maximum value) or lower

in order to keep the proportion of HFO-1132(E) in the liquid phase of the refrigerant mixture in the source container within a range of $\pm 1$ wt.% of the target composition (x) of HFO-1132(E) during the transfer.

When a = 1 and 20 < x < 70.9, $y_{13-3} > a$; therefore, the range of x is 10 wt.% to 20 wt.% or 70.9 wt.% to 90 wt.%.

x represents the target composition of HFO-1132(E) (with the proviso that $10 \leq x \leq 90$).

$y_{13-3}$ represents a lower limit of a gap between the initial composition and the target upper-limit composition (x + 1.0) of HFO-1132(E), $y_{13-3}$ being a value represented by the following Equation (13-3).

$$1000_{y_{13-3}} = 0.0087(x + 1.0)^3 - 2.4816(x + 1.0)^2 + 166.01(x + 1.0) - 2397.6 \tag{13-3}$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 1$ wt.% of the target upper-limit composition (x) until completion of transfer,

by adjusting the proportion of HFO-1132(E) in the liquid phase of the mixture in the source container before transfer to about x - 0.2 wt.% to x + 1 wt.% according to Equation (13-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.2 wt.% relative to the target composition (90 wt.%), the proportion of HFO-1132(E) in the liquid phase of the mixture can be kept within $\pm 1$ wt.% of the target composition until completion of transfer.

(3-4) Refrigerant mixture filling method in which the amount of a refrigerant mixture in a source container is 80 wt.% of the maximum filling amount

Equation (13) can be derived from Equations (13-1) to (13-3). Based on the value of each coefficient in Equations (13-1) to (13-3), $L_{13}$, $M_{13}$, $N_{13}$, and $P_{13}$ of Equation (13) can be calculated from the target composition (x) with respect to the set tolerance (a).

In the refrigerant mixture filling method of the present disclosure, when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is adjusted to $(x + y_{13})$ wt.% (minimum value) or higher and $(x + a)$ wt.% (maximum value) or lower
in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{13} > a$); and
$y_{13}$ represents a lower limit of a gap between the initial composition of HFO-1132(E) and the target composition of HFO-1132(E), $y_{13}$ being a value (wt.%) represented by the following Equation (13):

$$1000y_{13} = L_{13}x^3 - M_{13}x^2 + N_{13}x - P_{13} \quad (13)$$

wherein

$L_{13}$ = 0.00005a + (0.00862)
$M_{13}$ = -0.02780a + (-2.42600)
$N_{13}$ = 4.82500a + (156.35500)
$P_{13}$ = -1154.50000a + (-88.63333).

When a = 1 and 20 < x < 70.9, $y_{13-3}$ > a; therefore, the range of x is 10 wt.% to 20 wt.% or 70.9 wt.% to 90 wt.%.

(4) Refrigerant mixture filling method in which the amount of a refrigerant mixture in a source container is 70 wt.% of the maximum filling amount

Refrigerant mixture filling method at 65°C (filling amount: 70 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 70 wt.% of the maximum filling amount to a target container and/or equipment,
adjusting the proportion of the HFO-1132(E) in the liquid phase of the refrigerant mixture in the source container immediately before the transfer (initial composition) to $(x + y_{14})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

±a represents a set tolerance (a ≥ 0);

x represents the target composition of HFO-1132(E) ($10 \leq x \leq 90$, excluding the range where $y_{14} > a$); and

$y_{14}$ represents a lower limit of a gap between the initial composition of HFO-1132(E) and the target composition of HFO-1132(E), $y_{14}$ being a value (wt.%) represented by the following Equation (14):

$$1000y_{14} = L_{14}x^3 - M_{14}x^2 + N_{14}x - P_{14} \quad (14)$$

wherein

$L_{14}$ = -0.00105a + (0.01228)
$M_{14}$ = 0.12340a + (-2.86680)
$N_{14}$ = -1.46500a + (171.35833)
$P_{14}$ = -1080.45000a + (-366.15000).

"±a" (set tolerance) is a difference from the maximum and minimum values within an acceptable range, with the target composition (x) of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of ±a wt.% of the target composition until completion of transfer,

by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(4-1) Filling method in which HFO-1132(E) is kept within a range of ±2 wt.% of its target composition (x)

An embodiment in which the set tolerance (±a) is "±2" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{14-1})$ wt.% (minimum value) or higher and $(x + 2)$ wt.% (maximum value) or lower

in order to keep the proportion of HFO-1132(E) in the liquid phase of the refrigerant mixture in the source container within a range of ±2 wt.% of the target composition (x) of HFO-1132(E) during the transfer.

x represents the target composition of HFO-1132(E) (with the proviso that $10 \leq x \leq 90$).

$y_{14-1}$ represents a lower limit of a gap between the initial composition and the target upper-limit composition (x + 2.0) of HFO-1132 (E) , $y_{14-1}$ being a value represented by the following Equation (14-1).

$$1000y_{14-1} = 0.0081(x + 2.0)^3 - 2.3732(x + 2.0)^2 + 165.50(x + 2.0) - 4688 \quad (14-1)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 2$ wt.% of the target upper-limit composition (x) until completion of transfer,
by adjusting the proportion of HFO-1132(E) in the liquid phase of the mixture in the source container before transfer to about x - 1.2 wt.% to x + 2 wt.% according to Equation (14-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).
When HFO-1132(E) is contained in an amount of 90 wt.%, the composition change is small; therefore, even when the initial composition of HFO-1132(E) is about -1.2 wt.% relative to the target composition (90 wt.%), the proportion of HFO-1132(E) in the liquid phase of the mixture can be kept within $\pm 2$ wt.% of the target composition until completion of transfer.

(4-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{14-2}$) wt.% (minimum value) or higher and (x + 1.5) wt.% (maximum value) or lower
in order to keep the proportion of HFO-1132(E) in the liquid phase of the refrigerant mixture in the source container within a range of $\pm 1.5$ wt.% of the target composition (x) of HFO-1132(E) during the transfer.

x represents the target composition of HFO-1132(E) (with the proviso that $10 \le x \le 90$).
$y_{14-2}$ represents a lower limit of a gap between the initial composition and the target upper-limit composition (x + 1.5) of HFO-1132 (E), $y_{14-2}$ being a value represented by the following Equation (14-2).

$$1000y_{14-2} = 0.0091(x + 1.5)^3 - 2.4966(x + 1.5)^2 + 166.96(x + 1.5) - 3607.5 \qquad (14-2)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.7 wt.% to x + 1.5 wt.% according to Equation (14-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).
When HFO-1132(E) is contained in an amount of 90 wt.%, the composition change is small; therefore, even when the initial composition of HFO-1132(E) is about -0.7 wt.% relative to the target composition (90 wt.%), the proportion of HFO-1132(E) in the liquid phase of the mixture can be kept within $\pm 1.5$ wt.% of the target composition until completion of transfer.

(4-3) Filling method in which HFO-1132(E) is kept within a range of $\pm 1$ wt.% of its target composition (x)

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{14-3})$ wt.% (minimum value) or higher and (x + 1) wt.% (maximum value) or lower

in order to keep the proportion of HFO-1132(E) in the liquid phase of the refrigerant mixture in the source container within a range of $\pm 1$ wt.% of the target composition (x) of HFO-1132(E) during the transfer.

When a = 1 and 21.7 < x < 68.2, $y_{14-3}$ > a; therefore, the range of x is 10 wt.% to 21.7 wt.% or 68.2 wt.% to 90 wt.%.

x represents the target composition of HFO-1132(E) (with the proviso that $10 \le x \le 90$).

$y_{14-3}$ represents a lower limit of a gap between the initial composition and the target upper-limit composition (x + 1.0) of HFO-1132(E), $y_{14-3}$ being a value represented by the following Equation (14-3).

$$1000y_{14-3} = 0.0102(x + 1.0)^3 - 2.6200(x + 1.0)^2 + 168.43(x + 1.0) - 2527.1 \qquad (14-3)$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 1$ wt.% of the target upper-limit composition (x) until completion of transfer,

by adjusting the proportion of HFO-1132(E) in the liquid phase of the mixture in the source container before transfer to about x - 0.2 wt.% to x + 1 wt.% according to Equation (14-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.2 wt.% relative to the target composition (90 wt.%), the proportion of HFO-1132(E) in the liquid phase of the mixture can be kept within $\pm 1$ wt.% of the target composition until completion of transfer.

(4-4) Refrigerant mixture filling method in which the amount of a refrigerant mixture in a source container is 70 wt.% of the maximum filling amount

Equation (14) can be derived from Equations (14-1) to (14-3). Based on the value of each coefficient in Equations (14-1) to (14-3), $L_{14}$, $M_{14}$, $N_{14}$, and $P_{14}$ of Equation (14) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container immediately before the transfer (initial composition) is adjusted to $(x + y_{14})$ wt.% (minimum value) or higher and (x + a) wt.% (maximum value) or lower

in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{14} > a$); and
$y_{14}$ represents a lower limit of a gap between the initial composition of HFO-1132(E) and the target composition of HFO-1132(E), $y_{14}$ being a value (wt.%) represented by the following Equation (14):

$$1000y_{14} = L_{14}x^3 - M_{14}x^2 + N_{14}x - P_{14} \quad (14)$$

wherein

$L_{14} = -0.00105a + (0.01228)$
$M_{14} = 0.12340a + (-2.86680)$
$N_{14} = -1.46500a + (171.35833)$
$P_{14} = -1080.45000a + (-366.15000)$.

When a = 1 and $21.7 < x < 68.2$, $y_{14\text{-}3} > a$; therefore, the range of x is 10 wt.% to 21.7 wt.% or 68.2 wt.% to 90 wt.%.

(5) Refrigerant mixture filling method in which the amount of a refrigerant mixture in a source container is 60 wt.% of the maximum filling amount

Refrigerant mixture filling method at 65°C (filling amount: 60 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 60 wt.% of the maximum filling amount to a target container and/or equipment,
adjusting the proportion of the HFO-1132(E) in the liquid phase of the refrigerant mixture in the source container immediately before the transfer (initial composition) to $(x + y_{15})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance ($a \geq 0$);
x represents the target composition of HFO-1132(E) ($10 \leq x \leq 90$, excluding the range where $y_{15} > a$); and
$y_{15}$ represents a lower limit of a gap between the initial composition of HFO-1132(E) and the target composition of HFO-1132(E), $y_{15}$ being a value (wt.%) represented by the following Equation (15):

$$1000y_{15} = L_{15}x^3 - M_{15}x_2 + N_{15}x - P_{15} \quad (15)$$

wherein

$L_{15} = -0.00065a + (0.00915)$
$M_{15} = 0.10505a + (-2.43128)$
$N_{15} = -2.78000a + (154.43000)$
$P_{15} = -1052.95000a + (-322.25000)$.

"±a" (set tolerance) is a difference from the maximum and minimum values within an acceptable range, with the target composition (x) of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of ±a wt.% of the target composition until completion of transfer,

by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(5-1) Filling method in which HFO-1132(E) is kept within a range of ±2 wt.% of its target composition (x)

An embodiment in which the set tolerance (±a) is "±2" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,
the proportion of HFO-1132(E) in the liquid phase of the refrigerant mixture in the source container immediately before the transfer (initial composition) is preferably adjusted to $(x + y_{15-1})$ wt.% (minimum value) or higher and $(x + 2)$ wt. % (maximum value) or lower
in order to keep the proportion of HFO-1132(E) in the liquid phase of the refrigerant mixture in the source container within a range of ±2 wt.% of the target composition (x) of HFO-1132(E) during the transfer.

x represents the target composition of HFO-1132(E) (with the proviso that $10 \leq x \leq 90$).

$y_{15-1}$ represents a lower limit of a gap between the initial composition and the target upper-limit composition (x + 2.0) of HFO-1132(E), $y_{15-1}$ being a value represented by the following Equation (15-1).

$$1000y_{15-1} = 0.0066(x + 2.0)^3 - 2.0111(x + 2.0)^2 + 143.31(x + 2.0) - 4534.1 \qquad (15\text{-}1)$$

In the present disclosure,

when a refrigerant mixture comprising HFO-1132(E) and HFO-1234yf is transferred from a source container to a target container and/or equipment,
the composition change in the target container and/or equipment can be kept within a range of ±2 wt.% of the target upper-limit composition (x) until completion of transfer,
by adjusting the proportion of HFO-1132(E) in the liquid phase of the mixture in the source container before transfer to about x - 1.2 wt.% to x + 2 wt.% according to Equation (15-1) above.

In the refrigerant mixture filling method in which the composition change of the refrigerant mixture comprising HFO-1132(E) and HFO-1234yf in a target container and/or equipment is kept within an acceptable range of ±2 wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.2 wt.% relative to the target composition (90 wt.%), the proportion of HFO-1132(E) in the liquid phase of the mixture can be kept within ±2 wt.% of the target composition until completion of transfer.

(5-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment, the proportion of HFO-1132(E) in the liquid phase of the refrigerant mixture in the source container immediately before the transfer (initial composition) is preferably adjusted to $(x + y_{15-2})$ wt.% (minimum value) or higher and $(x + 1.5)$ wt. % (maximum value) or lower in order to keep the proportion of HFO-1132(E) in the liquid phase of the refrigerant mixture in the source container within a range of $\pm 1.5$ wt.% of the target composition (x) of HFO-1132(E) during the transfer.

x represents the target composition of HFO-1132(E) (with the proviso that $10 \leq x \leq 90$).

$y_{15-2}$ represents a lower limit of a gap between the initial composition and the target upper-limit composition $(x + 1.5)$ of HFO-1132(E), $y_{15-2}$ being a value represented by the following Equation (15-2).

$$1000y_{15-2} = 0.0072(x + 1.5)^3 - 2.1161(x + 1.5)^2 + 146.09(x + 1.5) - 3481.1 \tag{15-2}$$

In the present disclosure,

when a refrigerant mixture comprising HFO-1132(E) and HFO-1234yf is transferred from a source container to a target container and/or equipment, the composition change in the target container and/or equipment can be kept within a range of $\pm 1.5$ wt.% of the target upper-limit composition (x) until completion of transfer, by adjusting the proportion of HFO-1132(E) in the liquid phase of the mixture in the source container before transfer to about x - 0.8 wt.% to x + 1.5 wt.% according to Equation (15-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.8 wt.% relative to the target composition (90 wt.%), the proportion of HFO-1132(E) in the liquid phase of the mixture can be kept within $\pm 1.5$ wt.% of the target composition until completion of transfer.

(5-3) Filling method in which HFO-1132(E) is kept within a range of $\pm 1$ wt.% of its target composition (x)

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment, the proportion of HFO-1132(E) in the liquid phase of the refrigerant mixture in the source container immediately before the transfer (initial composition) is preferably adjusted to $(x + y_{15-3})$ wt.% (minimum value) or higher and $(x + 1)$ wt. % (maximum value) or lower in order to keep the proportion of HFO-1132(E) in the liquid phase of the refrigerant mixture in the source container within a range of $\pm 1$ wt.% of the target composition (x) of HFO-1132(E) during the transfer.

When a = 1 and 24.4 < x < 65.4, $y_{15-3}$ > a; therefore, the range of x is 10 wt.% to 24.4 wt.% or 65.4 wt.% to 90 wt.%.

x represents the target composition of HFO-1132(E) (with the proviso that $10 \leq x \leq 90$).

$y_{15-3}$ represents a lower limit of a gap between the initial composition and the target upper-limit composition (x + 1.0) of HFO-1132 (E), $y_{15-3}$ being a value represented by the following Equation (15-3).

$$1000y_{15-3} = 0.0079(x + 1.0)^3 - 2.2212(x + 1.0)^2 + 148.87(x + 1.0) - 2428.2 \qquad (15-3)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1$ wt.% of the target upper-limit composition (x) until completion of transfer,
by adjusting the proportion of HFO-1132(E) in the liquid phase of the mixture in the source container before transfer to about x - 0.3 wt.% to x + 1 wt.% according to Equation (15-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.3 wt.% relative to the target composition (90 wt.%), the proportion of HFO-1132(E) in the liquid phase of the mixture can be kept within $\pm 1$ wt.% of the target composition until completion of transfer.

(5-4) Refrigerant mixture filling method in which the amount of a refrigerant mixture in a source container is 60 wt.% of the maximum filling amount

Equation (15) can be derived from Equations (15-1) to (15-3). Based on the value of each coefficient in Equations (15-1) to (15-3), $L_{15}$, $M_{15}$, $N_{15}$, and $P_{15}$ of Equation (15) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,
the proportion of HFO-1132(E) in the liquid phase of the refrigerant mixture in the source container immediately before the transfer (initial composition) is adjusted to (x + $y_{15}$) wt.% (minimum value) or higher and (x + a) wt.% (maximum value) or lower
in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{15}$ > a); and
$y_{15}$ represents a lower limit of a gap between the initial composition of HFO-1132(E) and the target composition of HFO-1132(E), $y_{15}$ being a value (wt.%) represented by the following Equation (15):

$$1000y_{15} = L_{15}x^3 - M_{15}x_2 + N_{15}x - P_{15} \qquad (15)$$

wherein

$L_{15}$ = -0.00065a + (0.00915)
$M_{15}$ = 0.10505a + (-2.43128)

$N_{15}$ = -2.78000a + (154.43000)
$P_{15}$ = -1052.95000a + (-322.25000).

When a = 1 and 24.4 < x < 65.4, $y_{15-3}$ > a; therefore, the range of x is 10 wt.% to 24.4 wt.% or 65.4 wt.% to 90 wt.%.

(6) Refrigerant mixture filling method in which the amount of a refrigerant mixture in a source container is 50 wt.% of the maximum filling amount

Refrigerant mixture filling method at 65°C (filling amount: 50 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 50 wt.% of the maximum filling amount to a target container and/or equipment,
adjusting the proportion of the HFO-1132(E) in the liquid phase of the refrigerant mixture in the source container immediately before the transfer (initial composition) to (x + $y_{16}$) wt.% (minimum value) or higher and (x + a) wt.% (maximum value) or lower
in order to keep the proportion of the HFO-1132(E) in the liquid phase of the refrigerant mixture in the source container within a range of ±a wt.% of the target composition (x) of the HFO-1132(E) during the transfer,

wherein

±a represents a set tolerance (a ≥ 0);
x represents the target composition of HFO-1132(E) (10 ≤ x ≤ 90, excluding the range where $y_{16}$ > a); and
$y_{16}$ represents a lower limit of a gap between the initial composition of HFO-1132(E) and the target composition of HFO-1132(E), $y_{16}$ being a value (wt.%) represented by the following Equation (16):

$$1000y_{16} = L_{16}x^3 - M_{16}x^2 + N_{16}x - P_{16} \quad (16)$$

wherein

$L_{16}$ = 0.00015a + (0.00622)
$M_{16}$ = -0.03840a + (-1.83297)
$N_{16}$ = 4.11000a + (121.92000)
$P_{16}$ = -1109.75000a + (-120.98333).

"±a" (set tolerance) is a difference from the maximum and minimum values within an acceptable range, with the target composition (x) of HFO-1132(E) taken as the reference value, and is an acceptable "gap" from the target composition.
The value a is preferably set within the range of 2 ≤ a ≤ 4.
According to the refrigerant mixture filling method of the present disclosure, the composition change in a target container and/or equipment is kept within an acceptable range of ±a wt.% of the target composition until completion of transfer,
by adjusting the proportion of HFO-1132(E) in the liquid phase in a source container within a specific range before the transfer even when the filling amount of the refrigerant mixture in the source container is 100 wt.% of the maximum filling amount.
The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.
The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(6-1) Filling method in which HFO-1132(E) is kept within a range of $\pm 2$ wt.% of its target composition (x)

An embodiment in which the set tolerance ($\pm$a) is "$\pm 2$" and in which a = 4 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,
the proportion of HFO-1132(E) in the liquid phase of the refrigerant mixture in the source container immediately before the transfer (initial composition) is preferably adjusted to ($x + y_{16\text{-}1}$) wt. % (minimum value) or higher and ($x + 2$) wt. % (maximum value) or lower
in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \le x \le 90$).
$y_{16\text{-}1}$ represents a lower limit of a gap between the initial composition and the target upper-limit composition ($x + 2.0$) of HFO-1132(E), $y_{16\text{-}1}$ being a value represented by the following Equation (16-1).

$$1000y_{16\text{-}1} = 0.0068(x + 2.0)^3 - 1.9866(x + 2.0)^2 + 138.36(x + 2.0) - 4560 \qquad (16\text{-}1)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 2$ wt.% of the target upper-limit composition (x) until completion of transfer,
by adjusting the proportion of HFO-1132(E) in the liquid phase of the mixture in the source container before transfer to about x - 1.3 wt.% to x + 2 wt.% according to Equation (16-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).
When HFO-1132(E) is contained in an amount of 90 wt.%, the composition change is small; therefore, even when the initial composition of HFO-1132(E) is about -1.3 wt.% relative to the target composition (90 wt.%), the proportion of HFO-1132(E) in the liquid phase of the mixture can be kept within $\pm 2$ wt.% of the target composition until completion of transfer.

(6-2) Filling method in which HFO-1132(E) is kept within a range of $\pm 1.5$ wt.% of its target composition (x)

An embodiment in which the set tolerance ($\pm$a) is "$\pm 1.5$" and in which a = 3 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,
the proportion of HFO-1132(E) in the liquid phase of the refrigerant mixture in the source container immediately before the transfer (initial composition) is preferably adjusted to ($x + y_{16\text{-}2}$) wt.% (minimum value) or higher and ($x + 1.5$) wt.% (maximum value) or lower
in order to keep the proportion of HFO-1132(E) in the liquid phase of the refrigerant mixture in the source container within a range of $\pm 1.5$ wt.% of the target composition (x) of HFO-1132(E) during the transfer.

x represents the target composition of HFO-1132(E) (with the proviso that $10 \leq x \leq 90$).

$y_{16-2}$ represents a lower limit of a gap between the initial composition and the target upper-limit composition (x + 1.5) of HFO-1132 (E), $y_{16-2}$ being a value represented by the following Equation (16-2).

$$1000y_{16-2} = 0.0067(x + 1.5)^3 -1.9482(x + 1.5)^2 + 134.25(x + 1.5) - 3450.2 \qquad (16-2)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.8 wt.% to x + 1.5 wt.% according to Equation (16-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.8 wt.% relative to the target composition (90 wt.%), the proportion of HFO-1132(E) in the liquid phase of the mixture can be kept within $\pm 1.5$ wt.% of the target composition until completion of transfer.

(6-3) Filling method in which HFO-1132(E) is kept within a range of $\pm 1$ wt.% of its target composition (x)

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{16-3}$) wt.% (minimum value) or higher and (x + 1) wt.% % (maximum value) or lower
in order to keep the proportion of HFO-1132(E) in the liquid phase of the refrigerant mixture in the source container within a range of $\pm 1$ wt.% of the target composition (x) of HFO-1132(E) during the transfer.

When a = 1 and 29.3 < x < 60, $y_{16-3}$ > a; therefore, the range of x is 10 wt.% to 29.3 wt.% or 60 wt.% to 90 wt.%.

x represents the target composition of HFO-1132(E) (with the proviso that $10 \leq x \leq 90$).

$y_{16-3}$ represents a lower limit of a gap between the initial composition and the target upper-limit composition (x + 1.0) of HFO-1132(E), $y_{16-3}$ being a value represented by the following Equation (15-3).

$$1000y_{16-3} = 0.0065(x + 1.0)^3 - 1.9098(x + 1.0)^2 + 130.14(x + 1.0) - 2340.5 \qquad (16-3)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1$ wt.% of the target upper-limit composition (x) until completion of transfer,
by adjusting the proportion of HFO-1132(E) in the liquid phase of the mixture in the source container before transfer to about x - 0.3 wt.% to x + 1 wt.% according to Equation (16-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.3 wt.% relative to the target composition (90 wt.%), the proportion of HFO-1132(E) in the liquid phase of the mixture can be kept within $\pm 1$ wt.% of the target composition until completion of transfer.

(6-4) Refrigerant mixture filling method in which the amount of a refrigerant mixture in a source container is 50 wt.% of the maximum filling amount

Equation (16) can be derived from Equations (16-1) to (16-3). Based on the value of each coefficient in Equations (16-1) to (16-3), $L_{16}$, $M_{16}$, $N_{16}$, and $P_{16}$ of Equation (16) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment, the proportion of HFO-1132(E) in the liquid phase of the refrigerant mixture in the source container immediately before the transfer (initial composition) is adjusted to $(x + y_{16})$ wt.% (minimum value) or higher and $(x + a)$ wt.% (maximum value) or lower

in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{16} > a$); and
$y_{16}$ represents a lower limit of a gap between the initial composition of HFO-1132(E) and the target composition of HFO-1132(E), $y_{16}$ being a value (wt.%) represented by the following Equation (16):

$$1000y_{16} = L_{16}x^3 - M_{16}x^2 + N_{16}x - P_{16} \quad (16)$$

wherein

$L_{16}$ = 0.00015a + (0.00622)
$M_{16}$ = -0.03840a + (-1.83297)
$N_{16}$ = 4.11000a + (121.92000)
$P_{16}$ = -1109.75000a + (-120.98333).

When a = 1 and 29.3 < x < 60, $y_{16-3} > a$; therefore, the range of x is 10 wt.% to 29.3 wt.% or 60 wt.% to 90 wt.%.

Filling method for various filling amounts

[4] Refrigerant mixture filling method in which a value calculated by using a value obtained by dividing 1.05 by the specific gravity of the gas (refrigerant mixture comprising HFO-1132(E) and HFO-1234yf) at 45°C as a fill constant is defined as 100 wt.% of the filling amount

The following is one example of a transfer method in which the handling temperature during transfer is 40°C. Under the High Pressure Gas Safety Act of Japan, handling containers at temperatures exceeding 40°C is prohibited; therefore, the handling temperature during transfer in Japan is 0°C to 40°C.

The higher the temperature during transfer (handling), the greater the composition change due to transfer during the transfer when transferring a refrigerant mixture in a liquid state from a source container to a target container and/or equipment. Therefore, the transfer method is also applicable at a handling temperature of 0°C to 40°C by using the conditions for transfer at a handling temperature of 40°C.

(1) Refrigerant mixture filling method in which the amount of a refrigerant mixture in a source container is 100 wt.% of the maximum filling amount

Refrigerant mixture filling method at 45°C (filling amount: 100 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 100 wt.% of the maximum filling amount to a target container and/or equipment,
adjusting the proportion of the HFO-1132(E) in the liquid phase of the refrigerant mixture in the source container immediately before the transfer (initial composition) to $(x + y_{17})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance ($a \geq 0$);
x represents the target composition of HFO-1132(E) ($10 \leq x \leq 90$, excluding the range where $y_{17} > a$); and
$y_{17}$ represents a lower limit of a gap between the initial composition and the target composition of HFO-1132(E), $y_{17}$ being a value (wt.%) represented by the following Equation (17):

$$1000y_{17} = L_{17}x^3 - M_{17}x^2 + N_{17}x - P_{17} \quad (17)$$

wherein

$L_{17} = 0.00110a + (0.00747)$
$M_{17} = -0.20355a + (-2.40548)$
$N_{17} = 13.95000a + (161.72667)$
$P_{17} = -1304.75000a + (239.38333)$.

"$\pm a$" (set tolerance) is a difference from the maximum and minimum values within an acceptable range, with the target composition (x) of HFO-1132(E) taken as the reference value, and is an acceptable "gap" from the target composition.
The value a is preferably set within the range of $2 \leq a \leq 4$.
According to the refrigerant mixture filling method of the present disclosure, the composition change in a target container and/or equipment is kept within an acceptable range of $\pm a$ wt.% of the target composition until completion of transfer,
by adjusting the proportion of HFO-1132(E) in the liquid phase in a source container within a specific range before the transfer even when the filling amount of the refrigerant mixture in the source container is 100 wt.% of the maximum filling amount.
The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.
The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(1-1) Filling method in which HFO-1132(E) is kept within a range of $\pm 2$ wt.% of its target composition (x)

An embodiment in which the set tolerance ($\pm a$) is "$\pm 2$" and in which a = 4 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment, the proportion of HFO-1132(E) in the liquid phase of the refrigerant mixture in the source container immediately before the transfer (initial composition) is preferably adjusted to $(x + y_{17\text{-}1})$ wt.% (minimum value) or higher and $(x + 2)$ wt.% (maximum value) or lower
in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \leq x \leq 90$).
$y_{17\text{-}1}$ represents a lower limit of a gap between the initial composition and the target upper-limit composition (x + 2.0) of HFO-1132(E), $y_{17\text{-}1}$ being a value represented by the following Equation (17-1).

$$1000y_{17\text{-}1} = 0.0119(x + 2.0)^3 - 3.2197(x + 2.0)^2 + 217.53 (x + 2.0) - 4979.6 \tag{17-1}$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 2$ wt.% of the target upper-limit composition (x) until completion of transfer,
by adjusting the proportion of HFO-1132(E) in the liquid phase of the mixture in the source container before transfer to about x - 0.9 wt.% to x + 2 wt.% according to Equation (17-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).
When HFO-1132(E) is contained in an amount of 90 wt.%, the composition change is small; therefore, even when the initial composition of HFO-1132(E) is about -0.9 wt.% relative to the target composition (90 wt.%), the proportion of HFO-1132(E) in the liquid phase of the mixture can be kept within $\pm 2$ wt.% of the target composition until completion of transfer.

(1-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment, the proportion of HFO-1132(E) in the liquid phase of the refrigerant mixture in the source container immediately before the transfer (initial composition) is preferably adjusted to $(x + y_{17\text{-}2})$ wt.% (minimum value) or higher and $(x + 1.5)$ wt.% (maximum value) or lower
in order to keep the proportion of HFO-1132(E) in the liquid phase of the refrigerant mixture in the source container within a range of $\pm 1.5$ wt.% of the target composition (x) of HFO-1132(E) during the transfer.

When a = 1.5 and 29.8 < x < 60.1, $y_{17\text{-}2}$ > a; therefore, the range of x is 10 wt.% to 29.8 wt.% or 60.1 wt.% to 90 wt.%.

x represents the target composition of HFO-1132(E) (with the proviso that $10 \leq x \leq 90$).

$y_{17-2}$ represents a lower limit of a gap between the initial composition and the target upper-limit composition (x + 1.5) of HFO-1132(E), $y_{17-2}$ being a value represented by the following Equation (17-2).

$$1000y_{17-2} = 0.0108(x + 1.5)^3 - 3.0161(x + 1.5)^2 + 203.58(x + 1.5) - 3674.9 \qquad (17-2)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.5 wt.% to x + 1.5 wt.% according to Equation (17-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.5 wt.% relative to the target composition (90 wt.%), the proportion of HFO-1132(E) in the liquid phase of the mixture can be kept within $\pm 1.5$ wt.% of the target composition until completion of transfer.

<u>(1-3) Filling method in which HFO-1132(E) is kept within a range of $\pm 1$ wt.% of its target composition (x)</u>

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{17-3}$) wt.% (minimum value) or higher and (x + 1) wt.% % (maximum value) or lower
in order to keep the proportion of HFO-1132(E) in the liquid phase of the refrigerant mixture in the source container within a range of $\pm 1$ wt.% of the target composition (x) of HFO-1132(E) during the transfer.

When a = 1 and $16.1 < x < 76.5$, $y_{17-3} > a$; therefore, the range of x is 10 wt.% to 16.1 wt.% or 76.5 wt.% to 90 wt.%.

x represents the target composition of HFO-1132(E) (with the proviso that $10 \leq x \leq 90$).

$y_{17-3}$ represents a lower limit of a gap between the initial composition and the target upper-limit composition (x + 1.0) of HFO-1132(E), $y_{17-3}$ being a value represented by the following Equation (17-3).

$$1000y_{17-3} = 0.0097(x + 1.0)^3 - 2.8126(x + 1.0)^2 + 189.63(x + 1.0) - 2370.1 \qquad (17-3)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1$ wt.% of the target upper-limit composition (x) until completion of transfer,
by adjusting the proportion of HFO-1132(E) in the liquid phase of the mixture in the source container before transfer to about x - 0.1 wt.% to x + 1 wt.% according to Equation (17-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.1 wt.% relative to the target composition (90 wt.%), the proportion of HFO-1132(E) in the liquid phase of the mixture can be kept within $\pm 1$ wt.% of the target composition until completion of transfer.

(1-4) Refrigerant mixture filling method in which the amount of a refrigerant mixture in a source container is 100 wt.% of the maximum filling amount

Equation (17) can be derived from Equations (17-1) to (17-3). Based on the value of each coefficient in Equations (17-1) to (17-3), $L_{17}$, $M_{17}$, $N_{17}$, and $P_{17}$ of Equation (17) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 100 wt.% of the maximum filling amount to a target container and/or equipment, the proportion of HFO-1132(E) in the liquid phase of the refrigerant mixture in the source container immediately before the transfer (initial composition) is adjusted to $(x + y_{17})$ wt.% (minimum value) or higher and $(x + a)$ wt.% (maximum value) or lower in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{17} > a$); and
$y_{17}$ represents a lower limit of a gap between the initial composition and the target composition of HFO-1132(E), $y_{17}$ being a value (wt.%) represented by the following Equation (11):

$$1000y_{17} = L_{17}x^3 - M_{17}x^2 + N_{17}x - P_{17} \quad (17)$$

wherein

$L_{17} = 0.00110a + (0.00747)$
$M_{17} = -0.20355a + (-2.40548)$
$N_{17} = 13.95000a + (161.72667)$
$P_{17} = -1304.75000a + (239.38333)$.

When a = 1.5 and 29.8 < x < 60.1, $y_{17-2} > a$; therefore, the range of x is 10 wt.% to 29.8 wt.% or 60.1 wt.% to 90 wt.%.

When a = 1 and 16.1 < x < 76.5, $y_{17-3} > a$; therefore, the range of x is 10 wt.% to 16.1 wt.% or 76.5 wt.% to 90 wt.%.

(2) Refrigerant mixture filling method in which the amount of a refrigerant mixture in a source container is 90 wt.% of the maximum filling amount

Refrigerant mixture filling method at 45°C (filling amount: 90 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,

the method comprising,

when transferring the refrigerant mixture in a liquid state from a source container that is filled with the refrigerant mixture in an amount equal to or less than 90 wt.% of the maximum filling amount to a target container and/or equipment,

adjusting the proportion of the HFO-1132(E) in the liquid phase of the refrigerant mixture in the source container immediately before the transfer (initial composition) to $(x + y_{18})$ wt.% (minimum value) or higher and $(x + a)$ wt.% (maximum value) or lower

in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance ($a \geq 0$);

x represents the target composition of HFO-1132(E) ($10 \leq x \leq 90$, excluding the range where $y_{18} > a$); and

$y_{18}$ represents a lower limit of a gap between the initial composition and the target composition of HFO-1132(E), $y_{18}$ being a value (wt.%) represented by the following Equation (18):

$$1000y_{18} = L_{18}x^3 - M_{18}x^2 + N_{18}x - P_{18} \quad (18)$$

wherein

$L_{18}$ = 0.00075a + (0.00775)
$M_{18}$ = -0.14970a + (-2.38980)
$N_{18}$ = 11.43500a + (158.87833)
$P_{18}$ = -1272.15000a + (173.08333).

"$\pm a$" (set tolerance) is a difference from the maximum and minimum values within an acceptable range, with the target composition (x) of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of $\pm a$ wt.% of the target composition until completion of transfer,

by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(2-1) Filling method in which HFO-1132(E) is kept within a range of $\pm 2$ wt.% of its target composition (x)

An embodiment in which the set tolerance ($\pm a$) is "$\pm 2$" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{18-1})$ wt.% (minimum value) or higher and $(x + 2)$ wt.% (maximum value) or lower

in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \leq x \leq 90$).

$y_{18-1}$ represents a lower limit of a gap between the initial composition and the target upper-limit composition (x + 2.0) of HFO-1132 (E), $y_{18-1}$ being a value represented by the following Equation (18-1).

$$1000y_{18-1} = 0.0108(x + 2.0)^3 - 2.9886(x + 2.0)^2 + 204.62(x + 2.0) - 4915.5 \qquad (18-1)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 2$ wt.% of the target upper-limit composition (x) until completion of transfer,
by adjusting the proportion of HFO-1132(E) in the liquid phase of the mixture in the source container before transfer to about x - 1.0 wt.% to x + 2 wt.% according to Equation (18-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.0 wt.% relative to the target composition (90 wt.%), the proportion of HFO-1132(E) in the liquid phase of the mixture can be kept within $\pm 2$ wt.% of the target composition until completion of transfer.

(2-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{18-2}$) wt.% (minimum value) or higher and (x + 1.5) wt.% (maximum value) or lower
in order to keep the proportion of HFO-1132(E) in the liquid phase of the refrigerant mixture in the source container within a range of $\pm 1.5$ wt.% of the target composition (x) of HFO-1132(E) during the transfer.

When a = 1.5 and 33 < x < 56.8, $y_{18-2}$ > a; therefore, the range of x is 10 wt.% to 33 wt.% or 56.8 wt.% to 90 wt.%.

x represents the target composition of HFO-1132(E) (with the proviso that $10 \leq x \leq 90$).

$y_{18-2}$ represents a lower limit of a gap between the initial composition and the target upper-limit composition (x + 1.5) of HFO-1132 (E), $y_{18-2}$ being a value represented by the following Equation (18-2).

$$1000y_{18-2} = 0.0100(x + 1.5)^3 - 2.8389(x + 1.5)^2 + 193.18(x + 1.5) - 3643.4 \qquad (18-2)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.5 wt.% to x + 1.5 wt.% according to Equation (18-2) above.

In the refrigerant mixture filling method in which the composition change of the refrigerant mixture comprising HFO-1132(E) and HFO-1234yf in a target container and/or equipment is kept within an acceptable range of ±1.5 wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.5 wt.% relative to the target composition (90 wt.%), the proportion of HFO-1132(E) in the liquid phase of the mixture can be kept within ±1.5 wt.% of the target composition until completion of transfer.

(2-3) Filling method in which HFO-1132(E) is kept within a range of ±1 wt.% of its target composition (x)

An embodiment in which the set tolerance (±a) is "±1" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{18-3})$ wt.% (minimum value) or higher and $(x + 1)$ wt.% (maximum value) or lower

in order to keep the proportion of HFO-1132(E) in the liquid phase of the refrigerant mixture in the source container within a range of ±1 wt.% of the target composition (x) of HFO-1132(E) during the transfer.

When a = 1 and 17.1 < x < 75.5, $y_{18-3}$ > a; therefore, the range of x is 10 wt.% to 17.1 wt.% or 75.5 wt.% to 90 wt.%.

x represents the target composition of HFO-1132(E) (with the proviso that $10 \leq x \leq 90$).

$y_{18-3}$ represents a lower limit of a gap between the initial composition and the target upper-limit composition $(x + 1.0)$ of HFO-1132(E), $y_{18-3}$ being a value represented by the following Equation (18-3).

$$1000y_{18-3} = 0.0093 (x + 1.0)^3 - 2.6892 (x + 1.0)^2 + 181.75(x + 1.0) - 2371.2 \qquad (18\text{-}3)$$

In the present disclosure,

when a refrigerant mixture comprising HFO-1132(E) and HFO-1234yf is transferred from a source container to a target container and/or equipment,

the composition change in the target container and/or equipment can be kept within a range of ±1 wt.% of the target upper-limit composition (x) until completion of transfer,

by adjusting the proportion of HFO-1132(E) in the liquid phase of the mixture in the source container before transfer to about x - 0.1 wt.% to x + 1 wt.% according to Equation (18-3) above.

In the refrigerant mixture filling method in which the composition change of the refrigerant mixture comprising HFO-1132(E) and HFO-1234yf in a target container and/or equipment is kept within an acceptable range of ±1 wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.1 wt.% relative to the target composition (90 wt.%), the proportion of HFO-1132(E) in the liquid phase of the mixture can be kept within ±1 wt.% of the target composition until completion of transfer.

(2-4) Refrigerant mixture filling method in which the amount of a refrigerant mixture in a source container is 90 wt.% of the maximum filling amount

Equation (18) can be derived from Equations (18-1) to (18-3). Based on the value of each coefficient in Equations (18-1) to (18-3), $L_{18}$, $M_{18}$, $N_{18}$, and $P_{18}$ of Equation (12) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture of 10 to 90 wt.% based on the total of HFO-1132(E) and HFO-1234yf taken as 100 wt.% is transferred in a liquid state from a source container that is filled with the refrigerant mixture in an amount equal to or less than 90 wt.% of the maximum filling amount to a target container and/or equipment,
the proportion of HFO-1132(E) in the liquid phase of the refrigerant mixture in the source container immediately before the transfer (initial composition) is adjusted to $(x + y_{18})$ wt.% (minimum value) or higher and $(x + a)$ wt.% (maximum value) or lower
in order to keep the proportion of HFO-1132(E) in the liquid phase of the refrigerant mixture in the source container within a range of $\pm a$ wt.% of the target composition $(x)$ of HFO-1132(E) during the transfer,

wherein

$\pm a$ represents a set tolerance ($a \geq 0$);
x represents the target composition of HFO-1132(E) ($10 \leq x \leq 90$, excluding the range where $y_{18} > a$); and
$y_{18}$ represents a lower limit of a gap between the initial composition and the target composition of HFO-1132(E), $y_{18}$ being a value (wt.%) represented by the following Equation (18):

$$1000y_{18} = L_{18}x^3 - M_{18}x^2 + N_{18}x - P_{18} \quad (18)$$

wherein

$L_{18} = 0.00075a + (0.00775)$
$M_{18} = -0.14970a + (-2.38980)$
$N_{18} = 11.43500a + (158.87833)$
$P_{18} = -1272.15000a + (173.08333)$.

When $a = 1.5$ and $33 < x < 56.8$, $y_{18-2} > a$; therefore, the range of x is 10 wt.% to 33 wt.% or 56.8 wt.% to 90 wt.%.
When $a = 1$ and $17.1 < x < 75.5$, $y_{18-3} > a$; therefore, the range of x is 10 wt.% to 17.1 wt.% or 75.5 wt.% to 90 wt.%.

<u>(3) Refrigerant mixture filling method in which the amount of a refrigerant mixture in a source container is 80 wt.% of the maximum filling amount</u>

Refrigerant mixture filling method at 45°C (filling amount: 80 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 80 wt.% of the maximum filling amount to a target container and/or equipment,
adjusting the proportion of the HFO-1132(E) in the liquid phase of the refrigerant mixture in the source container immediately before the transfer (initial composition) to $(x + y_{19})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition $(x)$ of the HFO-1132(E) during the transfer,

wherein

$\pm a$ represents a set tolerance ($a \geq 0$);
x represents the target composition of HFO-1132(E) ($10 \leq x \leq 90$, excluding the range where $y_{19} > a$); and
$y_{19}$ represents a lower limit of a gap between the initial composition and the target composition of HFO-1132(E), $y_{19}$ being a value (wt.%) represented by the following Equation (19):

$$1000y_{19} = L_{19}x^3 - M_{19}x^2 + N_{19}x - P_{19} \quad (19)$$

wherein

$L_{19}$ = -0.00020a + (0.00990)
$M_{19}$ = -0.01820a + (-2.62783)
$N_{19}$= 6.37500a + (164.64167)
$P_{19}$ = -1226.35000a + (41.85000)

"$\pm$a" (set tolerance) is a difference from the maximum and minimum values within an acceptable range, with the target composition (x) of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of $\pm$a wt.% of the target composition until completion of transfer,
by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

<u>(3-1) Filling method in which HFO-1132(E) is kept within a range of $\pm$2 wt.% of its target composition (x)</u>

An embodiment in which the set tolerance ($\pm$a) is "$\pm$2" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{19-1}$) wt.% (minimum value) or higher and (x + 2) wt.% (maximum value) or lower
in order to keep the proportion of HFO-1132(E) in the liquid phase of the refrigerant mixture in the source container within a range of $\pm$2 wt.% of the target composition (x) of HFO-1132(E) during the transfer.

x represents the target composition of HFO-1132(E) (with the proviso that $10 \leq x \leq 90$).

$y_{19-1}$ represents a lower limit of a gap between the initial composition and the target upper-limit composition (x + 2.0) of HFO-1132(E), $y_{19-1}$ being a value represented by the following Equation (19-1).

$$1000y_{19-1} = 0.0091(x + 2.0)^3 - 2.7006(x + 2.0)^2 + 190.14(x + 2.0) - 4863.6 \quad (19\text{-}1)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm$2 wt.% of the target upper-limit composition (x) until completion of transfer,
by adjusting the proportion of HFO-1132(E) in the liquid phase of the mixture in the source container before transfer to about x - 1.1 wt.% to x + 2 wt.% according to Equation (19-1) above.

In the refrigerant mixture filling method in which the composition change of the refrigerant mixture comprising HFO-1132(E) and HFO-1234yf in a target container and/or equipment is kept within an acceptable range of ±2 wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.1 wt.% relative to the target composition (90 wt.%), the proportion of HFO-1132(E) in the liquid phase of the mixture can be kept within ±2 wt.% of the target composition until completion of transfer.

(3-2) Filling method in which HFO-1132(E) is kept within a range of ±1.5 wt.% of its target composition (x)

An embodiment in which the set tolerance (±a) is "±1.5" and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is preferably adjusted to $(x + Y_{19\text{-}2})$ wt.% (minimum value) or higher and $(x + 1.5)$ wt.% (maximum value) or lower

in order to keep the proportion of HFO-1132(E) in the liquid phase of the refrigerant mixture in the source container within a range of ±1.5 wt.% of the target composition (x) of HFO-1132(E) during the transfer.

When a = 1.5 and 38.9 < x < 50.4, $y_{19\text{-}2}$ > a; therefore, the range of x is 10 wt.% to 38.9 wt.% or 50.4 wt.% to 90 wt.%.

x represents the target composition of HFO-1132(E) (with the proviso that $10 \leq x \leq 90$).

$y_{19\text{-}2}$ represents a lower limit of a gap between the initial composition and the target upper-limit composition $(x + 1.5)$ of HFO-1132(E), $y_{19\text{-}2}$ being a value represented by the following Equation (19-2).

$$1000y_{19\text{-}2} = 0.0093(x + 1.5)^3 - 2.6824 (x + 1.5)^2 + 183.77(x + 1.5) - 3637.2 \tag{19-2}$$

In the present disclosure,

when a refrigerant mixture comprising HFO-1132(E) and HFO-1234yf is transferred from a source container to a target container and/or equipment,

the composition change in the target container and/or equipment can be kept within a range of ±1.5 wt.% of the target upper-limit composition (x) until completion of transfer,

by adjusting the proportion of HFO-1132(E) in the liquid phase of the mixture in the source container before transfer to about x - 0.6 wt.% to x + 1.5 wt.% according to Equation (19-2) above.

In the refrigerant mixture filling method in which the composition change of the refrigerant mixture comprising HFO-1132(E) and HFO-1234yf in a target container and/or equipment is kept within an acceptable range of ±1.5 wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.6 wt.% relative to the target composition (90 wt.%), the proportion of HFO-1132(E) in the liquid phase of the mixture can be kept within ±1.5 wt.% of the target composition until completion of transfer.

(3-3) Filling method in which HFO-1132(E) is kept within a range of ±1 wt.% of its target composition (x)

An embodiment in which the set tolerance (±a) is "±1" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{19-3})$ wt.% (minimum value) or higher and $(x + 1)$ wt.% (maximum value) or lower

in order to keep the proportion of HFO-1132(E) in the liquid phase of the refrigerant mixture in the source container within a range of $\pm 1$ wt.% of the target composition (x) of HFO-1132(E) during the transfer.

When a = 1 and $18.2 < x < 73.6$, $y_{19-3} > a$; therefore, the range of x is 10 wt.% to 18.2 wt.% or 73.6 wt.% to 90 wt.%.

x represents the target composition of HFO-1132(E) (with the proviso that $10 \leq x \leq 90$).

$y_{19-3}$ represents a lower limit of a gap between the initial composition and the target upper-limit composition $(x + 1.0)$ of HFO-1132(E), $y_{19-3}$ being a value represented by the following Equation (19-3).

$$1000y_{19-3} = 0.0095(x + 1.0)^3 - 2.6642(x + 1.0)^2 + 177.39(x + 1.0) - 2410.9 \qquad (19-3)$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 1$ wt.% of the target upper-limit composition (x) until completion of transfer,

by adjusting the proportion of HFO-1132(E) in the liquid phase of the mixture in the source container before transfer to about x - 0.1 wt.% to x + 1 wt.% according to Equation (19-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.1 wt.% relative to the target composition (90 wt.%), the proportion of HFO-1132(E) in the liquid phase of the mixture can be kept within $\pm 1$ wt.% of the target composition until completion of transfer.

<u>(3-4) Refrigerant mixture filling method in which the amount of a refrigerant mixture in a source container is 80 wt.% of the maximum filling amount</u>

Equation (19) can be derived from Equations (19-1) to (19-3). Based on the value of each coefficient in Equations (19-1) to (19-3), $L_{19}$, $M_{19}$, $N_{19}$, and $P_{19}$ of Equation (19) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 80 wt.% of the maximum filling amount to a target container and/or equipment,

the proportion of HFO-1132(E) in the liquid phase of the refrigerant mixture in the source container immediately before the transfer (initial composition) is adjusted to $(x + y_{19})$ wt.% (minimum value) or higher and $(x + a)$ wt.% (maximum value) or lower

in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);

x represents the target composition of HFO-1132(E) ($10 \leq x \leq 90$, excluding the range where $y_{19} > a$); and
$y_{19}$ represents a lower limit of a gap between the initial composition and the target composition of HFO-1132(E), $y_{19}$ being a value (wt.%) represented by the following Equation (19):

$$1000y_{19} = L_{19}x^3 - M_{19}x^2 + N_{19}x - P_{19} \quad (19)$$

wherein

$L_{19}$ = -0.00020a + (0.00990)
$M_{19}$ = -0.01820a + (-2.62783)
$N_{19}$ = 6.37500a + (164.64167)
$P_{19}$ = -1226.35000a + (41.85000).

When a = 1.5 and 38.9 < x < 50.4, $y_{19\text{-}2} > a$; therefore, the range of x is 10 wt.% to 38.9 wt.% or 50.4 wt.% to 90 wt.%.

When a = 1 and 18.2 < x < 73.6, $y_{19\text{-}3} > a$; therefore, the range of x is 10 wt.% to 18.2 wt.% or 73.6 wt.% to 90 wt.%.

<u>(4) Refrigerant mixture filling method in which the amount of a refrigerant mixture in a source container is 70 wt.% of the maximum filling amount</u>

Refrigerant mixture filling method at 45°C (filling amount: 70 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 70 wt.% of the maximum filling amount to a target container and/or equipment,
adjusting the proportion of the HFO-1132(E) in the liquid phase of the refrigerant mixture in the source container immediately before the transfer (initial composition) to ($x + y_{20}$) wt.% (minimum value) or higher and ($x + a$) wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance ($a \geq 0$);
x represents the target composition of HFO-1132(E) ($10 \leq x \leq 90$, excluding the range where $y_{20} > a$); and
$y_{20}$ represents a lower limit of a gap between the initial composition and the target composition of HFO-1132(E), $y_{20}$ being a value (wt.%) represented by the following Equation (20):

$$1000y_{20} = L_{20}x^3 - M_{20}x^2 + N_{20}x - P_{20} \quad (20)$$

wherein

$L_{20}$ = -0.00050a + (0.01023)
$M_{20}$ = -0.06485a + (-2.70502)
$N_{20}$ = 0.51000a + (170.28000)
$P_{20}$ = -1108.75000a + (-253.78333).

"$\pm a$" (set tolerance) is a difference from the maximum and minimum values within an acceptable range, with the target composition (x) of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of $\pm a$ wt.% of the target composition until completion of transfer,

by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(4-1) Filling method in which HFO-1132(E) is kept within a range of $\pm 2$ wt.% of its target composition (x)

An embodiment in which the set tolerance ($\pm a$) is "$\pm 2$" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{20-1})$ wt.% (minimum value) or higher and $(x + 2)$ wt. % (maximum value) or lower

in order to keep the proportion of HFO-1132(E) in the liquid phase of the refrigerant mixture in the source container within a range of $\pm 2$ wt.% of the target composition (x) of HFO-1132(E) during the transfer.

x represents the target composition of HFO-1132(E) (with the proviso that $10 \leq x \leq 90$).

$y_{20-1}$ represents a lower limit of a gap between the initial composition and the target upper-limit composition (x + 2.0) of HFO-1132(E), $y_{20-1}$ being a value represented by the following Equation (20-1).

$$1000y_{20-1} = 0.0082(x + 2.0)^3 - 2.4456(x + 2.0)^2 + 172.32(x + 2.0) - 4688.8 \qquad (20\text{-}1)$$

In the present disclosure,

when a refrigerant mixture comprising HFO-1132(E) and HFO-1234yf is transferred from a source container to a target container and/or equipment,

the composition change in the target container and/or equipment can be kept within a range of $\pm 2$ wt.% of the target upper-limit composition (x) until completion of transfer,

by adjusting the proportion of HFO-1132(E) in the liquid phase of the mixture in the source container before transfer to about x - 1.1 wt.% to x + 2 wt.% according to Equation (20-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.1 wt.% relative to the target composition (90 wt.%), the proportion of HFO-1132(E) in the liquid phase of the mixture can be kept within $\pm 2$ wt.% of the target composition until completion of transfer.

(4-2) Filling method in which HFO-1132(E) is kept within a range of ±1.5 wt.% of its target composition (x)

An embodiment in which the set tolerance (±a) is "±1.5" and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{20-2})$ wt.% (minimum value) or higher and $(x + 1.5)$ wt.% (maximum value) or lower

in order to keep the proportion of HFO-1132(E) in the liquid phase of the refrigerant mixture in the source container within a range of ±1.5 wt.% of the target composition (x) of HFO-1132(E) during the transfer.

x represents the target composition of HFO-1132(E) (with the proviso that $10 \leq x \leq 90$).

$y_{20-2}$ represents a lower limit of a gap between the initial composition and the target upper-limit composition $(x + 1.5)$ of HFO-1132(E), $y_{20-2}$ being a value represented by the following Equation (20-2).

$$1000y_{20-2} = 0.0087(x + 1.5)^3 - 2.5105(x + 1.5)^2 + 171.81(x + 1.5) - 3580 \qquad (20\text{-}2)$$

In the present disclosure,

when a refrigerant mixture comprising HFO-1132(E) and HFO-1234yf is transferred from a source container to a target container and/or equipment,

the composition change in the target container and/or equipment can be kept within a range of ±1.5 wt.% of the target upper-limit composition (x) until completion of transfer,

by adjusting the proportion of HFO-1132(E) in the liquid phase of the mixture in the source container before transfer to about x - 0.6 wt.% to x + 1.5 wt.% according to Equation (20-2) above.

In the refrigerant mixture filling method in which the composition change of the refrigerant mixture comprising HFO-1132(E) and HFO-1234yf in a target container and/or equipment is kept within an acceptable range of ±1.5 wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.6 wt.% relative to the target composition (90 wt.%), the proportion of HFO-1132(E) in the liquid phase of the mixture can be kept within ±1.5 wt.% of the target composition until completion of transfer.

(4-3) Filling method in which HFO-1132(E) is kept within a range of ±1 wt.% of its target composition (x)

An embodiment in which the set tolerance (±a) is "±1" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{20-3})$ wt.% (minimum value) or higher and $(x + 1)$ wt.% (maximum value) or lower

in order to keep the proportion of HFO-1132(E) in the liquid phase of the refrigerant mixture in the source container within a range of ±1 wt.% of the target composition (x) of HFO-1132(E) during the transfer.

When a = 1 and 20 < x < 71.2, $y_{20-3}$ > a; therefore, the range of x is 10 wt.% to 20 wt.% or 71.2 wt.% to 90 wt.%.

x represents the target composition of HFO-1132(E) (with the proviso that $10 \leq x \leq 90$).

$Y_{20-3}$ represents a lower limit of a gap between the initial composition and the target upper-limit composition (x + 1.0) of HFO-1132(E), $Y_{20-3}$ being a value represented by the following Equation (20-3).

$$1000y_{20-3} = 0.0092(x + 1.0)^3 - 2.5753(x + 1.0)^2 + 171.3(x + 1.0) - 2471.3 \qquad (20\text{-}3)$$

In the present disclosure,

when a refrigerant mixture comprising HFO-1132(E) and HFO-1234yf is transferred from a source container to a target container and/or equipment,
the composition change in the target container and/or equipment can be kept within a range of ±1 wt.% of the target upper-limit composition (x) until completion of transfer,
by adjusting the proportion of HFO-1132(E) in the liquid phase of the mixture in the source container before transfer to about x - 0.2 wt.% to x + 1 wt.% according to Equation (20-3) above.

In the refrigerant mixture filling method in which the composition change of the refrigerant mixture comprising HFO-1132(E) and HFO-1234yf in a target container and/or equipment is kept within an acceptable range of ±1 wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.2 wt.% relative to the target composition (90 wt.%), the proportion of HFO-1132(E) in the liquid phase of the mixture can be kept within ±1 wt.% of the target composition until completion of transfer.

(4-4) Refrigerant mixture filling method in which the amount of a refrigerant mixture in a source container is 70 wt.% of the maximum filling amount

Equation (20) can be derived from Equations (20-1) to (20-3). Based on the value of each coefficient in Equations (20-1) to (20-3), $L_{20}$, $M_{20}$, $N_{20}$, and $P_{20}$ of Equation (20) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 70 wt.% of the maximum filling amount to a target container and/or equipment,
the proportion of HFO-1132(E) in the liquid phase of the refrigerant mixture in the source container immediately before the transfer (initial composition) is adjusted to (x + $y_{20}$) wt.% (minimum value) or higher and (x + a) wt.% (maximum value) or lower
in order to keep the proportion of HFO-1132(E) in the liquid phase of the refrigerant mixture in the source container within a range of ±a wt.% of the target composition (x) of HFO-1132(E) during the transfer,

wherein

±a represents a set tolerance (a ≥ 0);
x represents the target composition of HFO-1132(E) (10 ≤ x ≤ 90, excluding the range where $y_{20}$ > a); and
$y_{20}$ represents a lower limit of a gap between the initial composition and the target composition of HFO-1132(E), $y_{20}$ being a value (wt.%) represented by the following Equation (20):

$$1000y_{20} = L_{20}x^3 - M_{20}x^2 + N_{20}x - P_{20} \qquad (20)$$

wherein

$L_{20}$ = -0.00050a + (0.01023)
$M_{20}$ = -0.06485a + (-2.70502)
$N_{20}$ = 0.51000a + (170.28000)
$P_{20}$ = -1108.75000a + (-253.78333).

When a = 1 and 20 < x < 71.2, $y_{20-3}$ > a; therefore, the range of x is 10 wt.% to 20 wt.% or 71.2 wt.% to 90 wt.%.

(5) Refrigerant mixture filling method in which the amount of a refrigerant mixture in a source container is 60 wt.% of the maximum filling amount

Refrigerant mixture filling method at 45°C (filling amount: 60 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 60 wt.% of the maximum filling amount to a target container and/or equipment,
adjusting the proportion of the HFO-1132(E) in the liquid phase of the refrigerant mixture in the source container immediately before the transfer (initial composition) to $(x + y_{21})$ wt.% (minimum value) or higher and $(x + a)$ wt.% (maximum value) or lower
in order to keep the proportion of the HFO-1132(E) in the liquid phase of the refrigerant mixture in the source container within a range of $\pm a$ wt.% of the target composition (x) of the HFO-1132(E) during the transfer,

wherein

$\pm a$ represents a set tolerance ($a \geq 0$);
x represents the target composition of HFO-1132(E) ($10 \leq x \leq 90$, excluding the range where $y_{21}$ > a); and
$y_{21}$ represents a lower limit of a gap between the initial composition and the target composition of HFO-1132(E), $y_{21}$ being a value (wt.%) represented by the following Equation (21):

$$1000y_{21} = L_{21}x^3 - M_{21}x^2 + N_{21}x - P_{21} \quad (21)$$

wherein

$L_{21}$ = -0.00020a + (0.00857)
$M_{21}$ = -0.02120a + (-2.24700)
$N_{21}$ = 5.95000a + (141.03333)
$P_{21}$ = -1192.25000a + (36.75000).

"$\pm a$" (set tolerance) is a difference from the maximum and minimum values within an acceptable range, with the target composition (x) of HFO-1132(E) taken as the reference value, and is an acceptable "gap" from the target composition.
The value a is preferably set within the range of $2 \leq a \leq 4$.
According to the refrigerant mixture filling method of the present disclosure, the composition change in a target container and/or equipment is kept within an acceptable range of $\pm a$ wt.% of the target composition until completion of transfer,
by adjusting the proportion of HFO-1132(E) in the liquid phase in a source container within a specific range before the transfer even when the filling amount of the refrigerant mixture in the source container is 100 wt.% of the maximum filling amount.
The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.
The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(5-1) Filling method in which HFO-1132(E) is kept within a range of ±2 wt.% of its target composition (x)

An embodiment in which the set tolerance (±a) is "±2" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{21-1})$ wt.% (minimum value) or higher and $(x + 2)$ wt. % (maximum value) or lower

in order to keep the proportion of HFO-1132(E) in the liquid phase of the refrigerant mixture in the source container within a range of ±2 wt.% of the target composition (x) of HFO-1132(E) during the transfer.

x represents the target composition of HFO-1132(E) (with the proviso that $10 \leq x \leq 90$).

$y_{21-1}$ represents a lower limit of a gap between the initial composition and the target upper-limit composition $(x + 2.0)$ of HFO-1132(E), $y_{21-1}$ being a value represented by the following Equation (21-1).

$$1000y_{21-1} = 0.0078(x + 2.0)^3 - 2.3318(x + 2.0)^2 + 164.83(x + 2.0) - 4732.3 \qquad (21\text{-}1)$$

In the present disclosure,

when a refrigerant mixture comprising HFO-1132(E) and HFO-1234yf is transferred from a source container to a target container and/or equipment,

the composition change in the target container and/or equipment can be kept within a range of ±2 wt.% of the target upper-limit composition (x) until completion of transfer,

by adjusting the proportion of HFO-1132(E) in the liquid phase of the mixture in the source container before transfer to about x - 1.2 wt.% to x + 2 wt.% according to Equation (21-1) above.

In the refrigerant mixture filling method in which the composition change of the refrigerant mixture comprising HFO-1132(E) and HFO-1234yf in a target container and/or equipment is kept within an acceptable range of ±2 wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.2 wt.% relative to the target composition (90 wt.%), the proportion of HFO-1132(E) in the liquid phase of the mixture can be kept within ±2 wt.% of the target composition until completion of transfer.

(5-2) Filling method in which HFO-1132(E) is kept within a range of ±1.5 wt.% of its target composition (x)

An embodiment in which the set tolerance (±a) is "±1.5 and in which a = 3 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container immediately before the transfer (initial composition) is preferably adjusted to $(x + y_{21-2})$ wt.% (minimum value) or higher and $(x + 1.5)$ wt.% (maximum value) or lower

in order to keep the proportion of HFO-1132(E) in the liquid phase of the refrigerant mixture in the source container within a range of ±1.5 wt.% of the target composition (x) of HFO-1132(E) during the transfer.

x represents the target composition of HFO-1132(E) (with the proviso that $10 \leq x \leq 90$).

$y_{21-2}$ represents a lower limit of a gap between the initial composition and the target upper-limit composition (x + 1.5) of HFO-1132(E), $y_{21-2}$ being a value represented by the following Equation (21-2).

$$1000y_{21-2} = 0.0080(x + 1.5)^3 - 2.3106(x + 1.5)^2 + 158.88(x + 1.5) - 3540 \qquad (21-2)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.7 wt.% to x + 1.5 wt.% according to Equation (21-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.7 wt.% relative to the target composition (90 wt.%), the proportion of HFO-1132(E) in the liquid phase of the mixture can be kept within $\pm 1.5$ wt.% of the target composition until completion of transfer.

(5-3) Filling method in which HFO-1132(E) is kept within a range of $\pm 1$ wt.% of its target composition (x)

An embodiment in which the set tolerance ($\pm a$) is "$\pm 1$" and in which a = 2 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{21-3}$) wt.% (minimum value) or higher and (x + 1) wt. % (maximum value) or lower
in order to keep the proportion of HFO-1132(E) in the liquid phase of the refrigerant mixture in the source container within a range of $\pm 1$ wt.% of the target composition (x) of HFO-1132(E) during the transfer.

When a = 1 and 22 < x < 68.7, $y_{21-3}$ > a; therefore, the range of x is 10 wt.% to 22 wt.% or 68.7 wt.% to 90 wt.%.
x represents the target composition of HFO-1132(E) (with the proviso that $10 \leq x \leq 90$).
$y_{21-3}$ represents a lower limit of a gap between the initial composition and the target upper-limit composition (x + 1.0) of HFO-1132(E), $y_{21-3}$ being a value represented by the following Equation (21-3).

$$1000y_{21-3} = 0.0082(x + 1.0)^3 - 2.2894(x + 1.0)^2 + 152.93(x + 1.0) - 2347.8 \qquad (21-3)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1$ wt.% of the target upper-limit composition (x) until completion of transfer,
by adjusting the proportion of HFO-1132(E) in the liquid phase of the mixture in the source container before transfer to about x - 0.2 wt.% to x + 1 wt.% according to Equation (21-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.2 wt.% relative to the target composition (90 wt.%), the proportion of HFO-1132(E) in the liquid phase of the mixture can be kept within $\pm 1$ wt.% of the target composition until completion of transfer.

(5-4) Refrigerant mixture filling method in which the amount of a refrigerant mixture in a source container is 60 wt.% of the maximum filling amount

Equation (21) can be derived from Equations (21-1) to (21-3). Based on the value of each coefficient in Equations (21-1) to (21-3), $L_{21}$, $M_{21}$, $N_{21}$, and $P_{21}$ of Equation (21) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 60 wt.% of the maximum filling amount to a target container and/or equipment,

the proportion of HFO-1132(E) in the liquid phase of the refrigerant mixture in the source container immediately before the transfer (initial composition) is adjusted to $(x + y_{21})$ wt.% (minimum value) or higher and $(x + a)$ wt.% (maximum value) or lower

in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance ($a \geq 0$);
x represents the target composition of HFO-1132(E) ($10 \leq x \leq 90$, excluding the range where $y_{21} > a$); and
$y_{21}$ represents a lower limit of a gap between the initial composition and the target composition of HFO-1132(E), $y_{21}$ being a value (wt.%) represented by the following Equation (21):

$$1000y_{21} = L_{21}x^3 - M_{21}x^2 + N_{21}x - P_{21} \quad (21)$$

wherein

$L_{21} = -0.00020a + (0.00857)$
$M_{21} = -0.02120a + (-2.24700)$
$N_{21} = 5.95000a + (141.03333)$
$P_{21} = -1192.25000a + (36.75000)$.

When a = 1.5 and 22 < x < 68.7, $y_{21-3} > a$; therefore, the range of x is 10 wt.% to 22 wt.% or 68.7 wt.% to 90 wt.%.

(6) Refrigerant mixture filling method in which the amount of a refrigerant mixture in a source container is 50 wt.% of the maximum filling amount

Refrigerant mixture filling method at 45°C (filling amount: 50 wt.% of the maximum filling amount)

A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 90 wt.% based on the total of the HFO-1132(E) and the HFO-1234yf taken as 100 wt.%,
the method comprising,
when transferring the refrigerant mixture in a liquid state from a source container that is filled with the refrigerant mixture in an amount equal to or less than 50 wt.% of the maximum filling amount to a target container and/or equipment,

adjusting the proportion of the HFO-1132(E) in the liquid phase of the refrigerant mixture in the source container immediately before the transfer (initial composition) to $(x + y_{22})$ wt.% (minimum value) or higher and $(x + a)$ wt.% (maximum value) or lower

in order to keep the proportion of the HFO-1132(E) in the liquid phase of the refrigerant mixture in the source container within a range of $\pm a$ wt.% of the target composition $(x)$ of the HFO-1132(E) during the transfer,

wherein

$\pm a$ represents a set tolerance $(a \geq 0)$;

x represents the target composition of HFO-1132(E) $(10 \leq x \leq 90$, excluding the range where $y_{22} > a)$; and

$y_{22}$ represents a lower limit of a gap between the initial composition and the target composition of HFO-1132(E), $y_{22}$ being a value (wt.%) represented by the following Equation (22):

$$1000y_{22} = L_{22}x^3 - M_{22}x^2 + N_2x - P_{22} \quad (22)$$

wherein

$L_{22} = 0.00080a + (0.00480)$
$M_{22} = -0.14185a + (-1.65582)$
$N_{22} = 9.66000a + (114.03667)$
$P_{22} = -1211.55000a + (167.51667)$

"$\pm a$" (set tolerance) is a difference from the maximum and minimum values within an acceptable range, with the target composition $(x)$ of HFO-1132(E) taken as the reference value, and is an acceptable "gap" from the target composition.

The value a is preferably set within the range of $2 \leq a \leq 4$.

According to the refrigerant mixture filling method of the present disclosure, the composition change in a target container and/or equipment is kept within an acceptable range of $\pm a$ wt.% of the target composition until completion of transfer,

by adjusting the proportion of HFO-1132(E) in the liquid phase in a source container within a specific range before the transfer even when the filling amount of the refrigerant mixture in the source container is 100 wt.% of the maximum filling amount.

The "target composition" of HFO-1132(E) is the desired concentration of HFO-1132(E) in the target container and/or equipment within the overall composition (liquid phase and gas phase) of a refrigerant mixture comprising HFO-1132(E) and HFO-1234yf.

The boiling point of HFO-1132(E) (-52.5°C) is lower than that of HFO-1234yf (-29.4°C). Therefore, when the space created due to refrigerant extraction is replenished with a refrigerant mixture while evaporation from the liquid phase occurs during transfer, HFO-1132(E) evaporates in an amount greater than that of HFO-1234yf, which causes a reduction in HFO-1132(E) concentration in the liquid phase. For this reason, the filling amount of HFO-1132(E) in a source container before transfer is preferably greater than the target composition.

(6-1) Filling method in which HFO-1132(E) is kept within a range of $\pm 2$ wt.% of its target composition $(x)$

An embodiment in which the set tolerance $(\pm a)$ is "$\pm 2$" and in which a = 4 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 92 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,

the proportion of HFO-1132(E) in the liquid phase of the refrigerant mixture in the source container immediately before the transfer (initial composition) is preferably adjusted to $(x + Y_{22-1})$ wt.% (minimum value) or higher and $(x + 2)$ wt.% (maximum value) or lower

in order to keep the proportion of HFO-1132(E) in the liquid phase of the refrigerant mixture in the source container within a range of $\pm 2$ wt.% of the target composition $(x)$ of HFO-1132(E) during the transfer.

x represents the target composition of HFO-1132(E) (with the proviso that $10 \leq x \leq 90$).

$y_{22-1}$ represents a lower limit of a gap between the initial composition and the target upper-limit composition $(x +$

2.0) of HFO-1132(E), $y_{22-1}$ being a value represented by the following Equation (22-1).

$$1000y_{22-1} = 0.008(x + 2.0)^3 - 2.2232(x + 2.0)^2 + 152.68(x + 2.0) - 4678.7 \qquad (22-1)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 2$ wt.% of the target upper-limit composition (x) until completion of transfer,
by adjusting the proportion of HFO-1132(E) in the liquid phase of the mixture in the source container before transfer to about x - 1.2 wt.% to x + 2 wt.% according to Equation (22-1) above.

In the refrigerant mixture filling method in which the composition change of the refrigerant mixture comprising HFO-1132(E) and HFO-1234yf in a target container and/or equipment is kept within an acceptable range of $\pm 2$ wt.% of the target composition until completion of transfer, the upper limit of the proportion of HFO-1132(E) in the liquid phase of the refrigerant mixture comprising HFO-1132(E) and HFO-1234yf is +2 wt.% relative to the target composition of HFO-1132(E).

When HFO-1132(E) is contained in an amount of 90 wt.%, the composition change is small; therefore, even when the initial composition of HFO-1132(E) is about -1.2 wt.% relative to the target composition (90 wt.%), the proportion of HFO-1132(E) in the liquid phase of the mixture can be kept within $\pm 2$ wt.% of the target composition until completion of transfer.

(6-2) Filling method in which HFO-1132(E) is kept within a range of $\pm 1.5$ wt.% of its target composition (x)

An embodiment in which the set tolerance ($\pm a$) is "$\pm 1.5$" and in which a = 3 is described below.
In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91.5 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,
the proportion of HFO-1132(E) in the liquid phase of the refrigerant mixture in the source container immediately before the transfer (initial composition) is preferably adjusted to (x + $y_{22-2}$) wt.% (minimum value) or higher and (x + 1.5) wt.% (maximum value) or lower
in order to keep the proportion of HFO-1132(E) in the liquid phase of the refrigerant mixture in the source container within a range of $\pm 1.5$ wt.% of the target composition (x) of HFO-1132(E) during the transfer.

x represents the target composition of HFO-1132(E) (with the proviso that $10 \leq x \leq 90$).
$y_{22-2}$ represents a lower limit of a gap between the initial composition and the target upper-limit composition (x + 1.5) of HFO-1132(E), $y_{22-2}$ being a value represented by the following Equation (22-2).

$$1000y_{22-2} = 0.0072(x + 1.5)^3 - 2.0814(x + 1.5)^2 + 143.02(x + 1.5) - 3467.1 \qquad (22-2)$$

In the present disclosure,

when a refrigerant mixture comprising HFO-1132(E) and HFO-1234yf is transferred from a source container to a target container and/or equipment,
the composition change in the target container and/or equipment can be kept within a range of $\pm 1.5$ wt.% of the target upper-limit composition (x) until completion of transfer,
by adjusting the proportion of HFO-1132(E) in the liquid phase of the mixture in the source container before transfer to about x - 0.7 wt.% to x + 1.5 wt.% according to Equation (22-2) above.

In the refrigerant mixture filling method in which the composition change of the refrigerant mixture comprising HFO-1132(E) and HFO-1234yf in a target container and/or equipment is kept within an acceptable range of $\pm 1.5$ wt.% of the target composition until completion of transfer, the upper limit of the proportion of HFO-1132(E) in the liquid phase of the refrigerant mixture comprising HFO-1132(E) and HFO-1234yf is +1.5 wt.% relative to the target composition of HFO-1132(E).

When HFO-1132(E) is contained in an amount of 90 wt.%, the composition change is small; therefore, even when the initial composition of HFO-1132(E) is about -0.7 wt.% relative to the target composition (90 wt.%), the proportion of HFO-1132(E) in the liquid phase of the mixture can be kept within $\pm 1.5$ wt.% of the target composition until completion of transfer.

(6-3) Filling method in which HFO-1132(E) is kept within a range of $\pm 1$ wt.% of its target composition (x)

An embodiment in which the set tolerance ($\pm a$) is "$\pm 1$" and in which a = 2 is described below.

In the refrigerant mixture filling method of the present disclosure,

when a refrigerant mixture comprising HFO-1132(E) and HFO-1234yf wherein HFO-1132(E) is present in the liquid phase of the refrigerant mixture in an amount of 10 to 91 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment, the proportion of HFO-1132(E) in the liquid phase of the refrigerant mixture in the source container immediately before the transfer (initial composition) is preferably adjusted to ($x + y_{22\text{-}3}$) wt.% (minimum value) or higher and ($x + 1$) wt.% (maximum value) or lower in order to keep the proportion of HFO-1132(E) in the liquid phase of the refrigerant mixture in the source container within a range of $\pm 1$ wt.% of the target composition (x) of HFO-1132(E) during the transfer.

When a = 1 and $25.7 < x < 64.3$, $y_{22\text{-}3} > a$; therefore, the range of x is 10 wt.% to 25.7 wt.% or 64.3 wt.% to 90 wt.%.

x represents the target composition of HFO-1132(E) (with the proviso that $10 \leq x \leq 90$).

$y_{22\text{-}3}$ represents a lower limit of a gap between the initial composition and the target upper-limit composition ($x + 1.0$) of HFO-1132(E), $y_{22\text{-}3}$ being a value represented by the following Equation (22-3).

$$1000 y_{22\text{-}3} = 0.0064(x + 1.0)^3 - 1.9395(x + 1.0)^2 + 133.36(x + 1.0) - 2255.6 \qquad (22\text{-}3)$$

In the present disclosure,

when a refrigerant mixture comprising HFO-1132(E) and HFO-1234yf is transferred from a source container to a target container and/or equipment, the composition change in the target container and/or equipment can be kept within a range of $\pm 1$ wt.% of the target upper-limit composition (x) until completion of transfer, by adjusting the proportion of HFO-1132(E) in the liquid phase of the mixture in the source container before transfer to about $x - 0.3$ wt.% to $x + 1$ wt.% according to Equation (22-3) above.

In the refrigerant mixture filling method in which the composition change of the refrigerant mixture comprising HFO-1132(E) and HFO-1234yf in a target container and/or equipment is kept within an acceptable range of $\pm 1$ wt.% of the target composition until completion of transfer, the upper limit of the proportion of HFO-1132(E) in the liquid phase of the refrigerant mixture comprising HFO-1132(E) and HFO-1234yf is +1 wt.% relative to the target composition of HFO-1132(E).

When HFO-1132(E) is contained in an amount of 90 wt.%, the composition change is small; therefore, even when the initial composition of HFO-1132(E) is about -0.3 wt.% relative to the target composition (90 wt.%), the proportion of HFO-1132(E) in the liquid phase of the mixture can be kept within $\pm 1$ wt.% of the target composition until completion of transfer.

(6-4) Refrigerant mixture filling method in which the amount of a refrigerant mixture in a source container is 50 wt.% of the maximum filling amount

Equation (22) can be derived from Equations (22-1) to (22-3). Based on the value of each coefficient in Equations (22-1) to (22-3), $L_{22}$, $M_{22}$, $N_{22}$, and $P_{22}$ of Equation (22) can be calculated from the target composition (x) with respect to the set tolerance (a).

In the refrigerant mixture filling method of the present disclosure,

when the refrigerant mixture comprising HFO-1132(E) and HFO-1234yf wherein HFO-1132(E) is present in the liquid phase of the refrigerant mixture in an amount of 10 to 90 wt.% based on the total of HFO-1132(E) and HFO-1234yf taken as 100 wt.% is transferred in a liquid state from a source container that is filled with the refrigerant mixture in an amount equal to or less than 50 wt.% of the maximum filling amount to a target container and/or equipment,

the proportion of HFO-1132(E) in the liquid phase of the refrigerant mixture in the source container immediately before the transfer (initial composition) is adjusted to $(x + y_{22})$ wt.% (minimum value) or higher and $(x + a)$ wt.% (maximum value) or lower

in order to keep the proportion of HFO-1132(E) in the liquid phase of the refrigerant mixture in the source container within a range of $\pm a$ wt.% of the target composition (x) of HFO-1132(E) during the transfer,

wherein

$\pm a$ represents a set tolerance $(a \geq 0)$;
x represents the target composition of HFO-1132(E) $(10 \leq x \leq 90$, excluding the range where $y_{22} > a)$; and
$y_{22}$ represents a lower limit of a gap between the initial composition and the target composition of HFO-1132(E), $y_{22}$ being a value (wt.%) represented by the following Equation (22):

$$1000y_{22} = L_{22}x^3 - M_{22}x^2 + N_2x - P_{22} \quad (22)$$

wherein

$L_{22} = 0.00080a + (0.00480)$
$M_{22} = -0.14185a + (-1.65582)$
$N_{22} = 9.66000a + (114.03667)$
$P_{22} = -1211.55000a + (167.51667)$

When a = 1 and $25.7 < x < 64.3$, $y_{22-3} > a$; therefore, the range of x is 10 wt.% to 25.7 wt.% or 64.3 wt.% to 90 wt.%.

[5] When adding a third component to the refrigerant mixture

The refrigerant mixture particularly contemplated by the present disclosure is a refrigerant mixture comprising HFO-1132(E) and HFO-1234yf wherein HFO-1132(E) is present in an amount of 10 to 92 wt.% based on the total of HFO-1132(E) and HFO-1234yf taken as 100 wt.%.

In order to improve compatibility with refrigerating machine oil, suppress flammability, reduce GWP, enhance refrigerating capacity, and the like, another non-azeotropic compound may be added to the refrigerant mixture of the present disclosure within a range that does not significantly impair the compositional change of the refrigerant mixture. In the present disclosure, the term "non-azeotropic compound" refers to a compound that does not form an azeotrope with HFO-1132(E), HFO-1234yf, or a refrigerant mixture of HFO-1132(E) and HFO-1234yf.

In the refrigerant mixture of the present disclosure, when the refrigerant mixture comprises HFO-1132(E) and HFO-1234yf and further comprises another non-azeotropic compound, the amount of the other non-azeotropic compound added is preferably about 1 wt.% to 10 wt.% based on 100 wt.% of the total refrigerant mixture.

Another non-azeotropic compound that may be contained in the refrigerant mixture of the present disclosure is not particularly limited. A preferred non-azeotropic compound is HFC, such as HFC-125, HFC-152a, or HFC-143a; HFO, such as HFC, HFO-1234ze, HFO-1243zf, or HFO-1225ye; isobutane; butane; propane CO2; or the like. The other non-azeotropic compound may be one of these other non-azeotropic compounds used singly or a combination (blend) of two or more of these.

[6] Source container

The source container is preferably a hermetically sealed container that can store the refrigerant mixture. A preferred source container is a hermetically sealed container, such as a 5 L to 1,000 L cylinder, an ISO container, a lorry tank, or a stationary storage tank.

When the capacity of the source container is small and the amount extracted at one time is large (i.e., when the proportion of the amount extracted is high relative to the capacity of the source container), the refrigerant mixture is susceptible to compositional change.

If the initial filling amount of the refrigerant mixture in the source container is 60 wt.% to 100 wt.% of the maximum filling amount, the filling method of the present disclosure may perform transfer in multiple steps until completion of transfer or may even suspend the transfer during the process without transferring the entire liquid phase.

[7] Target container

The target container and/or equipment is preferably a hermetically sealed container that can store the refrigerant mixture supplied from the source container.

A preferred target container is a hermetically sealed container, such as a 5 L to 1,000 L cylinder, an ISO container, a lorry tank, or a stationary storage tank.

Preferred target equipment is equipment such as heating and cooling equipment, a freezer, a refrigerator, or hot water equipment. The target container is preferably a device that uses a vapor-compression refrigeration cycle, and more preferably refrigeration and air conditioning equipment, a refrigerator, hot water equipment, or the like.

A vapor-compression refrigeration apparatus produced by the filling method of the present disclosure comprises refrigerant and a main body of a refrigeration apparatus. The main body of the refrigeration apparatus is not particularly limited and a main body of a known refrigeration apparatus can be directly used.

[8] Transfer means, application examples

In the filling method of the present disclosure, any conventional means may be used to transfer. Preferred means are those that use pressure difference, pumps, or the like.

Under the High Pressure Gas Safety Act of Japan, handling containers at temperatures exceeding 40°C is prohibited; therefore, the handling temperature during transfer in Japan is basically 0°C to 40°C. International laws and related regulations also require that handling at high temperatures be avoided.

The higher the temperature during transfer (handling), the greater the composition change due to transfer. Therefore, the transfer method is also applicable at a handling temperature of 0°C to 40°C by using the conditions for transfer at a handling temperature of 40°C according to the filling method of the present disclosure.

Examples

The following provides a more detailed explanation using Examples. However, the present disclosure is not limited to these Examples.

Reference Example

A 10 L hermetically sealed container (source container) was filled with trans-1,2-difluoroethylene (HFO-1132(E)) and 2,3,3,3-tetrafluoropropene (HFO-1234yf) in the maximum amount that could be loaded with the composition immediately before transfer so that the liquid phase had a fixed composition at 40°C, and the container was maintained at 40°C.

The maximum filling amount is defined by law and calculated as below:

- G = V/C
- G: Mass of fluorocarbon (kg)
- V: Capacity (L) of the container
- C: Constant according to the type of fluorocarbon

The fill constant C of gas is determined in Japan as a value obtained by dividing 1.05 by the specific gravity of the gas at 48°C.

When export is involved, according to international law, the fill constant C of gas is defined as a value obtained by dividing 1.05 by the specific gravity of the gas at 65°C when passing through tropical regions.

When export is involved, according to international law, the fill constant C of gas is defined as a value obtained by dividing 1.05 by the specific gravity of the gas at 45°C when only regions other than tropical regions are involved.

This time, a value obtained by dividing 1.05 by the specific gravity of the gas at 45°C or 65°C was used as the fill constant.

The reasons for selecting 40°C as the temperature during the transfer are as follows.

- The use of containers at a temperature over 40°C is prohibited by the High Pressure Gas Safety Act of Japan.
- International law etc. also require avoiding the use of containers at a high temperature.
- A larger composition change develops at a higher temperature.

Data obtained at a temperature of 40°C is assumed to be data from the severest conditions.

Subsequently, the liquid phase was gradually transferred from the container to another empty container (target container) using a pump. Part of the gas was collected through a sampling valve disposed in the middle of a pipe for extracting the liquid phase, and the component composition was analyzed by gas chromatography.

Table 1 shows the results of composition changes during the transfer in the Reference Example when the filling amount is calculated by using, as the fill constant, values obtained by dividing 1.05 by the specific gravity of the gas at 45°C.

Table 1

| Filling Amount | HFO-1132(E) Target Composition | Gap (a) between Target Upper-limit (x) and Lower-limit Compositions | HFO-1132(E) Target Upper-limit Composition (x) | HFO-1132(E) Target Lower-limit Composition (x-a) | HFO-1132(E) Composition before Transfer | HFO-1132(E) Composition after Extraction of Liquid | Gap between Initial Composition and Target Upper-limit Composition of HFO-1132(E) | Composition after Extraction of Liquid ≤ Target Lower-limit Composition |
|---|---|---|---|---|---|---|---|---|
| wt.% | wt.% | wt.% | wt.% | wt.% | wt.% | wt.% | wt.% | ≤ : × |
| 100 | 70.0 | 4.0 | 72.0 | 68.0 | 72.0 | 69.7 | -2.3 | ○ |
| 100 | 70.0 | 4.0 | 72.0 | 68.0 | 71.0 | 68.6 | -3.4 | ○ |
| 100 | 70.0 | 4.0 | 72.0 | 68.0 | 70.0 | 67.6 | -4.4 | × |
| 100 | 40.0 | 4.0 | 42.0 | 38.0 | 42.0 | 38.7 | -3.3 | ○ |
| 100 | 40.0 | 4.0 | 42.0 | 38.0 | 41.0 | 37.7 | -4.3 | × |
| 100 | 80.0 | 3.0 | 81.5 | 78.5 | 81.5 | 79.9 | -1.6 | ○ |
| 100 | 80.0 | 3.0 | 81.5 | 78.5 | 80.9 | 78.9 | -2.6 | ○ |
| 100 | 80.0 | 3.0 | 81.5 | 78.5 | 79.5 | 77.8 | -3.7 | × |
| 100 | 70.0 | 3.0 | 71.5 | 68.5 | 71.5 | 69.2 | -2.3 | ○ |
| 100 | 70.0 | 3.0 | 71.5 | 68.5 | 70.5 | 68.1 | -3.4 | × |
| 100 | 40.0 | 3.0 | 41.5 | 38.5 | 41.5 | 38.2 | -3.3 | × |
| 100 | 80.0 | 2.0 | 81.0 | 79.0 | 81.0 | 79.4 | -1.6 | ○ |
| 100 | 80.0 | 2.0 | 81.0 | 79.0 | 80.0 | 78.3 | -2.7 | × |
| 100 | 50.0 | 2.0 | 51.0 | 49.0 | 51.0 | 47.7 | -3.3 | × |
| 100 | 10.0 | 2.0 | 11.0 | 9.0 | 11.0 | 9.6 | -1.4 | ○ |
| 100 | 10.0 | 2.0 | 11.0 | 9.0 | 10.0 | 8.7 | -2.3 | × |
| 60 | 70.0 | 4.0 | 72.0 | 68.0 | 71.4 | 69.6 | -2.4 | ○ |
| 60 | 70.0 | 4.0 | 72.0 | 68.0 | 70.4 | 68.5 | -3.5 | ○ |
| 60 | 70.0 | 4.0 | 72.0 | 68.0 | 69.4 | 67.4 | -4.6 | × |
| 60 | 40.0 | 4.0 | 42.0 | 38.0 | 41.1 | 38.5 | -3.5 | ○ |
| 60 | 40.0 | 4.0 | 42.0 | 38.0 | 40.1 | 37.5 | -4.5 | × |
| 60 | 80.0 | 3.0 | 81.5 | 78.5 | 81.1 | 79.8 | -1.7 | ○ |
| 60 | 80.0 | 3.0 | 81.5 | 78.5 | 80.1 | 78.8 | -2.7 | ○ |
| 60 | 80.0 | 3.0 | 81.5 | 78.5 | 79.0 | 77.7 | -3.8 | × |
| 60 | 70.0 | 3.0 | 71.5 | 68.5 | 70.9 | 69.0 | -2.5 | ○ |
| 60 | 70.0 | 3.0 | 71.5 | 68.5 | 69.9 | 68.0 | -3.5 | × |
| 60 | 40.0 | 3.0 | 41.5 | 38.5 | 40.6 | 38.0 | -3.5 | ○ |
| 60 | 80.0 | 2.0 | 81.0 | 79.0 | 80.6 | 79.3 | -1.7 | ○ |
| 60 | 80.0 | 2.0 | 81.0 | 79.0 | 79.6 | 78.2 | -2.8 | × |
| 60 | 50.0 | 2.0 | 51.0 | 49.0 | 50.1 | 47.5 | -3.5 | × |
| 60 | 10.0 | 2.0 | 11.0 | 9.0 | 10.6 | 9.5 | -1.5 | ○ |
| 60 | 10.0 | 2.0 | 11.0 | 9.0 | 9.6 | 8.6 | -2.4 | × |

Table 1 reveals that the concentration of HFO-1132(E) in the refrigerant mixture containing HFO-1132(E) and HFO-1234yf at the time of the completion of the transfer was lower than that at the time of the start of the transfer. This is because the boiling point of HFO-1132(E) (boiling point: -52.5°C) is lower than the boiling point of HFO-1234yf (boiling point: -29.4°C), and when the space created due to extraction of the refrigerant is refilled with vapor evaporated from the liquid phase during the transfer, HFO-1132(E) evaporates in an amount greater than that of HFO-1234yf, causing a reduction in the HFO-1132(E) concentration in the liquid phase.

It was found that HFO-1132(E) was preferably loaded into a source container before the transfer in an amount greater than that of the target composition.

Table 1 shows that when a certain target composition is determined, and the width of the upper and lower compositions including the target composition is set in the range of 2 wt.% to 4 wt.%, if the transfer is started, without taking any measure, while setting a certain composition within the composition width as the initial composition, the composition at the time of the completion of the transfer (at the time of extraction of the liquid) may be equal to or lower than the target lower-limit composition.

Thus, refrigeration capacity and refrigerant capacity (e.g., COP) expected from the target composition cannot be ensured during start and completion of the transfer.

When a certain target composition, and a target upper-limit composition and a lower-limit composition including the target composition were set, in what composition range the initial composition should be set in order to enable all of the compositions during start and completion of the transfer to fall within the range from the target lower-limit composition to the upper-limit composition was clarified.

[1] Refrigerant mixture filling method in which a value calculated by using a value obtained by dividing 1.05 by the specific gravity of the gas (refrigerant mixture comprising HFO-1132(E) and HFO-1234yf) at 65°C as a fill constant is defined as 100 wt.% of the filling amount

Refrigerant mixture filling method at 65°C

(1) Filling method for the case in which the difference between the target upper-limit composition and the target lower-limit composition is 4.0 wt.%

(1-1) The case in which the initial filling amount in the source container is 100 wt.% of the maximum filling amount (65°C/4.0 wt.%/100 wt.%)

Example 1-1: The initial filling amount in the source container is 100 wt.% of the maximum filling amount.

A 10 L hermetically sealed container (source container) was filled with HFO-1132(E) and HFO-1234yf to the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 2 shows the results of composition changes during the transfer when the initial composition was adjusted to the target upper-limit composition.

Table 2

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.9 | -3.1 |
| 82.0 | 82.0 | 79.7 | -2.3 |
| 72.0 | 72.0 | 70.3 | -1.7 |
| 62.0 | 62.0 | 60.8 | -1.2 |
| 52.0 | 52.0 | 51.1 | -1.0 |
| 42.0 | 42.0 | 41.2 | -0.8 |
| 32.0 | 32.0 | 30.9 | -1.1 |
| 22.0 | 22.0 | 20.2 | -1.8 |
| 12.0 | 12.0 | 9.1 | -2.9 |

As shown in Table 2, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 3 shows the lower limit ($y_{1-1}$) of the gap between the initial composition and the target upper-limit composition in this case.

Table 3

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.9 | 88.1 | -3.1 |
| 82.0 | 79.7 | 78.1 | -2.3 |
| 72.0 | 70.3 | 68.1 | -1.7 |
| 62.0 | 60.8 | 58.0 | -1.2 |
| 52.0 | 51.1 | 48.0 | -1.0 |
| 42.0 | 41.2 | 38.0 | -0.8 |
| 32.0 | 30.9 | 28.1 | -1.1 |
| 22.0 | 20.2 | 18.1 | -1.8 |
| 12.0 | 9.1 | 8.0 | -2.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.1 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{1-1}$) of the gap between the initial composition and the target upper-limit composition can be represented by the following equation using the target composition (x).

$$1000y_{1-1} = 0.0104x^3 - 2.9042x^2 + 198.94x - 4854.8 \quad (1-1)$$

By setting the lower limit ($y_{1-1}$) based on Table 3, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{1-1}$ to the target upper-limit composition, the composition can be kept within the range from the target upper-limit composition - 4.0 wt.% (the target lower-limit composition) to the target upper-limit composition throughout the process from before the transfer until the completion of the transfer.

(1-2) The case in which the initial filling amount in the source container is 90 wt.% of the maximum filling amount (65°C/4.0 wt.%/90 wt.%)

Example 1-2: The initial filling amount in the source container is 90 wt.% of the maximum filling amount.

A 10 L hermetically sealed container (source container) was filled with HFO-1132(E) and HFO-1234yf to 90 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 4 shows the results of composition changes during the transfer when the initial composition was adjusted to the target upper-limit composition.

Table 4

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.9 | -3.1 |
| 82.0 | 82.0 | 79.6 | -2.4 |
| 72.0 | 72.0 | 70.2 | -1.8 |
| 62.0 | 62.0 | 60.6 | -1.4 |
| 52.0 | 52.0 | 51.0 | -1.0 |
| 42.0 | 42.0 | 41.0 | -1.0 |
| 32.0 | 32.0 | 30.7 | -1.3 |
| 22.0 | 22.0 | 20.1 | -1.9 |
| 12.0 | 12.0 | 9.1 | -2.9 |

As shown in Table 4, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 5 shows the lower limit ($y_{1-2}$) of the gap between the initial composition and the target upper-limit composition in this case.

Table 5

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.9 | 88.0 | -3.1 |
| 82.0 | 79.6 | 78.1 | -2.4 |
| 72.0 | 70.2 | 68.1 | -1.8 |
| 62.0 | 60.6 | 58.0 | -1.4 |
| 52.0 | 51.0 | 48.1 | -1.0 |
| 42.0 | 41.0 | 38.0 | -1.0 |
| 32.0 | 30.7 | 28.0 | -1.3 |
| 22.0 | 20.1 | 18.0 | -1.9 |
| 12.0 | 9.1 | 8.0 | -2.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.1 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{1-2}$) of the gap between the initial composition and the target upper-limit composition can be represented by the following equation using the target composition (x).

$$1000y_{1-2} = 0.0097x^3 - 2.748x^2 + 189.39x - 4829.8 \quad (1-2)$$

By setting the lower limit ($y_{1-2}$) based on Table 5, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{1-2}$ to the target upper-limit composition, the composition can be kept within the range from the target upper-limit composition - 4.0 wt.% (the target lower-limit composition) to the target upper-limit composition throughout the process from before the transfer until the completion of the transfer.

<u>(1-3) The case in which the initial filling amount in the source container is 80 wt.% of the maximum filling amount (65°C/4.0 wt.%/80 wt.%)</u>

Example 1-3: The initial filling amount in the source container is 80 wt.% of the maximum filling amount.

A 10 L hermetically sealed container (source container) was filled with HFO-1132(E) and HFO-1234yf to 80 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 6 shows the results of composition changes during the transfer when the initial composition was adjusted to the target upper-limit composition.

Table 6

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.8 | -3.2 |
| 82.0 | 82.0 | 79.5 | -2.5 |
| 72.0 | 72.0 | 70.0 | -2.0 |
| 62.0 | 62.0 | 60.5 | -1.5 |
| 52.0 | 52.0 | 50.8 | -1.2 |
| 42.0 | 42.0 | 40.9 | -1.1 |
| 32.0 | 32.0 | 30.6 | -1.4 |
| 22.0 | 22.0 | 20.0 | -2.0 |
| 12.0 | 12.0 | 9.1 | -2.9 |

As shown in Table 6, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 7 shows the lower limit ($y_{1-3}$) of the gap between the initial composition and the target upper-limit composition in this case.

Table 7

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.8 | 88.0 | -3.2 |
| 82.0 | 79.5 | 78.0 | -2.5 |
| 72.0 | 70.0 | 68.0 | -2.0 |
| 62.0 | 60.5 | 58.1 | -1.5 |
| 52.0 | 50.8 | 48.0 | -1.2 |
| 42.0 | 40.9 | 38.1 | -1.1 |
| 32.0 | 30.6 | 28.1 | -1.4 |
| 22.0 | 20.0 | 18.0 | -2.0 |
| 12.0 | 9.1 | 8.1 | -2.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.2 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{1-3}$) of the gap between the initial composition and the target upper-limit composition can be represented by the following equation using the target composition (x).

$$1000y_{1-3} = 0.0088x^3 - 2.5389x^2 + 175.79x - 4713.9 \quad (1\text{-}3)$$

By setting the lower limit ($y_{1-3}$) based on Table 7, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{1-3}$ to the target upper-limit composition, the composition can be kept within the range from the target upper-limit composition - 4.0 wt.% (the target lower-limit composition) to the target upper-limit composition throughout the process from before the transfer until the completion of the transfer.

(1-4) The case in which the initial filling amount in the source container is 70 wt.% of the maximum filling amount (65°C/4.0 wt.%/70 wt.%)

Example 1-4: The initial filling amount in the source container is 70 wt.% of the maximum filling amount.

A 10 L hermetically sealed container (source container) was filled with HFO-1132(E) and HFO-1234yf to 70 wt.% of the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 8 shows the results of composition changes during the transfer when the initial composition was adjusted to the target upper-limit composition.

Table 8

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.7 | -3.3 |
| 82.0 | 82.0 | 79.4 | -2.6 |
| 72.0 | 72.0 | 69.9 | -2.1 |
| 62.0 | 62.0 | 60.4 | -1.6 |
| 52.0 | 52.0 | 50.6 | -1.4 |
| 42.0 | 42.0 | 40.7 | -1.3 |
| 32.0 | 32.0 | 30.5 | -1.5 |
| 22.0 | 22.0 | 19.9 | -2.1 |
| 12.0 | 12.0 | 9.0 | -3.0 |

As shown in Table 8, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 9 shows the lower limit ($y_{1-4}$) of the gap between the initial composition and the target upper-limit composition in this case.

Table 9

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.7 | 88.0 | -3.3 |
| 82.0 | 79.4 | 78.1 | -2.6 |
| 72.0 | 69.9 | 68.1 | -2.1 |
| 62.0 | 60.4 | 58.1 | -1.6 |
| 52.0 | 50.6 | 48.0 | -1.4 |
| 42.0 | 40.7 | 38.1 | -1.3 |
| 32.0 | 30.5 | 28.1 | -1.5 |
| 22.0 | 19.9 | 18.0 | -2.1 |
| 12.0 | 9.0 | 8.0 | -3.0 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.3 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{1-4}$) of the gap between the initial composition and the target upper-limit composition can be represented by the following equation using the target composition (x).

$$1000y_{1-4} = 0.0078x^3 - 2.3335x^2 + 164.09x - 4680 \quad (1-4)$$

By setting the lower limit ($y_{1-4}$) based on Table 9, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{1-4}$ to the target upper-limit composition, the composition can be kept within the range from the target upper-limit composition - 4.0 wt.% (the target lower-limit composition) to the target upper-limit composition throughout the process from before the transfer until the completion of the transfer.

(1-5) The case in which the initial filling amount in the source container is 60 wt.% of the maximum filling amount (65°C/4.0 wt.%/60 wt.%)

Example 1-5: The initial filling amount in the source container is 60 wt.% of the maximum filling amount.

A 10 L hermetically sealed container (source container) was filled with HFO-1132(E) and HFO-1234yf to 60 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 10 shows the results of composition changes during the transfer when the initial composition was adjusted to the target upper-limit composition.

Table 10

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.7 | -3.3 |
| 82.0 | 82.0 | 79.3 | -2.7 |
| 72.0 | 72.0 | 69.8 | -2.2 |
| 62.0 | 62.0 | 60.2 | -1.8 |
| 52.0 | 52.0 | 50.4 | -1.6 |
| 42.0 | 42.0 | 40.4 | -1.6 |
| 32.0 | 32.0 | 30.2 | -1.8 |
| 22.0 | 22.0 | 19.7 | -2.3 |
| 12.0 | 12.0 | 8.9 | -3.1 |

As shown in Table 10, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 11 shows the lower limit ($y_{1-5}$) of the gap between the initial composition and the target upper-limit composition in this case.

Table 11

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.7 | 88.1 | -3.3 |
| 82.0 | 79.3 | 78.1 | -2.7 |
| 72.0 | 69.8 | 68.0 | -2.2 |
| 62.0 | 60.2 | 58.0 | -1.8 |
| 52.0 | 50.4 | 48.1 | -1.6 |
| 42.0 | 40.4 | 38.0 | -1.6 |
| 32.0 | 30.2 | 28.0 | -1.8 |
| 22.0 | 19.7 | 18.0 | -2.3 |
| 12.0 | 8.9 | 8.1 | -3.1 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.3 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{1-5}$) of the gap between the initial composition and the target upper-limit composition can be represented by the following equation using the target composition (x).

$$1000y_{1-5} = 0.0067x^3 - 2.0367x^2 + 144.26x - 4536.5 \quad (1\text{-}5)$$

By setting the lower limit ($y_{1-5}$) based on Table 11, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{1-5}$ to the target upper-limit composition, the composition can be kept within the range from the target upper-limit composition - 4.0 wt.% (the target lower-limit composition) to the target upper-limit composition throughout the process from before the transfer until the completion of the transfer.

(1-6) The case in which the initial filling amount in the source container is 50 wt.% of the maximum filling amount (65°C/4.0 wt.%/50 wt.%)

Example 1-6: The initial filling amount in the source container is 50 wt.% of the maximum filling amount.

A 10 L hermetically sealed container (source container) was filled with HFO-1132(E) and HFO-1234yf to 50 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 12 shows the results of composition changes during the transfer when the initial composition was adjusted to the target upper-limit composition.

Table 12

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.7 | -3.3 |
| 82.0 | 82.0 | 79.2 | -2.8 |
| 72.0 | 72.0 | 69.7 | -2.3 |
| 62.0 | 62.0 | 60.0 | -2.0 |
| 52.0 | 52.0 | 50.2 | -1.8 |
| 42.0 | 42.0 | 40.3 | -1.7 |
| 32.0 | 32.0 | 30.0 | -2.0 |
| 22.0 | 22.0 | 19.5 | -2.5 |
| 12.0 | 12.0 | 8.8 | -3.2 |

As shown in Table 12, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 13 shows the lower limit ($y_{1-6}$) of the gap between the initial composition and the target upper-limit composition in this case.

Table 13

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.7 | 88.1 | -3.3 |
| 82.0 | 79.2 | 78.0 | -2.8 |
| 72.0 | 69.7 | 68.1 | -2.3 |
| 62.0 | 60.0 | 58.0 | -2.0 |
| 52.0 | 50.2 | 48.0 | -1.8 |
| 42.0 | 40.3 | 38.1 | -1.7 |
| 32.0 | 30.0 | 28.1 | -2.0 |
| 22.0 | 19.5 | 18.0 | -2.5 |
| 12.0 | 8.8 | 8.1 | -3.2 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.3 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{1-6}$) of the gap between the initial composition and the target upper-limit composition can be represented by the following equation using the target composition (x).

$$1000y_{1-6} = 0.0064x^3 - 1.9324x^2 + 136.71x - 4563.1 \quad (1\text{-}6)$$

By setting the lower limit ($y_{1-6}$) based on Table 13, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{1-6}$ to the target upper-limit composition, the composition can be kept within the range from the target upper-limit composition - 4.0 wt.% (the target lower-limit composition) to the target upper-limit composition throughout the process from before the transfer until the completion of the transfer.

(2) Filling method for the case in which the difference between the target upper-limit composition and the target lower-limit composition is 3.0 wt.%

(2-1) The case in which the initial filling amount in the source container is 100 wt.% of the maximum filling amount (65°C/3.0 wt.%/100 wt.%)

Example 2-1: The initial filling amount in the source container is 100 wt.% of the maximum filling amount.

A 10 L hermetically sealed container (source container) was filled with HFO-1132(E) and HFO-1234yf to the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 14 shows the results of composition changes during the transfer when the initial composition was adjusted to the target upper-limit composition.

Table 14

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.4 | -2.1 |
| 81.5 | 81.5 | 80.1 | -1.4 |
| 71.5 | 71.5 | 70.7 | -0.8 |
| 41.5 | 41.5 | 41.7 | 0.2 |
| 31.5 | 31.5 | 31.4 | -0.1 |
| 21.5 | 21.5 | 20.7 | -0.8 |
| 11.5 | 11.5 | 9.7 | -1.8 |

As shown in Table 14, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 34.4 wt.% or 54.1 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 15 shows the lower limit ($y_{2-1}$) of the gap between the initial composition and the target upper-limit composition in this case.

Table 15

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.4 | 88.6 | -2.1 |
| 81.5 | 80.1 | 78.5 | -1.4 |
| 71.5 | 70.7 | 68.5 | -0.8 |
| 61.5 | 61.3 | 58.6 | -0.2 |
| 31.5 | 31.4 | 28.5 | -0.1 |
| 21.5 | 20.7 | 18.5 | -0.8 |
| 11.5 | 9.7 | 8.5 | -1.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.1 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{2-1}$) of the gap between the initial composition and the target upper-limit composition can be represented by the following equation using the target composition (x).

$$1000y_{2-1} = 0.0109x^3 - 2.9327x^2 + 194.49x - 3663.9 \quad (2-1)$$

By setting the lower limit ($y_{2-1}$) based on Table 15, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{2-1}$ to the target upper-limit composition, the composition can be kept within the range from the target upper-limit composition - 3.0 wt.% (the target lower-limit composition) to the target upper-limit composition throughout the process from before the transfer until the completion of the transfer.

(2-2) The case in which the initial filling amount in the source container is 90 wt.% of the maximum filling amount (65°C/3.0 wt.%/90 wt.%)

Example 2-2: The initial filling amount in the source container is 90 wt.% of the maximum filling amount.

A 10 L hermetically sealed container (source container) was filled with HFO-1132(E) and HFO-1234yf to 90 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 16 shows the results of composition changes during the transfer when the initial composition was adjusted to the target upper-limit composition.

Table 16

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.4 | -2.1 |
| 81.5 | 81.5 | 80.0 | -1.5 |
| 71.5 | 71.5 | 70.6 | -0.9 |
| 61.5 | 61.5 | 61.1 | -0.4 |
| 51.5 | 51.5 | 51.5 | 0.0 |
| 41.5 | 41.5 | 41.5 | 0.0 |
| 31.5 | 31.5 | 31.2 | -0.3 |
| 21.5 | 21.5 | 20.6 | -0.9 |
| 11.5 | 11.5 | 9.7 | -1.8 |

As shown in Table 16, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 17 shows the lower limit $(y_{2-2})$ of the gap between the initial composition and the target upper-limit composition in this case.

Table 17

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.4 | 88.6 | -2.1 |
| 81.5 | 80.0 | 78.5 | -1.5 |
| 71.5 | 70.6 | 68.5 | -0.9 |
| 61.5 | 61.1 | 58.5 | -0.4 |
| 51.5 | 51.5 | 48.6 | 0.0 |
| 41.5 | 41.5 | 38.5 | 0.0 |
| 31.5 | 31.2 | 28.5 | -0.3 |
| 21.5 | 20.6 | 18.5 | -0.9 |
| 11.5 | 9.7 | 8.5 | -1.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.1 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit $(y_{2-2})$ of the gap between the initial composition and the target upper-limit composition can be represented by the following equation using the target composition (x).

$$1000y_{2-2} = 0.0101x^3 - 2.7654x^2 + 185.14x - 3656.3 \quad (2-2)$$

By setting the lower limit $(y_{2-2})$ based on Table 17, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{2-2}$ to the target upper-limit composition, the composition can be kept within the range from the target upper-limit composition - 3.0 wt.% (the target lower-limit composition) to the target upper-limit composition throughout the process from before the transfer until the completion of the transfer.

<u>(2-3) The case in which the initial filling amount in the source container is 80 wt.% of the maximum filling amount (65°C/3.0 wt.%/80 wt.%)</u>

Example 2-3: The initial filling amount in the source container is 80 wt.% of the maximum filling amount.

A 10 L hermetically sealed container (source container) was filled with HFO-1132(E) and HFO-1234yf to 80 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 18 shows the results of composition changes during the transfer when the initial composition was adjusted to the target upper-limit composition.

Table 18

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.3 | -2.2 |
| 81.5 | 81.5 | 80.0 | -1.5 |
| 71.5 | 71.5 | 70.5 | -1.0 |
| 61.5 | 61.5 | 61.0 | -0.5 |
| 51.5 | 51.5 | 51.3 | -0.2 |
| 41.5 | 41.5 | 41.4 | -0.1 |
| 31.5 | 31.5 | 31.1 | -0.4 |
| 21.5 | 21.5 | 20.6 | -0.9 |
| 11.5 | 11.5 | 9.6 | -1.9 |

As shown in Table 18, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 19 shows the lower limit ($y_{2-3}$) of the gap between the initial composition and the target upper-limit composition in this case.

Table 19

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.3 | 88.6 | -2.2 |
| 81.5 | 80.0 | 78.6 | -1.5 |
| 71.5 | 70.5 | 68.6 | -1.0 |
| 61.5 | 61.0 | 58.6 | -0.5 |
| 51.5 | 51.3 | 48.5 | -0.2 |
| 41.5 | 41.4 | 38.6 | -0.1 |
| 31.5 | 31.1 | 28.6 | -0.4 |
| 21.5 | 20.6 | 18.6 | -0.9 |
| 11.5 | 9.6 | 8.6 | -1.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.2 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{2-3}$) of the gap between the initial composition and the target upper-limit composition can be represented by the following equation using the target composition (x).

$$1000y_{2-3} = 0.0088x^3 - 2.506x^2 + 170.56x - 3537.6 \quad (2-3)$$

By setting the lower limit ($y_{2-3}$) based on Table 19, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{2-3}$ to the target upper-limit composition, the composition can be kept within the range from the target upper-limit composition - 3.0 wt.% (the target lower-limit composition) to the target upper-limit composition throughout the process from before the transfer until the completion of the transfer.

(2-4) The case in which the initial filling amount in the source container is 70 wt.% of the maximum filling amount (65°C/3.0 wt.%/70 wt.%)

Example 2-4: The initial filling amount in the source container is 70 wt.% of the maximum filling amount.

A 10 L hermetically sealed container (source container) was filled with HFO-1132(E) and HFO-1234yf to 70 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 20 shows the results of composition changes during the transfer when the initial composition was adjusted to the target upper-limit composition.

Table 20

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.3 | -2.3 |
| 81.5 | 81.5 | 79.8 | -1.7 |
| 71.5 | 71.5 | 70.4 | -1.1 |
| 61.5 | 61.5 | 60.8 | -0.7 |
| 51.5 | 51.5 | 51.1 | -0.4 |
| 41.5 | 41.5 | 41.2 | -0.3 |
| 31.5 | 31.5 | 31.0 | -0.5 |
| 21.5 | 21.5 | 20.4 | -1.1 |
| 11.5 | 11.5 | 9.5 | -2.0 |

As shown in Table 20, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 21 shows the lower limit ($y_{2-4}$) of the gap between the initial composition and the target upper-limit composition in this case.

Table 21

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.3 | 88.5 | -2.3 |
| 81.5 | 79.8 | 78.5 | -1.7 |
| 71.5 | 70.4 | 68.5 | -1.1 |
| 61.5 | 60.8 | 58.5 | -0.7 |
| 51.5 | 51.1 | 48.5 | -0.4 |
| 41.5 | 41.2 | 38.6 | -0.3 |
| 31.5 | 31.0 | 28.6 | -0.5 |
| 21.5 | 20.4 | 18.6 | -1.1 |
| 11.5 | 9.5 | 8.5 | -2.0 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.3 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{2-4}$) of the gap between the initial composition and the target upper-limit composition can be represented by the following equation using the target composition (x).

$$1000y_{2-4} = 0.0097x^3 - 2.576x^2 + 169.78x - 3623.4 \quad (2-4)$$

By setting the lower limit ($y_{2-4}$) based on Table 21, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{2-4}$ to the target upper-limit composition, the composition can be kept within the range from the target upper-limit composition - 3.0 wt.% (the target lower-limit composition) to the target upper-limit composition throughout the process from before the transfer until the completion of the transfer.

(2-5) The case in which the initial filling amount in the source container is 60 wt.% of the maximum filling amount (65°C/3.0 wt.%/60 wt.%)

Example 2-5: The initial filling amount in the source container is 60 wt.% of the maximum filling amount.

A 10 L hermetically sealed container (source container) was filled with HFO-1132(E) and HFO-1234yf to 60 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 22 shows the results of composition changes during the transfer when the initial composition was adjusted to the target upper-limit composition.

Table 22

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.2 | -2.3 |
| 81.5 | 81.5 | 79.8 | -1.7 |
| 71.5 | 71.5 | 70.3 | -1.2 |
| 61.5 | 61.5 | 60.7 | -0.8 |
| 51.5 | 51.5 | 51.0 | -0.5 |
| 41.5 | 41.5 | 40.9 | -0.6 |
| 31.5 | 31.5 | 30.7 | -0.8 |
| 21.5 | 21.5 | 20.3 | -1.2 |
| 11.5 | 11.5 | 9.4 | -2.1 |

As shown in Table 22, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 23 shows the lower limit ($y_{2-5}$) of the gap between the initial composition and the target upper-limit composition in this case.

Table 23

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.2 | 88.5 | -2.3 |
| 81.5 | 79.8 | 78.6 | -1.7 |
| 71.5 | 70.3 | 68.6 | -1.2 |
| 61.5 | 60.7 | 58.6 | -0.8 |
| 51.5 | 51.0 | 48.6 | -0.5 |
| 41.5 | 40.9 | 38.5 | -0.6 |
| 31.5 | 30.7 | 28.5 | -0.8 |
| 21.5 | 20.3 | 18.6 | -1.2 |
| 11.5 | 9.4 | 8.5 | -2.1 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.3 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{2-5}$) of the gap between the initial composition and the target upper-limit composition can be represented by the following equation using the target composition (x).

$$1000y_{2-5} = 0.0069x^3 - 2.0649x^2 + 144.19x - 3476.2 \quad (2\text{-}5)$$

By setting the lower limit ($y_{2-5}$) based on Table 23, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{2-5}$ to the target upper-limit composition, the composition can be kept within the range from the target upper-limit composition - 3.0 wt.% (the target lower-limit composition) to the target upper-limit composition throughout the process from before the transfer until the completion of the transfer.

(2-6) The case in which the initial filling amount in the source container is 50 wt.% of the maximum filling amount (65°C/3.0 wt.%/50 wt.%)

Example 2-6: The initial filling amount in the source container is 50 wt.% of the maximum filling amount.

A 10 L hermetically sealed container (source container) was filled with HFO-1132(E) and HFO-1234yf to 50 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 24 shows the results of composition changes during the transfer when the initial composition was adjusted to the target upper-limit composition.

Table 24

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.1 | -2.4 |
| 81.5 | 81.5 | 79.7 | -1.8 |
| 71.5 | 71.5 | 70.1 | -1.4 |
| 61.5 | 61.5 | 60.4 | -1.1 |
| 51.5 | 51.5 | 50.7 | -0.8 |
| 41.5 | 41.5 | 40.7 | -0.8 |
| 31.5 | 31.5 | 30.5 | -1.0 |
| 21.5 | 21.5 | 20.3 | -1.2 |
| 11.5 | 11.5 | 9.3 | -2.2 |

As shown in Table 24, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 25 shows the lower limit ($y_{2-6}$) of the gap between the initial composition and the target upper-limit composition in this case.

Table 25

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.1 | 88.5 | -2.4 |
| 81.5 | 79.7 | 78.6 | -1.8 |
| 71.5 | 70.1 | 68.5 | -1.4 |
| 61.5 | 60.4 | 58.5 | -1.1 |
| 51.5 | 50.7 | 48.5 | -0.8 |
| 41.5 | 40.7 | 38.5 | -0.8 |
| 31.5 | 30.5 | 28.6 | -1.0 |
| 21.5 | 20.3 | 18.6 | -1.2 |
| 11.5 | 9.3 | 85.1 | -2.2 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.4 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{2-6}$) of the gap between the initial composition and the target upper-limit composition can be represented by the following equation using the target composition (x).

$$1000y_{2-6} = 0.0075x^3 - 2.0565x^2 + 137.55x - 3444 \quad (2-6)$$

By setting the lower limit ($y_{2-6}$) based on Table 25, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{2-6}$ to the target upper-limit composition, the composition can be kept within the range from the target upper-limit composition - 3.0 wt.% (the target lower-limit composition) to the target upper-limit composition throughout the process from before the transfer until the completion of the transfer.

(3) Filling method for the case in which the difference between the target upper-limit composition and the target lower-limit composition is 2.0 wt.%

(3-1) The case in which the initial filling amount in the source container is 100 wt.% of the maximum filling amount (65°C/2.0 wt.%/100 wt.%)

Example 3-1: The initial filling amount in the source container is 100 wt.% of the maximum filling amount.

A 10 L hermetically sealed container (source container) was filled with HFO-1132(E) and HFO-1234yf to the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 26 shows the results of composition changes during the transfer when the initial composition was adjusted to the target upper-limit composition.

Table 26

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.4 | ~1.6 |
| 81.0 | 81.0 | 80.6 | -0.4 |
| 11.0 | 11.0 | 10.3 | -0.7 |

As shown in Table 26, adjusting the initial composition before transfer to the target upper-limit composition allows the composition to fall within the range from the target upper-limit composition -2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 17.6 wt.% or 74.2 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 27 shows the lower limit ($y_{3-1}$) of the gap between the initial composition and the target upper-limit composition in this case.

Table 27

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.4 | 89.0 | ~1.6 |
| 81.0 | 80.6 | 79.1 | -0.4 |
| 11.0 | 10.3 | 9.1 | -0.7 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.6 wt.% from the target composition, the proportion of HFO-1132(E) in the liquid phase falls within the range from the target upper-limit composition -2.0 wt.% (target lower-limit composition) to the target upper-limit composition from before the transfer to the completion of the transfer.

From these results, the lower limit $(y_{3-1})$ of the gap between the initial composition and the target upper-limit composition can be represented by the following equation using the target composition $(x)$.

$$1000y_{3-1} = 0.0039x^3 - 1.9763x^2 + 153.64x - 2109 \quad (3-1)$$

By setting the lower limit $(y_{3-1})$ based on Table 27, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{3-1}$ to the target upper-limit composition, the composition can be kept within the range from the target upper-limit composition - 2.0 wt.% (the target lower-limit composition) to the target upper-limit composition throughout the process from before the transfer until the completion of the transfer.

(3-2) The case in which the initial filling amount in the source container is 90 wt.% of the maximum filling amount (65°C/2.0 wt.%/90 wt.%)

Example 3-2: The initial filling amount in the source container is 90 wt.% of the maximum filling amount.

A 10 L hermetically sealed container (source container) was filled with HFO-1132(E) and HFO-1234yf to 90 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 28 shows the results of composition changes during the transfer when the initial composition was adjusted to the target upper-limit composition.

Table 28

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.8 | -1.2 |
| 81.0 | 81.0 | 80.5 | -0.5 |
| 11.0 | 11.0 | 10.2 | -0.8 |

As shown in Table 28, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 18.3 wt.%, or 73.0 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 29 shows the lower limit $(y_{3-2})$ of the gap between the initial composition and the target upper-limit composition in this case.

Table 29

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.8 | 89.0 | -1.2 |
| 81.0 | 80.5 | 79.0 | -0.5 |
| 11.0 | 10.2 | 9.1 | -0.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.2 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{3-2}$) of the gap between the initial composition and the target upper-limit composition can be represented by the following equation using the target composition (x).

$$1000y_{3-2} = 0.0094x^3 - 2.6505x^2 + 176.28x - 2399.7 \quad (3\text{-}2)$$

By setting the lower limit ($y_{3-2}$) based on Table 29, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{3-2}$ to the target upper-limit composition, the composition can be kept within the range from the target upper-limit composition - 2.0 wt.% (the target lower-limit composition) to the target upper-limit composition throughout the process from before the transfer until the completion of the transfer.

(3-3) The case in which the initial filling amount in the source container is 80 wt.% of the maximum filling amount (65°C/2.0 wt.%/80 wt.%)

Example 3-3: The initial filling amount in the source container is 80 wt.% of the maximum filling amount.

A 10 L hermetically sealed container (source container) was filled with HFO-1132(E) and HFO-1234yf to 80 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 30 shows the results of composition changes during the transfer when the initial composition was adjusted to the target upper-limit composition.

Table 30

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.7 | -1.3 |
| 81.0 | 81.0 | 80.4 | -0.6 |
| 71.0 | 71.0 | 71.0 | 0.0 |
| 21.0 | 21.0 | 21.0 | 0.0 |
| 11.0 | 11.0 | 10.2 | -0.8 |

As shown in Table 30, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 20.1 wt.% or 70.8 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 31 shows the lower limit ($y_{3-3}$) of the gap between the initial composition and the target upper-limit composition in this case.

Table 31

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.7 | 89.0 | -1.3 |
| 81.0 | 80.4 | 79.0 | -0.6 |
| 71.0 | 71.0 | 69.0 | 0.0 |
| 21.0 | 21.0 | 19.0 | 0.0 |
| 11.0 | 10.2 | 9.0 | -0.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.3 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{3-3}$) of the gap between the initial composition and the target upper-limit composition can be represented by the following equation using the target composition (x).

$$1000y_{3-3} = 0.0087x^3 - 2.4833x^2 + 166.14x - 2404.9 \quad (3-3)$$

By setting the lower limit ($y_{3-3}$) based on Table 31, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{3-3}$ to the target upper-limit composition, the composition can be kept within the range from the target upper-limit composition - 2.0 wt.% (the target lower-limit composition) to the target upper-limit composition throughout the process from before the transfer until the completion of the transfer.

(3-4) The case in which the initial filling amount in the source container is 70 wt.% of the maximum filling amount (65°C/2.0 wt.%/70 wt.%)

Example 3-4: The initial filling amount in the source container is 70 wt.% of the maximum filling amount.

A 10 L hermetically sealed container (source container) was filled with HFO-1132(E) and HFO-1234yf to 70 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 32 shows the results of composition changes during the transfer when the initial composition was adjusted to the target upper-limit composition.

Table 32

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.8 | -1.2 |
| 81.0 | 81.0 | 80.3 | -0.7 |
| 71.0 | 71.0 | 70.9 | -0.1 |
| 21.0 | 21.0 | 20.9 | -0.1 |
| 11.0 | 11.0 | 10.0 | -1.0 |

As shown in Table 32, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 21.8 wt.%, or 68.4 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 33 shows the lower limit ($y_{3-4}$) of the gap between the initial composition and the target upper-limit composition in this case.

Table 33

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.8 | 89.1 | -1.2 |
| 81.0 | 80.3 | 79.0 | -0.7 |
| 71.0 | 70.9 | 69.0 | -0.1 |
| 21.0 | 20.9 | 19.0 | -0.1 |
| 11.0 | 10.0 | 9.0 | ~1.0 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.2 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{3-4}$) of the gap between the initial composition and the target upper-limit composition can be represented by the following equation using the target composition (x).

$$1000y_{3-4} = 0.0099x^3 - 2.5803x^2 + 167.02x - 2519.1 \quad (3\text{-}4)$$

By setting the lower limit ($y_{3-4}$) based on Table 33, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{3-4}$ to the target upper-limit composition, the composition can be kept within the range from the target upper-limit composition - 2.0 wt.% (the target lower-limit composition) to the target upper-limit composition throughout the process from before the transfer until the completion of the transfer.

(3-5) The case in which the initial filling amount in the source container is 60 wt.% of the maximum filling amount (65°C/2.0 wt.%/60 wt.%)

Example 3-5: The initial filling amount in the source container is 60 wt.% of the maximum filling amount.

A 10 L hermetically sealed container (source container) was filled with HFO-1132(E) and HFO-1234yf to 60 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 34 shows the results of composition changes during the transfer when the initial composition was adjusted to the target upper-limit composition.

Table 34

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.7 | -1.3 |
| 81.0 | 81.0 | 80.3 | -0.7 |
| 71.0 | 71.0 | 70.7 | -0.3 |
| 21.0 | 21.0 | 20.8 | -0.3 |
| 11.0 | 11.0 | 10.0 | -1.0 |

As shown in Table 34, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 24.3 wt.% or 65.3 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 35 shows the lower limit ($y_{3-5}$) of the gap between the initial composition and the target upper-limit composition in this case.

Table 35

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.7 | 89.0 | -1.3 |
| 81.0 | 80.3 | 79.1 | -0.7 |
| 71.0 | 70.7 | 69.0 | -0.3 |
| 21.0 | 20.8 | 19.0 | -0.3 |
| 11.0 | 10.0 | 9.0 | -1.0 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.3 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{3-5}$) of the gap between the initial composition and the target upper-limit composition can be represented by the following equation using the target composition (x).

$$1000y_{3-5} = 0.008x^3 - 2.2468x^2 + 149.82x - 2430.6 \quad (3\text{-}5)$$

By setting the lower limit ($y_{3-5}$) based on Table 35, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{3-5}$ to the target upper-limit composition, the composition can be kept within the range from the target upper-limit composition - 2.0 wt.% (the target lower-limit composition) to the target upper-limit composition throughout the process from before the transfer until the completion of the transfer.

(3-6) The case in which the initial filling amount in the source container is 50 wt.% of the maximum filling amount (65°C/2.0 wt.%/50 wt.%)

Example 3-6: The initial filling amount in the source container is 50 wt.% of the maximum filling amount.

A 10 L hermetically sealed container (source container) was filled with HFO-1132(E) and HFO-1234yf to 50 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 36 shows the results of composition changes during the transfer when the initial composition was adjusted to the target upper-limit composition.

Table 36

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.6 | -1.4 |
| 81.0 | 81.0 | 80.1 | -0.9 |
| 71.0 | 71.0 | 70.7 | -0.3 |
| 61.0 | 61.0 | 60.9 | -0.1 |
| 21.0 | 21.0 | 20.6 | -0.4 |
| 11.0 | 11.0 | 9.9 | -1.1 |

As shown in Table 36, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 29.8 wt.% or 60.1 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 37 shows the lower limit ($y_{3-6}$) of the gap between the initial composition and the target upper-limit composition in this case.

Table 37

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.6 | 89.1 | -1.4 |
| 81.0 | 80.1 | 79.0 | -0.9 |
| 71.0 | 70.7 | 69.1 | -0.3 |
| 61.0 | 60.9 | 59.0 | -0.1 |
| 21.0 | 20.6 | 19.0 | -0.4 |
| 11.0 | 9.9 | 9.0 | -1.1 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.4 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{3-6}$) of the gap between the initial composition and the target upper-limit composition can be represented by the following equation using the target composition (x).

$$1000y_{3-6} = 0.0061x^3 - 1.8556x^2 + 128.49x - 2343.6 \quad (3-6)$$

By setting the lower limit ($y_{3-6}$) based on Table 37, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{3-6}$ to the target upper-limit composition, the composition can be kept within the range from the target upper-limit composition - 2.0 wt.% (the target lower-limit composition) to the target upper-limit composition throughout the process from before the transfer until the completion of the transfer.

[2] Refrigerant mixture filling method in which a value calculated by using a value obtained by dividing 1.05 by the specific gravity of the gas (refrigerant mixture comprising HFO-1132(E) and HFO-1234yf) at 45°C as a fill constant is defined as 100 wt.% of the filling amount

Refrigerant mixture filling method at 45°C

(4) Filling method for the case in which the difference between the target upper-limit composition and the target lower-limit composition is 4.0 wt.%

(4-1) The case in which the initial filling amount in the source container is 100 wt.% of the maximum filling amount (45°C/4.0 wt.%/100 wt.%)

Example 4-1: The initial filling amount in the source container is 100 wt.% of the maximum filling amount.

A 10 L hermetically sealed container (source container) was filled with HFO-1132(E) and HFO-1234yf to the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 38 shows the results of composition changes during the transfer when the initial composition was adjusted to the target upper-limit composition.

Table 38

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 89.0 | -3.0 |
| 82.0 | 82.0 | 79.8 | -2.2 |
| 72.0 | 72.0 | 70.4 | -1.6 |
| 62.0 | 62.0 | 61.0 | -1.0 |
| 52.0 | 52.0 | 51.3 | -0.7 |
| 42.0 | 42.0 | 41.4 | -0.6 |
| 32.0 | 32.0 | 31.1 | -0.9 |
| 22.0 | 22.0 | 20.4 | -1.6 |
| 12.0 | 12.0 | 9.2 | -2.8 |

As shown in Table 38, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 39 shows the lower limit ($y_{4-1}$) of the gap between the initial composition and the target upper-limit composition in this case.

Table 39

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 89.0 | 88.1 | -3.0 |
| 82.0 | 79.8 | 78.1 | -2.2 |
| 72.0 | 70.4 | 68.0 | -1.6 |
| 62.0 | 61.0 | 58.1 | -1.0 |
| 52.0 | 51.3 | 48.0 | -0.7 |
| 42.0 | 41.4 | 38.1 | -0.6 |
| 32.0 | 31.1 | 28.1 | -0.9 |
| 22.0 | 20.4 | 18.1 | -1.6 |
| 12.0 | 9.2 | 8.0 | -2.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.0 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{4-1}$) of the gap between the initial composition and the target upper-limit composition can be represented by the following equation using the target composition (x).

$$1000y_{4-1} = 0.0119x^3 - 3.221x^2 + 217.37x - 4972.7 \quad (4-1)$$

By setting the lower limit ($y_{4-1}$) based on Table 39, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{4-1}$ to the target upper-limit composition, the composition can be kept within the range from the target upper-limit composition - 4.0 wt.% (the target lower-limit composition) to the target upper-limit composition throughout the process from before the transfer until the completion of the transfer.

<u>(4-2) The case in which the initial filling amount in the source container is 90 wt.% of the maximum filling amount (45°C/4.0 wt.%/90 wt.%)</u>

Example 4-2: The initial filling amount in the source container is 90 wt.% of the maximum filling amount.

A 10 L hermetically sealed container (source container) was filled with HFO-1132(E) and HFO-1234yf to 90 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 40 shows the results of composition changes during the transfer when the initial composition was adjusted to the target upper-limit composition.

Table 40

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 89.0 | -3.0 |
| 82.0 | 82.0 | 79.7 | -2.3 |
| 72.0 | 72.0 | 70.3 | -1.7 |
| 62.0 | 62.0 | 60.8 | -1.2 |
| 52.0 | 52.0 | 51.1 | -0.9 |
| 42.0 | 42.0 | 41.2 | -0.8 |
| 32.0 | 32.0 | 30.9 | -1.1 |
| 22.0 | 22.0 | 20.3 | -1.7 |
| 12.0 | 12.0 | 9.1 | -2.9 |

As shown in Table 40, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 41 shows the lower limit ($y_{4-2}$) of the gap between the initial composition and the target upper-limit composition in this case.

126

Table 41

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 89.0 | 88.1 | -3.0 |
| 82.0 | 79.7 | 78.1 | -2.3 |
| 72.0 | 70.3 | 68.1 | -1.7 |
| 62.0 | 60.8 | 58.1 | -1.2 |
| 52.0 | 51.1 | 48.0 | -0.9 |
| 42.0 | 41.2 | 38.1 | -0.8 |
| 32.0 | 30.9 | 28.1 | -1.1 |
| 22.0 | 20.3 | 18.1 | -1.7 |
| 12.0 | 9.1 | 8.0 | -2.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.0 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{4-2}$) of the gap between the initial composition and the target upper-limit composition can be represented by the following equation using the target composition (x).

$$1000y_{4-2} = 0.0107x^3 - 2.9788x^2 + 204x - 4902.8 \quad (4-2)$$

By setting the lower limit ($y_{4-2}$) based on Table 41, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{4-2}$ to the target upper-limit composition, the composition can be kept within the range from the target upper-limit composition - 4.0 wt.% (the target lower-limit composition) to the target upper-limit composition throughout the process from before the transfer until the completion of the transfer.

(4-3) The case in which the initial filling amount in the source container is 80 wt.% of the maximum filling amount (45°C/4.0 wt.%/80 wt.%)

Example 4-3: The initial filling amount in the source container is 80 wt.% of the maximum filling amount.

A 10 L hermetically sealed container (source container) was filled with HFO-1132(E) and HFO-1234yf to 80 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 42 shows the results of composition changes during the transfer when the initial composition was adjusted to the target upper-limit composition.

Table 42

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.9 | -3.1 |
| 82.0 | 82.0 | 79.6 | -2.4 |
| 72.0 | 72.0 | 70.3 | -1.8 |
| 62.0 | 62.0 | 60.7 | -1.3 |
| 52.0 | 52.0 | 51.0 | -1.0 |
| 42.0 | 42.0 | 41.0 | -1.0 |
| 32.0 | 32.0 | 30.8 | -1.3 |
| 22.0 | 22.0 | 20.1 | -1.9 |
| 12.0 | 12.0 | 9.1 | -2.9 |

As shown in Table 42, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 43 shows the lower limit ($y_{4-3}$) of the gap between the initial composition and the target upper-limit composition in this case.

Table 43

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.9 | 88.1 | -3.1 |
| 82.0 | 79.6 | 78.1 | -2.4 |
| 72.0 | 70.3 | 68.1 | -1.8 |
| 62.0 | 60.7 | 58.0 | -1.3 |
| 52.0 | 51.0 | 48.1 | -1.0 |
| 42.0 | 41.0 | 38.0 | -1.0 |
| 32.0 | 30.8 | 28.0 | -1.3 |
| 22.0 | 20.1 | 18.1 | -1.9 |
| 12.0 | 9.1 | 8.0 | -2.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.1 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{4-3}$) of the gap between the initial composition and the target upper-limit composition can be represented by the following equation using the target composition (x).

128

$$1000y_{4-3} = 0.0092x^3 - 2.7082x^2 + 190.2x - 4857.3 \quad (4-3)$$

By setting the lower limit ($y_{4-3}$) based on Table 43, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{4-3}$ to the target upper-limit composition, the composition can be kept within the range from the target upper-limit composition - 4.0 wt.% (the target lower-limit composition) to the target upper-limit composition throughout the process from before the transfer until the completion of the transfer.

(4-4) The case in which the initial filling amount in the source container is 70 wt.% of the maximum filling amount (45°C/4.0 wt.%/70 wt.%)

Example 4-4: The initial filling amount in the source container is 70 wt.% of the maximum filling amount.

A 10 L hermetically sealed container (source container) was filled with HFO-1132(E) and HFO-1234yf to 70 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 44 shows the results of composition changes during the transfer when the initial composition was adjusted to the target upper-limit composition.

Table 44

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.9 | -3.1 |
| 82.0 | 82.0 | 79.5 | -2.5 |
| 72.0 | 72.0 | 70.1 | -1.9 |
| 62.0 | 62.0 | 60.6 | -1.4 |
| 52.0 | 52.0 | 50.8 | -1.2 |
| 42.0 | 42.0 | 40.8 | -1.2 |
| 32.0 | 32.0 | 30.6 | -1.4 |
| 22.0 | 22.0 | 19.9 | -2.1 |
| 12.0 | 12.0 | 9.1 | -2.9 |

As shown in Table 44, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 45 shows the lower limit ($y_{4-4}$) of the gap between the initial composition and the target upper-limit composition in this case.

Table 45

**EP 4 692 686 A1**

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.9 | 88.1 | -3.1 |
| 82.0 | 79.5 | 78.1 | -2.5 |
| 72.0 | 70.1 | 68.0 | -1.9 |
| 62.0 | 60.6 | 58.1 | -1.4 |
| 52.0 | 50.8 | 48.0 | -1.2 |
| 42.0 | 40.8 | 38.0 | -1.2 |
| 32.0 | 30.6 | 28.1 | -1.4 |
| 22.0 | 19.9 | 18.0 | -2.1 |
| 12.0 | 9.1 | 8.1 | -2.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.1 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{4-4}$) of the gap between the initial composition and the target upper-limit composition can be represented by the following equation using the target composition (x).

$$1000y_{4-4} = 0.0085x^3 - 2.4818x^2 + 173.86x - 4711 \quad (4\text{-}4)$$

By setting the lower limit ($y_{4-4}$) based on Table 45, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{4-4}$ to the target upper-limit composition, the composition can be kept within the range from the target upper-limit composition - 4.0 wt.% (the target lower-limit composition) to the target upper-limit composition throughout the process from before the transfer until the completion of the transfer.

(4-5) The case in which the initial filling amount in the source container is 60 wt.% of the maximum filling amount (45°C/4.0 wt.%/60 wt.%)

Example 4-5: The initial filling amount in the source container is 60 wt.% of the maximum filling amount.

A 10 L hermetically sealed container (source container) was filled with HFO-1132(E) and HFO-1234yf to 60 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 46 shows the results of composition changes during the transfer when the initial composition was adjusted to the target upper-limit composition.

Table 46

130

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.8 | -3.3 |
| 82.0 | 82.0 | 79.4 | -2.6 |
| 72.0 | 72.0 | 70.0 | -2.0 |
| 62.0 | 62.0 | 60.4 | -1.6 |
| 52.0 | 52.0 | 50.6 | -1.4 |
| 42.0 | 42.0 | 40.7 | -1.3 |
| 32.0 | 32.0 | 30.4 | -1.6 |
| 22.0 | 22.0 | 19.8 | -2.2 |
| 12.0 | 12.0 | 8.9 | -3.1 |

As shown in Table 46, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 47 shows the lower limit ($y_{4-5}$) of the gap between the initial composition and the target upper-limit composition in this case.

Table 47

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.8 | 88.0 | -3.3 |
| 82.0 | 79.4 | 78.1 | -2.6 |
| 72.0 | 70.0 | 68.1 | -2.0 |
| 62.0 | 60.4 | 58.1 | -1.6 |
| 52.0 | 50.6 | 48.0 | -1.4 |
| 42.0 | 40.7 | 38.1 | -1.3 |
| 32.0 | 30.4 | 28.1 | -1.6 |
| 22.0 | 19.8 | 18.0 | -2.2 |
| 12.0 | 8.9 | 8.0 | -3.1 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.3 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{4-5}$) of the gap between the initial composition and the target upper-limit composition can be represented by the following equation using the target composition (x).

$$1000y_{4-5} = 0.0073x^3 - 2.2628x^2 + 162.31x - 4714.4 \quad (4-5)$$

By setting the lower limit ($y_{4-5}$) based on Table 47, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{4-5}$ to the target upper-limit composition, the composition can be kept within the range from the target upper-limit composition - 4.0 wt.% (the target lower-limit composition) to the target upper-limit composition throughout the process from before the transfer until the completion of the transfer.

<u>(4-6) The case in which the initial filling amount in the source container is 50 wt.% of the maximum filling amount (45°C/4.0 wt.%/50 wt.%)</u>

Example 4-6: The initial filling amount in the source container is 50 wt.% of the maximum filling amount.

A 10 L hermetically sealed container (source container) was filled with HFO-1132(E) and HFO-1234yf to 50 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 48 shows the results of composition changes during the transfer when the initial composition was adjusted to the target upper-limit composition.

Table 48

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 92.0 | 88.7 | -3.3 |
| 82.0 | 82.0 | 79.3 | -2.7 |
| 72.0 | 72.0 | 69.8 | -2.3 |
| 62.0 | 62.0 | 60.1 | -1.9 |
| 52.0 | 52.0 | 50.4 | -1.6 |
| 42.0 | 42.0 | 40.4 | -1.6 |
| 32.0 | 32.0 | 30.2 | -1.8 |
| 22.0 | 22.0 | 19.7 | -2.3 |
| 12.0 | 12.0 | 8.9 | -3.1 |

As shown in Table 48, adjusting the initial composition before transfer to the target upper-limit composition allows the composition to fall within the range from the target upper-limit composition - 4.0 wt.% (target lower-limit composition) to the target upper-limit composition as long as the proportion of HFO-1132(E) in the liquid-phase refrigerant mixture containing HFO-1132(E) and HFO-1234yf falls within the range of 12 wt.% to 92 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 49 shows the lower limit ($y_{4-6}$) of the gap between the initial composition and the target upper-limit composition in this case.

Table 49

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 92.0 | 88.7 | 88.0 | -3.3 |
| 82.0 | 79.3 | 78.1 | -2.7 |
| 72.0 | 69.8 | 68.0 | -2.3 |
| 62.0 | 60.1 | 58.0 | -1.9 |
| 52.0 | 50.4 | 48.0 | -1.6 |
| 42.0 | 40.4 | 38.1 | -1.6 |
| 32.0 | 30.2 | 28.1 | -1.8 |
| 22.0 | 19.7 | 18.1 | -2.3 |
| 12.0 | 8.9 | 8.1 | -3.1 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -3.3 wt.% from the target composition, the proportion of HFO-1132(E) in the liquid phase falls within the range from the target upper-limit composition - 4.0 wt.% (target lower-limit composition) to the target upper-limit composition from before the transfer to the completion of the transfer.

From these results, the lower limit ($y_{4-6}$) of the gap between the initial composition and the target upper-limit composition can be represented by the following equation using the target composition (x).

$$1000y_{4-6} = 0.008x^3 - 2.2272x^2 + 152.82x - 4676.2 \quad (4-6)$$

By setting the lower limit ($y_{4-6}$) based on Table 49, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{4-6}$ to the target upper-limit composition, the composition can be kept within the range from the target upper-limit composition - 4.0 wt.% (the target lower-limit composition) to the target upper-limit composition throughout the process from before the transfer until the completion of the transfer.

(5) Filling method for the case in which the difference between the target upper-limit composition and the target lower-limit composition is 3.0 wt.%

(5-1) The case in which the initial filling amount in the source container is 100 wt.% of the maximum filling amount (45°C/3.0 wt.%/100 wt.%)

Example 5-1: The initial filling amount in the source container is 100 wt.% of the maximum filling amount.

A 10 L hermetically sealed container (source container) was filled with HFO-1132(E) and HFO-1234yf to the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 50 shows the results of composition changes during the transfer when the initial composition was adjusted to the target upper-limit composition.

Table 50

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.4 | -2.1 |
| 81.5 | 81.5 | 80.2 | -1.3 |
| 71.5 | 71.5 | 70.9 | -0.6 |
| 61.5 | 61.5 | 61.5 | 0.0 |
| 21.5 | 21.5 | 20.9 | -0.6 |
| 11.5 | 11.5 | 9.8 | -1.7 |

As shown in Table 50, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 29.9 wt.% or 60.2 wt.% to 91.5 wt.% in terms of composition throughout the process from the beginning of filling (before transfer) until extraction of the liquid (until the transfer is completed) .

The proportion of HFO-1132(E) in the liquid-phase refrigerant mixture containing HFO-1132(E) and HFO-1234yf before transfer that would result in the target lower-limit composition at the completion of transfer was determined. Table 51 shows the lower limit ($y_{5-1}$) of the gap between the initial composition and the target upper-limit composition in this case.

Table 51

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.4 | 88.5 | -2.1 |
| 81.5 | 80.2 | 78.5 | -1.3 |
| 71.5 | 70.9 | 68.5 | -0.6 |
| 61.5 | 61.5 | 58.6 | 0.0 |
| 21.5 | 20.9 | 18.5 | -0.6 |
| 11.5 | 9.8 | 8.5 | -1.7 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.1 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{5-1}$) of the gap between the initial composition and the target upper-limit composition can be represented by the following equation using the target composition (x).

$$1000y_{5-1} = 0.0107x^3 - 3.0135x^2 + 203.89x - 3688.7 \quad (5-1)$$

By setting the lower limit ($y_{5-1}$) based on Table 51, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{5-1}$ to the target upper-limit composition, the composition can be kept within the range from the target upper-limit composition - 3.0 wt.% (the target lower-limit composition) to the target upper-limit composition throughout the process from before the transfer until the completion of the transfer.

(5-2) The case in which the initial filling amount in the source container is 90 wt.% of the maximum filling amount (45°C/3.0 wt.%/90 wt.%)

Example 5-2: The initial filling amount in the source container is 90 wt.% of the maximum filling amount.

A 10 L hermetically sealed container (source container) was filled with HFO-1132(E) and HFO-1234yf to 90 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 52 shows the results of composition changes during the transfer when the initial composition was adjusted to the target upper-limit composition.

Table 52

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.4 | -2.1 |
| 81.5 | 81.5 | 80.1 | -1.4 |
| 71.5 | 71.5 | 70.8 | -0.7 |
| 61.5 | 61.5 | 61.3 | -0.2 |
| 31.5 | 31.5 | 31.4 | -0.1 |
| 21.5 | 21.5 | 20.8 | -0.7 |
| 11.5 | 11.5 | 9.7 | -1.8 |

As shown in Table 52, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 33.1 wt.% or 56.9 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 53 shows the lower limit ($y_{5-2}$) of the gap between the initial composition and the target upper-limit composition in this case.

Table 53

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.4 | 88.5 | -2.1 |
| 81.5 | 80.1 | 78.5 | -1.4 |
| 71.5 | 70.8 | 69.5 | -0.7 |
| 61.5 | 61.3 | 58.6 | -0.2 |
| 31.5 | 31.4 | 28.5 | -0.1 |
| 21.5 | 20.8 | 19.5 | -0.7 |
| 11.5 | 9.7 | 8.5 | -1.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.1 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{5-2}$) of the gap between the initial composition and the target upper-limit composition can be represented by the following equation using the target composition (x).

$$1000y_{5-2} = 0.0101x^3 - 2.8585x^2 + 194.42x - 3668.8 \quad (5-2)$$

By setting the lower limit ($y_{5-2}$) based on Table 53, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{5-2}$ to the target upper-limit composition, the composition can be kept within the range from the target upper-limit composition - 3.0 wt.% (the target lower-limit composition) to the target upper-limit composition throughout the process from before the transfer until the completion of the transfer.

(5-3) The case in which the initial filling amount in the source container is 80 wt.% of the maximum filling amount (45°C/3.0 wt.%/80 wt.%)

Example 5-3: The initial filling amount in the source container is 80 wt.% of the maximum filling amount.

A 10 L hermetically sealed container (source container) was filled with HFO-1132(E) and HFO-1234yf to 80 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 54 shows the results of composition changes during the transfer when the initial composition was adjusted to the target upper-limit composition.

Table 54

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.4 | -2.2 |
| 81.5 | 81.5 | 80.0 | -1.5 |
| 71.5 | 71.5 | 70.7 | -0.8 |
| 61.5 | 61.5 | 61.2 | -0.3 |
| 51.5 | 51.5 | 51.6 | 0.0 |
| 31.5 | 31.5 | 31.3 | -0.3 |
| 21.5 | 21.5 | 20.6 | -0.9 |
| 11.5 | 11.5 | 9.7 | -1.8 |

As shown in Table 54, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 39.3 wt.% or 50.1 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 55 shows the lower limit ($y_{5-3}$) of the gap between the initial composition and the target upper-limit composition in this case.

Table 55

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.4 | 88.5 | -2.2 |
| 81.5 | 80.0 | 78.5 | -1.5 |
| 71.5 | 70.7 | 68.5 | -0.8 |
| 61.5 | 61.2 | 58.6 | -0.3 |
| 51.5 | 51.6 | 48.6 | 0.0 |
| 31.5 | 31.3 | 28.5 | -0.3 |
| 21.5 | 20.6 | 18.5 | -0.9 |
| 11.5 | 9.7 | 8.5 | -1.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.2 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{5-3}$) of the gap between the initial composition and the target upper-limit composition can be represented by the following equation using the target composition (x).

$$1000y_{5-3} = 0.0091x^3 - 2.6673x^2 + 183.65x - 3649.7 \quad (5-3)$$

By setting the lower limit ($y_{5-3}$) based on Table 55, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{5-3}$ to the target upper-limit composition, the composition can be kept within the range from the target upper-limit composition - 3.0 wt.% (the target lower-limit composition) to the target upper-limit composition throughout the process from before the transfer until the completion of the transfer.

(5-4) The case in which the initial filling amount in the source container is 70 wt.% of the maximum filling amount (45°C/3.0 wt.%/70 wt.%)

Example 5-4: The initial filling amount in the source container is 70 wt.% of the maximum filling amount.

A 10 L hermetically sealed container (source container) was filled with HFO-1132(E) and HFO-1234yf to 70 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 56 shows the results of composition changes during the transfer when the initial composition was adjusted to the target upper-limit composition.

Table 56

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.3 | -2.2 |
| 81.5 | 81.5 | 80.0 | -1.5 |
| 71.5 | 71.5 | 70.6 | -0.9 |
| 61.5 | 61.5 | 61.0 | -0.5 |
| 51.5 | 51.5 | 51.3 | -0.2 |
| 41.5 | 41.5 | 41.4 | -0.1 |
| 31.5 | 31.5 | 31.1 | -0.4 |
| 21.5 | 21.5 | 20.5 | -1.0 |
| 11.5 | 11.5 | 9.6 | -1.9 |

As shown in Table 56, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 57 shows the lower limit ($y_{5-4}$) of the gap between the initial composition and the target upper-limit composition in this case.

Table 57

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.3 | 88.5 | -2.2 |
| 81.5 | 80.0 | 78.6 | -1.5 |
| 71.5 | 70.6 | 68.6 | -0.9 |
| 61.5 | 61.0 | 58.5 | -0.5 |
| 51.5 | 51.3 | 48.5 | -0.2 |
| 41.5 | 41.4 | 38.6 | -0.1 |
| 31.5 | 31.1 | 28.6 | -0.4 |
| 21.5 | 20.5 | 18.6 | -1.0 |
| 11.5 | 9.6 | 8.6 | -1.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.2 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{5-4}$) of the gap between the initial composition and the target upper-limit composition can be represented by the following equation using the target composition (x).

$$1000y_{5-4} = 0.0082x^3 - 2.4381x^2 + 168.73x - 3535.6 \quad (5-4)$$

By setting the lower limit ($y_{5-4}$) based on Table 57, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{5-4}$ to the target upper-limit composition, the composition can be kept within the range from the target upper-limit composition - 3.0 wt.% (the target lower-limit composition) to the target upper-limit composition throughout the process from before the transfer until the completion of the transfer.

(5-5) The case in which the initial filling amount in the source container is 60 wt.% of the maximum filling amount (45°C/3.0 wt.%/60 wt.%)

Example 5-5: The initial filling amount in the source container is 60 wt.% of the maximum filling amount.

A 10 L hermetically sealed container (source container) was filled with HFO-1132(E) and HFO-1234yf to 60 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 58 shows the results of composition changes during the transfer when the initial composition was adjusted to the target upper-limit composition.

Table 58

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.3 | -2.2 |
| 81.5 | 81.5 | 79.9 | -1.6 |
| 71.5 | 71.5 | 70.4 | -1.1 |
| 61.5 | 61.5 | 60.8 | -0.7 |
| 51.5 | 51.5 | 51.1 | -0.4 |
| 41.5 | 41.5 | 41.2 | -0.3 |
| 31.5 | 31.5 | 30.9 | -0.6 |
| 21.5 | 21.5 | 20.4 | -1.1 |
| 11.5 | 11.5 | 9.5 | -2.0 |

As shown in Table 58, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 59 shows the lower limit ($y_{5-5}$) of the gap between the initial composition and the target upper-limit composition in this case.

Table 59

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.3 | 88.6 | -2.2 |
| 81.5 | 79.9 | 78.5 | -1.6 |
| 71.5 | 70.4 | 68.5 | -1.1 |
| 61.5 | 60.8 | 58.5 | -0.7 |
| 51.5 | 51.1 | 48.5 | -0.4 |
| 41.5 | 41.2 | 38.6 | -0.3 |
| 31.5 | 30.9 | 28.5 | -0.6 |
| 21.5 | 20.4 | 18.6 | -1.1 |
| 11.5 | 9.5 | 8.6 | -2.0 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.2 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{5-5}$) of the gap between the initial composition and the target upper-limit composition can be represented by the following equation using the target composition (x).

$$1000y_{5-5} = 0.0089x^3 - 2.4486x^2 + 163.93x - 3575.7 \quad (5-5)$$

By setting the lower limit ($y_{5-5}$) based on Table 59, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{5-5}$ to the target upper-limit composition, the composition can be kept within the range from the target upper-limit composition - 3.0 wt.% (the target lower-limit composition) to the target upper-limit composition throughout the process from before the transfer until the completion of the transfer.

(5-6) The case in which the initial filling amount in the source container is 50 wt.% of the maximum filling amount (45°C/3.0 wt.%/50 wt.%)

Example 5-6: The initial filling amount in the source container is 50 wt.% of the maximum filling amount.

A 10 L hermetically sealed container (source container) was filled with HFO-1132(E) and HFO-1234yf to 50 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 60 shows the results of composition changes during the transfer when the initial composition was adjusted to the target upper-limit composition.

Table 60

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 91.5 | 89.2 | -2.3 |
| 81.5 | 81.5 | 79.7 | -1.8 |
| 71.5 | 71.5 | 70.3 | -1.2 |
| 61.5 | 61.5 | 60.6 | -0.9 |
| 51.5 | 51.5 | 50.9 | -0.6 |
| 41.5 | 41.5 | 40.9 | -0.6 |
| 31.5 | 31.5 | 30.7 | -0.8 |
| 21.5 | 21.5 | 20.2 | -1.3 |
| 11.5 | 11.5 | 9.4 | -2.1 |

As shown in Table 60, adjusting the initial composition before transfer to the target upper-limit composition allows the composition to fall within the range from the target upper-limit composition - 3.0 wt.% (target lower-limit composition) to the target upper-limit composition as long as the proportion of HFO-1132(E) in the liquid-phase refrigerant mixture containing HFO-1132(E) and HFO-1234yf falls within the range of 11.5 wt.% to 91.5 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 61 shows the lower limit ($y_{5-6}$) of the gap between the initial composition and the target upper-limit composition in this case.

Table 61

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.5 | 89.2 | 88.6 | -2.3 |
| 81.5 | 79.7 | 78.5 | -1.8 |
| 71.5 | 70.3 | 68.6 | -1.2 |
| 61.5 | 60.6 | 58.5 | -0.9 |
| 51.5 | 50.9 | 48.5 | -0.6 |
| 41.5 | 40.9 | 38.6 | -0.6 |
| 31.5 | 30.7 | 28.6 | -0.8 |
| 21.5 | 20.2 | 18.5 | -1.3 |
| 11.5 | 9.4 | 8.6 | -2.1 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -2.3 wt.% from the target composition, the proportion of HFO-1132(E) in the liquid phase falls within the range from the target upper-limit composition - 3.0 wt.% (target lower-limit composition) to the target upper-limit composition from before the transfer to the completion of the transfer.

From these results, the lower limit ($y_{5-6}$) of the gap between the initial composition and the target upper-limit composition can be represented by the following equation using the target composition (x).

$$1000y_{5-6} = 0.0072x^3 - 2.0734x^2 + 142.73x - 3472.1 \quad (5\text{-}6)$$

By setting the lower limit ($y_{5-6}$) based on Table 61, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{5-6}$ to the target upper-limit composition, the composition can be kept within the range from the target upper-limit composition - 3.0 wt.% (the target lower-limit composition) to the target upper-limit composition throughout the process from before the transfer until the completion of the transfer.

(6) Filling method for the case in which the difference between the target upper-limit composition and the target lower-limit composition is 2.0 wt.%

(6-1) The case in which the initial filling amount in the source container is 100 wt.% of the maximum filling amount (45°C/2.0 wt.%/100 wt.%)

Example 6-1: The initial filling amount in the source container is 100 wt.% of the maximum filling amount.

A 10 L hermetically sealed container (source container) was filled with HFO-1132(E) and HFO-1234yf to the maximum filling amount (100 wt.% of the filling amount) based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 62 shows the results of composition changes during the transfer when the initial composition was adjusted to the target upper-limit composition.

Table 62

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.9 | -1.1 |
| 81.0 | 81.0 | 80.7 | -0.3 |
| 11.0 | 11.0 | 10.4 | -0.6 |

As shown in Table 62, adjusting the initial composition before transfer to the target upper-limit composition allows the composition to fall within the range from the target upper-limit composition -2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 16.1 wt.% or 76.6 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 63 shows the lower limit ($y_{6-1}$) of the gap between the initial composition and the target upper-limit composition in this case.

Table 63

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.9 | 89.0 | -1.1 |
| 81.0 | 80.7 | 79.1 | -0.3 |
| 11.0 | 10.4 | 9.1 | -0.6 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.1 wt.% from the target composition, the proportion of HFO-1132(E) in the liquid phase falls within the range from the target upper-limit composition -2.0 wt.% (target lower-limit composition) to the target upper-limit composition from before the transfer to the completion of the transfer.

From these results, the lower limit ($y_{6-1}$) of the gap between the initial composition and the target upper-limit composition can be represented by the following equation using the target composition (x).

$$1000y_{6-1} = 0.0097x^3 - 2.8139x^2 + 189.47x - 2363.2 \quad (6\text{-}1)$$

By setting the lower limit ($y_{6-1}$) based on Table 63, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{6-1}$ to the target upper-limit composition, the composition can be kept within the range from the target upper-limit composition - 2.0 wt.% (the target lower-limit composition) to the target upper-limit composition throughout the process from before the transfer until the completion of the transfer.

(6-2) The case in which the initial filling amount in the source container is 90 wt.% of the maximum filling amount (45°C/2.0 wt.%/90 wt.%)

Example 6-2: The initial filling amount in the source container is 90 wt.% of the maximum filling amount.

A 10 L hermetically sealed container (source container) was filled with HFO-1132(E) and HFO-1234yf to 90 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 64 shows the results of composition changes during the transfer when the initial composition was adjusted to the target upper-limit composition.

Table 64

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.9 | -1.2 |
| 81.0 | 81.0 | 80.6 | -0.4 |
| 11.0 | 11.0 | 10.3 | -0.7 |

As shown in Table 64, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 17.1 wt.%, or 75.5 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 65 shows the lower limit ($y_{6-2}$) of the gap between the initial composition and the target upper-limit composition in this case.

Table 65

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.9 | 89.0 | -1.2 |
| 81.0 | 80.6 | 79.1 | -0.4 |
| 11.0 | 10.3 | 9.1 | -0.7 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.2 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{6-2}$) of the gap between the initial composition and the target upper-limit composition can be represented by the following equation using the target composition (x).

$$1000y_{6-2} = 0.0092x^3 - 2.6794x^2 + 181.13x - 2358.5 \quad (6\text{-}2)$$

By setting the lower limit ($y_{6-2}$) based on Table 65, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{6-2}$ to the target upper-limit composition, the composition can be kept within the range from the target upper-limit composition - 2.0 wt.% (the target lower-limit composition) to the target upper-limit composition throughout the process from before the transfer until the completion of the transfer.

(6-3) The case in which the initial filling amount in the source container is 80 wt.% of the maximum filling amount (45°C/2.0 wt.%/80 wt.%)

Example 6-3: The initial filling amount in the source container is 80 wt.% of the maximum filling amount.

A 10 L hermetically sealed container (source container) was filled with HFO-1132(E) and HFO-1234yf to 80 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 66 shows the results of composition changes during the transfer when the initial composition was adjusted to the target upper-limit composition.

Table 66

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.8 | -1.2 |
| 81.0 | 81.0 | 80.5 | -0.5 |
| 11.0 | 11.0 | 10.2 | -0.8 |

As shown in Table 66, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 18.2 wt.% or 73.8 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 67 shows the lower limit ($y_{6-3}$) of the gap between the initial composition and the target upper-limit composition in this case.

Table 67

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.8 | 89.0 | -1.2 |
| 81.0 | 80.5 | 79.1 | -0.5 |
| 11.0 | 10.2 | 9.1 | -0.8 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.2 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{6-3}$) of the gap between the initial composition and the target upper-limit composition can be represented by the following equation using the target composition ($x$).

$$1000y_{6-3} = 0.0096x^3 - 2.6718x^2 + 177.45x - 2404.6 \quad (6-3)$$

By setting the lower limit ($y_{6-3}$) based on Table 67, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{6-3}$ to the target upper-limit composition, the composition can be kept within the range from the target upper-limit composition - 2.0 wt.% (the target lower-limit composition) to the target upper-limit composition throughout the process from before the transfer until the completion of the transfer.

(6-4) The case in which the initial filling amount in the source container is 70 wt.% of the maximum filling amount (45°C/2.0 wt.%/70 wt.%)

Example 6-4: The initial filling amount in the source container is 70 wt.% of the maximum filling amount.

A 10 L hermetically sealed container (source container) was filled with HFO-1132(E) and HFO-1234yf to 70 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 68 shows the results of composition changes during the transfer when the initial composition was adjusted to the target upper-limit composition.

Table 68

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.8 | -1.2 |
| 81.0 | 81.0 | 80.4 | -0.6 |
| 11.0 | 11.0 | 10.1 | -0.9 |

As shown in Table 68, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 20.1 wt.%, or 71.3 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 69 shows the lower limit ($y_{6-4}$) of the gap between the initial composition and the target upper-limit composition in this case.

Table 69

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.8 | 89.0 | -1.2 |
| 81.0 | 80.4 | 79.0 | -0.6 |
| 11.0 | 10.1 | 9.0 | -0.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.2 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{6-4}$) of the gap between the initial composition and the target upper-limit composition can be represented by the following equation using the target composition (x).

$$1000y_{6-4} = 0.0095x^3 - 2.6115x^2 + 172.84x - 2493.5 \quad (6-4)$$

By setting the lower limit ($y_{6-4}$) based on Table 69, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{6-4}$ to the target upper-limit composition, the composition can be kept within the range from the target upper-limit composition - 2.0 wt.% (the target lower-limit composition) to the target upper-limit composition throughout the process from before the transfer until the completion of the transfer.

(6-5) The case in which the initial filling amount in the source container is 60 wt.% of the maximum filling amount (45°C/2.0 wt.%/60 wt.%)

Example 6-5: The initial filling amount in the source container is 60 wt.% of the maximum filling amount.

A 10 L hermetically sealed container (source container) was filled with HFO-1132(E) and HFO-1234yf to 60 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 70 shows the results of composition changes during the transfer when the initial composition was adjusted to the target upper-limit composition.

Table 70

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.8 | -1.2 |
| 81.0 | 81.0 | 80.4 | -0.6 |
| 71.0 | 71.0 | 70.9 | -0.1 |
| 21.0 | 21.0 | 20.9 | -0.1 |
| 11.0 | 11.0 | 10.1 | -0.9 |

As shown in Table 70, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 22.2 wt.% or 69.1 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 71 shows the lower limit ($y_{6-5}$) of the gap between the initial composition and the target upper-limit composition in this case.

Table 71

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.8 | 89.1 | -1.2 |
| 81.0 | 80.4 | 79.1 | -0.6 |
| 71.0 | 70.9 | 69.0 | -0.1 |
| 21.0 | 20.9 | 19.0 | -0.1 |
| 11.0 | 10.1 | 9.1 | -0.9 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.2 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($y_{6-5}$) of the gap between the initial composition and the target upper-limit composition can be represented by the following equation using the target composition (x).

$$1000y_{6-5} = 0.0077x^3 - 2.2204x^2 + 150.41x - 2329.9 \quad (6-5)$$

By setting the lower limit ($y_{6-5}$) based on Table 71, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{6-5}$ to the target upper-limit composition, the composition can be kept within the range from the target upper-limit composition - 2.0 wt.% (the target lower-limit composition) to the target upper-limit composition throughout the process from before the transfer until the completion of the transfer.

(6-6) The case in which the initial filling amount in the source container is 50 wt.% of the maximum filling amount (45°C/2.0 wt.%/50 wt.%)

Example 6-6: The initial filling amount in the source container is 50 wt.% of the maximum filling amount.

A 10 L hermetically sealed container (source container) was filled with HFO-1132(E) and HFO-1234yf to 50 wt.% of the maximum filling amount based on the pre-transfer composition so that the liquid phase would have a predetermined composition at 40°C, and the container was maintained at 40°C.

The initial composition of HFO-1132(E) in the liquid phase before transfer was adjusted to have the target upper-limit composition. Subsequently, as in the Reference Example, the liquid phase was gradually transferred from the container to another empty container (target container) by using a pump, and the component composition was analyzed.

Table 72 shows the results of composition changes during the transfer when the initial composition was adjusted to the target upper-limit composition.

Table 72

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 91.0 | 89.7 | -1.3 |
| 81.0 | 81.0 | 80.3 | -0.7 |
| 71.0 | 71.0 | 70.7 | -0.3 |
| 21.0 | 21.0 | 20.7 | -0.3 |
| 11.0 | 11.0 | 10.0 | -1.0 |

As shown in Table 72, adjusting the initial composition before transfer to the target upper-limit composition allows the composition to fall within the range from the target upper-limit composition - 2.0 wt.% (target lower-limit composition) to the target upper-limit composition as long as the proportion of HFO-1132(E) in the liquid-phase refrigerant mixture containing HFO-1132(E) and HFO-1234yf falls within the range of 11 wt.% to 25.6 wt.% or 64.2 wt.% to 91 wt.% in terms of composition throughout the process from the beginning of filling (before transfer) until extraction of the liquid (until the transfer is completed).

The proportion of HFO-1132(E) in the liquid-phase refrigerant mixture containing HFO-1132(E) and HFO-1234yf before transfer that would result in the target lower-limit composition at the completion of transfer was determined. Table 73 shows the lower limit ($y_{6-6}$) of the gap between the initial composition and the target upper-limit composition in this case.

Table 73

| HFO-1132(E) Target Upper-limit Composition (x) | HFO-1132(E) Composition before Transfer | HFO-1132(E) Composition after Extraction of Liquid | Lower Limit of Gap between Initial Composition and Target Upper-limit Composition of HFO-1132(E) |
|---|---|---|---|
| wt.% | wt.% | wt.% | wt.% |
| 91.0 | 89.7 | 89.0 | -1.3 |
| 81.0 | 80.3 | 79.1 | -0.7 |
| 71.0 | 70.7 | 69.0 | -0.3 |
| 21.0 | 20.7 | 19.1 | -0.3 |
| 11.0 | 10.0 | 9.1 | -1.0 |

The results show that HFO-1132(E) undergoes the least composition change when the target composition is 90 wt.%, and that even when the initial composition of HFO-1132(E) in the liquid-phase refrigerant mixture containing HFO-1132(E) and HFO-1234yf is -1.3 wt.% from the target composition, the proportion of HFO-1132(E) in the liquid phase falls within the range from the target upper-limit composition - 2.0 wt.% (target lower-limit composition) to the target upper-limit composition from before the transfer to the completion of the transfer.

From these results, the lower limit ($Y_{6-6}$) of the gap between the initial composition and the target upper-limit composition can be represented by the following equation using the target composition (x).

$$1000y_{6-6} = 0.0064x^3 - 1.9435x^2 + 133.5x - 2253.1 \quad (6\text{-}6)$$

By setting the lower limit ($y_{6-6}$) based on Table 73, the composition can be kept within the range from the target lower-limit composition to the target upper-limit composition throughout the process from the start of transfer to the completion of transfer, regardless of the target upper-limit composition.

By setting the initial composition of HFO-1132(E) in the liquid-phase refrigerant mixture containing HFO-1132(E) and HFO-1234yf within a range from $y_{6-6}$ to the target upper-limit composition, the composition can be kept within the range from the target upper-limit composition - 2.0 wt.% (the target lower-limit composition) to the target upper-limit composition throughout the process from before the transfer until the completion of the transfer.

(5) Discussion

The method of the present disclosure enables the transfer of a non-azeotropic refrigerant mixture, keeping its composition falling within a predetermined range relative to a target composition throughout the process from before transfer until the completion of transfer, as compared to transfer without any measures to address composition changes that occur during transfer. Thus, the method enables the use of the entire amount of the liquid phase.

The method of the present disclosure enables composition changes that occur during transfer of a non-azeotropic refrigerant mixture containing HFO-1132(E) and HFO-1234yf, used as a working medium in a vapor compression refrigeration cycle, to fall within a range that does not adversely affect the refrigerant capacity.

**Claims**

1. A refrigerant mixture filling method,

   the refrigerant mixture comprising trans-1,2-difluoroethylene (HFO-1132(E)) and 2,3,3,3-tetrafluoropropene (HFO-1234yf),
   wherein the HFO-1132(E) is present in a liquid phase of the refrigerant mixture in an amount of 10 to 92 wt.% based on the total of the HFO-1132(E) and the HFO-1234yf taken as 100 wt.%,
   the method comprising,
   when transferring the refrigerant mixture in a liquid state from a source container to a target container and/or equipment,
   adjusting the proportion of the HFO-1132(E) in the liquid phase of the refrigerant mixture in the source container before the transfer (initial composition) to $(x + y_1)$ wt.% (minimum value) or higher and $(x)$ wt.% (target upper-limit composition) or lower
   in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 4.0 wt.% (target lower-limit composition) during the transfer,

   wherein

   x represents the target upper-limit composition of the HFO-1132(E) (wt.%, $12 \leq x \leq 92$, excluding the range where $y_1 > 0$) ;
   $y_1$ represents a lower limit of a gap between the initial composition of the HFO-1132(E) and the target upper-limit composition of the HFO-1132(E), $y_1$ being a value (wt.%) represented by the following Equation (1):

   $$1000y_1 = L_1x^3 + M_1x^2 + N_1x + P_1 \qquad (1)$$

   wherein

   $L_1 = 0.00000021a^2 + 0.00005357a + 0.00301429$
   $M_1 = 0.00001630a^2 - 0.02301211a - 0.78617143$
   $N_1 = -0.00266429a^2 + 1.70890000a + 55.79285714$
   $P_1 = -0.02635714a^2 - 2.82442857a - 4328.57142857$

   wherein
   a represents an initial filling amount (wt.%) in the source container.

2. A refrigerant mixture filling method,

   the refrigerant mixture comprising trans-1,2-difluoroethylene (HFO-1132(E)) and 2,3,3,3-tetrafluoropropene (HFO-1234yf),
   wherein the HFO-1132(E) is present in a liquid phase of the refrigerant mixture in an amount of 10 to 91.5 wt.% based on the total of the HFO-1132(E) and the HFO-1234yf taken as 100 wt.%,
   the method comprising,
   when transferring the refrigerant mixture in a liquid state from a source container to a target container and/or equipment,
   adjusting the proportion of the HFO-1132(E) in the liquid phase of the refrigerant mixture in the source container before the transfer (initial composition) to (x + $y_2$) wt.% (minimum value) or higher and (x) wt.% (target upper-limit composition) or lower
in order to keep the proportion of the HFO-1132(E) in the liquid phase of the refrigerant mixture in the source container within a range from the target upper-limit composition (x) wt.% of the HFO-1132(E) to the target upper-limit composition (x) wt.% - 3.0 wt.% (target lower-limit composition) during the transfer,

wherein

x represents the target upper-limit composition of the HFO-1132(E) (wt.%, $11.5 \leq x \leq 34.4$ or $54.1 \leq x \leq 91.5$, excluding the range where $y_2 > 0$) ;
$y_2$ represents a lower limit of a gap between the initial composition of the HFO-1132(E) and the target upper-limit composition of the HFO-1132(E), $y_2$ being a value (wt.%) represented by the following Equation (2):

$$1000y_2 = L_2x^3 + M_2x^2 + N_2x + P_2 \quad (2)$$

wherein

$L_2 = 0.00000018a^2 + 0.00004664a + 0.00442857$
$M_2 = 0.00003791a^2 - 0.02400804a - 0.90728571$
$N_2 = -0.00544464a^2 + 1.98335357a + 50.41428571$
$P_2 = 0.04232143a^2 - 10.78821429a - 3008.18571429$

wherein
a represents an initial filling amount (wt.%) in the source container.

3. A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 91 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to (x + $y_3$) wt.% (minimum value) or higher and (x) wt.% (target upper-limit composition) or lower
in order to keep the proportion of the HFO-1132(E) in the liquid phase of the refrigerant mixture in the source container within a range from the target upper-limit composition (x) wt.% of the HFO-1132(E) to the target upper-limit composition (x) wt.% - 2.0 wt.% (target lower-limit composition) during the transfer,

wherein

x represents the target upper-limit composition of the HFO-1132(E) (wt.%, $11 \leq x \leq 17.6$ or $74.2 \leq x \leq 91$, excluding the range where $y_3 > 0$);
$y_3$ represents a lower limit of a gap between the initial composition of the HFO-1132(E) and the target upper-limit composition of the HFO-1132(E), $y_3$ being a value (wt.%) represented by the following Equation (3):

$$1000y_3 = L_3x^3 + M_3x^2 + N_3x + P_3 \quad (3)$$

wherein

$L_3 = -0.00000746a^2 + 0.00109679a - 0.03042857$
$M_3 = 0.00107004a^2 - 0.16541279a + 3.77611429$
$N_3 = -0.04430179a^2 + 7.22883929a - 123.14571429$
$P_3 = 0.40416071a^2 - 56.68153571a - 507.98571429$

wherein

a represents an initial filling amount (wt.%) in the source container.

4. A refrigerant mixture filling method,

the refrigerant mixture comprising trans-1,2-difluoroethylene (HFO-1132(E)) and 2,3,3,3-tetrafluoropropene (HFO-1234yf),

wherein the HFO-1132(E) is present in a liquid phase of the refrigerant mixture in an amount of 10 to 92 wt.% based on the total of the HFO-1132(E) and the HFO-1234yf taken as 100 wt.%,

the method comprising,

when transferring the refrigerant mixture in a liquid state from a source container to a target container and/or equipment,

adjusting the proportion of the HFO-1132(E) in the liquid phase of the refrigerant mixture in the source container before the transfer (initial composition) to $(x + y_4)$ wt.% (minimum value) or higher and $(x)$ wt.% (target upper-limit composition) or lower

in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 4.0 wt.% (target lower-limit composition) during the transfer,

wherein

x represents the target upper-limit composition of the HFO-1132(E) (wt.%, $12 \leq x \leq 92$, excluding the range where $y_4 > 0$);

$y_4$ represents a lower limit of a gap between the initial composition of the HFO-1132(E) and the target upper-limit composition of the HFO-1132(E), $y_4$ being a value (wt.%) represented by the following Equation (4):

$$1000y_4 = L_4x^3 + M_4x^2 + N_4x + P_4 \quad (4)$$

wherein

$L_4 = 0.00000191a^2 - 0.00019975a + 0.01294286$
$M_4 = -0.00022132a^2 + 0.01221707a - 2.25342857$
$N_4 = 0.00507143a^2 + 0.56545714a + 111.01142857$
$P_4 = -0.06323214a^2 + 3.21625000a - 4672.82857143$

wherein

a represents an initial filling amount (wt.%) in the source container.

5. A refrigerant mixture filling method,

the refrigerant mixture comprising trans-1,2-difluoroethylene (HFO-1132(E)) and 2,3,3,3-tetrafluoropropene (HFO-1234yf),

wherein the HFO-1132(E) is present in a liquid phase of the refrigerant mixture in an amount of 10 to 91.5 wt.% based on the total of the HFO-1132(E) and the HFO-1234yf taken as 100 wt.%,

the method comprising,

when transferring the refrigerant mixture in a liquid state from a source container to a target container and/or equipment,

adjusting the proportion of the HFO-1132(E) in the liquid phase of the refrigerant mixture in the source container before the transfer (initial composition) to $(x + y_5)$ wt.% (minimum value) or higher and $(x)$ wt.% (target upper-limit composition) or lower

in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 3.0 wt.% (target lower-limit composition) during the transfer,

wherein

x represents the target upper-limit composition of the HFO-1132(E) (wt.%, $11.5 \leq x \leq 29.9$ or $60.2 \leq x \leq 91.5$, excluding the range where $y_5 > 0$);

$y_5$ represents a lower limit of a gap between the initial composition of the HFO-1132(E) and the target upper-limit composition of the HFO-1132(E), $y_5$ being a value (wt.%) represented by the following Equation (5):

$$1000y_5 = L_5x^3 + M_5x^2 + N_5x + P_5 \qquad (5)$$

wherein

$L_5 = 0.00000023a^2 + 0.00002804a + 0.00555714$
$M_5 = 0.00005254a^2 - 0.02547864a - 0.98317143$
$N_5 = -0.00620893a^2 + 2.10902500a + 54.78428571$
$P_5 = 0.03244643a^2 - 9.08525000a - 3109.01428571$

wherein
a represents an initial filling amount (wt.%) in the source container.

6.  A refrigerant mixture filling method,

the refrigerant mixture comprising trans-1,2-difluoroethylene (HFO-1132(E)) and 2,3,3,3-tetrafluoropropene (HFO-1234yf),
wherein the HFO-1132(E) is present in a liquid phase of the refrigerant mixture in an amount of 10 to 91 wt.% based on the total of the HFO-1132(E) and the HFO-1234yf taken as 100 wt.%,
the method comprising,
when transferring the refrigerant mixture in a liquid state from a source container to a target container and/or equipment,
adjusting the proportion of the HFO-1132(E) in the liquid phase of the refrigerant mixture in the source container before the transfer (initial composition) to $(x + y_6)$ wt.% (minimum value) or higher and $(x)$ wt.% (target upper-limit composition) or lower
in order to keep the proportion of the HFO-1132(E) in the liquid phase of the refrigerant mixture in the source container within a range from the target upper-limit composition $(x)$ wt.% of the HFO-1132(E) to the target upper-limit composition $(x)$ wt.% - 2.0 wt.% (target lower-limit composition) during the transfer,

wherein

x represents the target upper-limit composition of the HFO-1132(E) (wt.%, $11 \leq x \leq 16.1$ or $76.6 \leq x \leq 91$, excluding the range where $y_6 > 0$);
$y_6$ represents a lower limit of a gap between the initial composition of the HFO-1132(E) and the target upper-limit composition of the HFO-1132(E), $y_6$ being a value (wt.%) represented by the following Equation (6):

$$1000y_6 = L_6x^3 + M_6x^2 + N_6x + P_6 \qquad (6)$$

wherein

$L_6 = -0.00000229a^2 + 0.00040314a - 0.00802857$
$M_6 = 0.00040107a^2 - 0.07670157a + 0.88952857$
$N_6 = -0.02104464a^2 + 4.23275357a - 25.47571429$
$P_6 = 0.21416071a^2 - 33.68810714a - 1107.64285714$

wherein
a represents an initial filling amount (wt.%) in the source container.

## INTERNATIONAL SEARCH REPORT

| | International application No. |
|---|---|
| | **PCT/JP2024/012479** |

**A. CLASSIFICATION OF SUBJECT MATTER**

***F25B 45/00***(2006.01)i; ***C09K 5/04***(2006.01)i; ***F25B 1/00***(2006.01)i
FI:　F25B45/00 B; C09K5/04 F; F25B1/00 396Z

According to International Patent Classification (IPC) or to both national classification and IPC

**B. FIELDS SEARCHED**

Minimum documentation searched (classification system followed by classification symbols)

　　F25B45/00; C09K5/04; F25B1/00

Documentation searched other than minimum documentation to the extent that such documents are included in the fields searched

　　Published examined utility model applications of Japan 1922-1996
　　Published unexamined utility model applications of Japan 1971-2024
　　Registered utility model specifications of Japan 1996-2024
　　Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/126447 A1 (ASAHI GLASS CO., LTD.) 27 July 2017 (2017-07-27)<br>entire text, all drawings | 1-6 |
| A | WO 2014/038604 A1 (DAIKIN INDUSTRIES, LTD.) 13 March 2014 (2014-03-13)<br>entire text, all drawings | 1-6 |
| A | JP 2015-168696 A (DAIKIN INDUSTRIES, LTD.) 28 September 2015 (2015-09-28)<br>entire text, all drawings | 1-6 |
| A | WO 96/33377 A1 (DAIKIN INDUSTRIES, LTD.) 24 October 1996 (1996-10-24)<br>entire text, all drawings | 1-6 |
| A | JP 10-160296 A (DAIKIN INDUSTRIES, LTD.) 19 June 1998 (1998-06-19)<br>entire text, all drawings | 1-6 |
| A | JP 8-157810 A (ASAHI GLASS CO., LTD.) 18 June 1996 (1996-06-18)<br>entire text, all drawings | 1-6 |

☑ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/012479**

| C. | DOCUMENTS CONSIDERED TO BE RELEVANT | |
|---|---|---|
| Category* | Citation of document, with indication, where appropriate, of the relevant passages | Relevant to claim No. |
| A | JP 2022-122449 A (AGC INC.) 23 August 2022 (2022-08-23)<br>entire text, all drawings | 1-6 |

Form PCT/ISA/210 (second sheet) (July 2022)

# EP 4 692 686 A1

## INTERNATIONAL SEARCH REPORT
### Information on patent family members

International application No.

**PCT/JP2024/012479**

| Patent document cited in search report | | | Publication date (day/month/year) | Patent family member(s) | | | Publication date (day/month/year) |
|---|---|---|---|---|---|---|---|
| WO | 2017/126447 | A1 | 27 July 2017 | US | 2018/0320043 | A1 | |
| | | | | entire text, all drawings | | | |
| WO | 2014/038604 | A1 | 13 March 2014 | US | 2015/0211773 | A1 | |
| | | | | entire text, all drawings | | | |
| | | | | EP | 2894209 | A1 | |
| | | | | EP | 3995555 | A1 | |
| | | | | CN | 104603228 | A | |
| JP | 2015-168696 | A | 28 September 2015 | US | 2017/0081575 | A1 | |
| | | | | entire text, all drawings | | | |
| | | | | WO | 2015/133548 | A1 | |
| | | | | EP | 3128265 | A1 | |
| | | | | CN | 106104176 | A | |
| WO | 96/33377 | A1 | 24 October 1996 | US | 6018952 | A | |
| | | | | entire text, all drawings | | | |
| | | | | EP | 0767348 | A1 | |
| | | | | CN | 1157036 | A | |
| | | | | KR | 10-0381808 | B1 | |
| | | | | JP | 3186065 | B2 | |
| JP | 10-160296 | A | 19 June 1998 | US | 6058717 | A | |
| | | | | entire text, all drawings | | | |
| | | | | WO | 98/23703 | A1 | |
| | | | | EP | 0879866 | A1 | |
| | | | | CN | 1214719 | A | |
| | | | | KR | 10-0473961 | B1 | |
| JP | 8-157810 | A | 18 June 1996 | (Family: none) | | | |
| JP | 2022-122449 | A | 23 August 2022 | (Family: none) | | | |

Form PCT/ISA/210 (patent family annex) (July 2022)

**REFERENCES CITED IN THE DESCRIPTION**

**Patent documents cited in the description**

- JP 2010047754 A
- JP 2011522947 A
- JP 2011525204 A
- JP H10197108 A

- WO 199633377 A
- JP 2015168696 A
- WO 2014038604 A